# EUROPEAN PATENT SPECIFICATION

(11) **EP 0 870 226 B1**
(45) Date of publication and mention of the grant of the patent: **21.05.2003**
(21) Application number: 96934069.4
(22) Date of filing: 04.10.1996
(51) Int. Cl.: G06F 9/22, G06F 12/04, G06F 3/00, G06F 13/362, G06F 9/38

(54) **RISC MICROPROCESSOR ARCHITECTURE**
ARCHITEKTUR FÜR EINEN RISC-MIKROPROZESSOR
ARCHITECTURE DE MICROPROCESSEUR RISC

(30) Priority: 06.10.1995 US 5408 P
(43) Date of publication of application: 14.10.1998
(73) Proprietor: Patriot Scientific Corporation, Poway, CA 92064 (US)
(72) Inventor: SHAW, George, W., Hayward, CA 94541 (US); McCLURG, Martin, G., Los Gatos, CA 95030 (US); JENSEN, Bradley, D., San Jose, CA 95123 (US); FISH, Russel, H., III, Austin, TX 78703 (US); MOORE, Charles, H., Woodside, CA 94062 (US)
(74) Representative: Cross, Rupert Edward Blount
(86) International application number: US9616013
(87) International publication number: WO97015001

(56) References cited:
- EP-A- 0 545 581
- US-A- 4 803 621
- US-A- 4 811 208
- US-A- 5 091 846
- US-A- 5 261 057
- US-A- 5 410 654
- US-A- 5 410 682
- US-A- 5 426 744
- US-A- 5 440 749

## Description

### CROSS-REFERENCE TO RELATED APPLICATIONS

This invention is directed to improvements in the inventions disclosed and/or claimed in U.S. Application Serial No. 07/389,334, filed August 3, 1989, now U.S. Patent 5,440,749, and the following divisional applications of that application: U.S. Application Serial Nos. 08/480,462; 08/480,911; 08/480,015; 08/485,031; 08/484,918; 08/484,230; 08/484,920; 08/480,206; 08/484,935; 08/482,185; 08/480.901 and 08/486,454, all filed June 7, 1995, and is based on U.S. Provisional Application Serial No. 60/005,408, filed October 6, 1995.

### INTRODUCTION

### Technical Field

This invention relates to an improved form of a simplified, reduced instruction set computer (RISC) microprocessor. More particularly, it relates to such a microprocessor implemented with a stack architecture.

### Background

Since the invention of the microprocessor described in the above related applications, improvements have been made in that microprocessor to enhance its performance and manufacturability. The following description discloses those improvements in the context of a presently preferred embodiment of that microprocessor.

US5410654 discloses a multi processor system having a plurality of individual processors, global memory cards and input-output processors. The system includes an arbiter which operates to arbitrate requests for the global bus between the processors, the memory and the I/O processors. EP0545581 discloses an integrated data processing system that includes a CPU core and a digital signal processor module. The CPU core and DSP module have arbitrated access to an external memory element.

### SUMMARY OF THE INVENTION

The invention provides a microprocessor system as set out in claim 1.

A preferred embodiment of the invention provides a microprocessor system which includes a microprocessing unit and an input-output processor (IOP). A global memory unit is coupled to the central processing unit and to the IOP. A means arbitrates access of the central processing unit and the IOP to the global memory unit. In one form, the global memory unit comprises a plurality of global registers.

Embodiments also provide a microprocessor system which has a microprocessing unit and an input-output processor (IOP). A memory interface unit selectively couples the central processing unit and the IOP to a system bus. A means grants the IOP access to the system bus at predetermined intervals.

Embodiments also provide a microprocessor system which has a microprocessing unit in which is included an arithmetic logic unit coupled to a stack cache. A means, coupled to the arithmetic logic unit and to the stack cache, determines the availability of stack cache resources by determining whether a value is included in at least one cell of the stack cache and whether at least one other cell of the stack cache is empty. A means, coupled to the means for determining the availability of the stack cache resources, selectively inhibits instruction execution by the arithmetic logic unit based on the availability of the stack cache resources.

Embodiments also provide a microprocessor system which has a microprocessing unit in which is included an arithmetic logic unit coupled to a stack cache. The stack cache is allocated at least a first portion of system memory. A means, coupled to the microprocessing unit and to the stack cache, executes a stack management trap when a stack pointer of the stack cache assumes an address within a boundary region of the first portion of the system memory. The stack management trap determines availability of at least one other portion of the system memory. A means, coupled to the means for executing the stack management trap, prevents another execution of the stack management trap until after the stack pointer has assumed an address within a predefined region of the first portion of the system not included within the boundary region.

Embodiments also provide a microprocessor system which has a microprocessing unit and a memory interface unit coupling the microprocessing unit to system random access memory (RAM). The microprocessor system includes means, coupled to the memory interface unit, for converting logical row addresses provided by the microprocessing unit to physical row addresses of the system RAM so as to define virtual system memory using the system RAM.

Embodiments also provide a microprocessor system which includes a register unit. The register unit has at least one storage location containing a value to be interpreted as a memory address. A memory interface unit is coupled to the register unit. A memory bus is coupled to the memory interface unit. A system memory is coupled to the memory interface unit by the memory bus. The memory interface unit comprises transfer logic to increment the memory address and to generate a boundary detected signal when, after a memory bus transaction to the system memory using the memory address, the memory address after incrementing has a value that is an even multiple of 2ⁿ, where n is a nonnegative integer.

Embodiments also provide a microprocessor system which includes a central processing unit and a bit input register coupled to the central processing unit. The bit input register receives logical input over at least one bit line. The bit input register has a latch coupled to the at least one bit line, which initially samples the at least one bit line in order to determine a logic level thereof. A zero persistence control unit is coupled to the latch for storing the logic level in a register assigned to the at least one bit line. The logic level remains stored in the register until the zero persistence control unit is provided with a predefined signal by the central processing unit.

Embodiments also provide a microprocessor system comprising a microprocessing unit, an input-output processor (IOP), and a memory interface unit selectively coupling said central processing unit and said IOP to a system bus, said IOP including program counter means for providing system address information to said memory interface unit.

Embodiments also provide a microprocessor system which includes a microprocessing unit having a stack cache. A system for effecting floating-point mathematical instructions includes an arithmetic logic unit means for performing floating-point operations upon values within cells of the stack cache. A means, coupled to the arithmetic logic unit means, generates floating point exceptions in response to performance of selected ones of the floating point operations. A mode register means, coupled to the arithmetic logic unit means and to the means for generating floating point exceptions, enables the microprocessing unit to execute predefined floating point routines in response to the floating point exceptions.

Embodiments also provide a microprocessor: system which includes a microprocessing unit having a stack cache. A method for executing a breakpoint instruction comprises the steps of:
pushing into the stack cache a memory address of the breakpoint instruction; and
executing a breakpoint service routine.

Embodiments also provide a microprocessor system which includes system memory and a microprocessing unit having one or more internal registers. The system memory is assigned a first address space for communication with the microprocessing unit. A method for transferring data within the microprocessing unit comprises the steps of:
assigning the one or more internal registers a second address space different from the first address space; and
transferring data to and from portions of the one or more internal registers identified by addresses within the second address space.

Enbodiments-also provide a microprocessor system including a microprocessing unit having a stack cache. A method for address arithmetic comprises the steps of:
storing a first address value in a first cell of the stack cache;
storing a second address value in a second cell of the stack cache; and
adding the first address value to the second address value and storing a resultant sum value in the first cell of the stack cache.

Embodiments also provide a microprocessor system which includes a microprocessing unit having a stack cache. A method for performing a copy byte operation comprises the steps of:
reading a least significant one of a plurality of data bytes stored in a cell;
replacing at least one other of the plurality of data bytes with the least significant data byte.

Embodiments, also provide a microprocessor system which inlcudes a microprocessing unit having a stack cache and a carry register. A method for performing a test byte operation comprises the steps of:
reading each of a plurality of bytes stored within a cell of the stack cache; and
storing a first logical value in the carry register when any of the bytes are of zero value, and storing a second logical value in the carry register otherwise.

Embodiments also provide a microprocessor system including a system memory and a microprocessing unit coupled to the system memory. A stack cache is coupled to the system memory and a program counter coupled to the stack cache. A single step processing system includes a means, coupled to the stack cache and to the program counter, for loading a first memory address from a first cell of the stack cache into the program counter. A means is coupled to the program counter for executing a first instruction stored in the system memory of the microprocessor system at a location corresponding to the first memory address. A means executes a single-step trap routine during which a second memory address is loaded into the first cell wherein a second instruction following the first instruction is stored at a location in the system memory corresponding to the second memory address.

Embodiments also provide a microprocessor system including system memory and a microprocessing unit coupled to the system memory having a stack cache. A stack cache management system includes a means, coupled to the stack cache, for determining a number of cells currently included within the stack cache. A means, coupled to said means for determining the number of cells, performs a comparison of the number of cells to a predefined depth of the stack cache. A means, coupled to said means for performing the comparison, provides an indication of a current stack depth based on said comparison.

Embodiments also provide a microprocessor system including system memory and a microprocessing unit coupled to the system memory having a stack cache. A stack cache management system includes a stack depth means, coupled to said stack cache, for determining a number of cells currently included within said stack cache. A means, coupled to the stack depth means, provides an indication of the stack depth.

Embodiments also provide a microprocessor system including system memory, and a microprocessing unit having a stack cache. A stack cache management system comprises means, coupled to the stack cache, for determining a current number cells in the stack cache. A means is coupled to the means for determining the current number of cells, for computing a number of cells capable of being added to the stack cache by comparing the current number of cells to a maximum stack depth. A means is coupled to the stack cache and to the means for computing the number of cells capable of being added to the stack cache, for adding to the current number of cells in the stack cache a number of the cells equivalent to the number of cells capable of being added to the stack cache.

Embodiments also provide a microprocessor including a microprocessing unit that has an arithmetic logic unit and a push-down stack coupled to the arithmetic logic unit. The arithmetic logic unit includes a bit-shifting means to shift bits. The bit shifting means shifts a count of bits in one or more partial shifts with the count reducing by the number of bits shifted each partial shift. The shifting is performed by multiple bits while the count is greater than the multiple. The multiple then is reduced, and then the shifting and the reductions of the count repeat until the count reaches zero.

### BRIEF DESCRIPTION OF THE DRAWINGS

Figure 1 is a block diagram of a microprocessor central processing unit (CPU) in accordance with the invention.
Figure 2 is a block diagram of a microprocessing unit (MPU) portion of the microprocessor CPU shown in Figure 1.
Figure 3 is a diagrammatic representation of registers in the MPU portion shown in Figure 2.
Figure 3a is a diagrammatic representation of an add operation using certain of the registers shown in Figure 3
Figure 4 is a diagrammatic representation of a memory map for the CPU shown in Figure 1.
Figure 5 is a diagrammatic representation of stack exception regions in the memory for the CPU shown in Figure 1.
Figure 6 is a diagrammatic representation of instruction formats for the MPU of Figure 2.
Figure 6a is a diagrammatic representation of floating point number formats used with the MPU of Figure 2
Figure 7 is a more detailed diagrammatic representation of a mode register shown in Figure 5.
Figure 8 is a block diagram of an input-output processor (IOP) shown in Figure 1.
Figure 9 is a diagrammatic representation of register usage in the IOP of Figure 8.
Figure 10 is a diagrammatic representation of instruction formats for the IOP of Figure 8.
Figure 11 is a block diagram of a direct memory access controller (DMAC) shown in Figure 1.
Figure 12 is a diagrammatic representation of an input-output (I/O)-channel transfer data format utilized in the microprocessor of Figure 1.
Figure 13 is a block diagram of an interrupt controller (INTC) shown in Figure 1.
Figure 14 is a block diagram of bit inputs for the bit input register ioin shown in Figure 8.
Figure 15 is a block diagram of bit outputs for the bit output register ioout shown in Figure 8.
Figure 16 is a diagrammatic representation of group-select and bank-select bits used in memory accesses with the microprocessor of Figure 1.
Figure 17 is a block diagram of a single memory bank system using the microprocessor of Figure 1.
Figure 18 is a block diagram of a multiple memory bank system using the microprocessor of Figure 1.

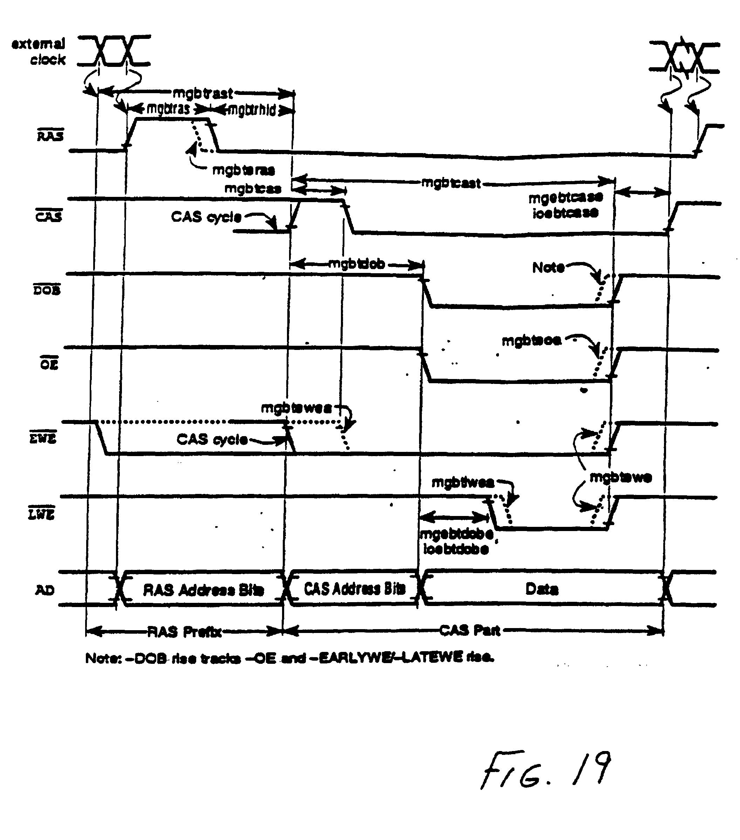

Figure 19 is a set of signal timing diagrams for memory accesses using the systems of Figures 17-18.
Figure 20 is a diagrammatic representation of on-chip resource registers shown in Figure 1.
Figures 21-46a are more detailed diagrammatic representations of the on-chip resource registers shown in Figure 20 and reserved register addresses.

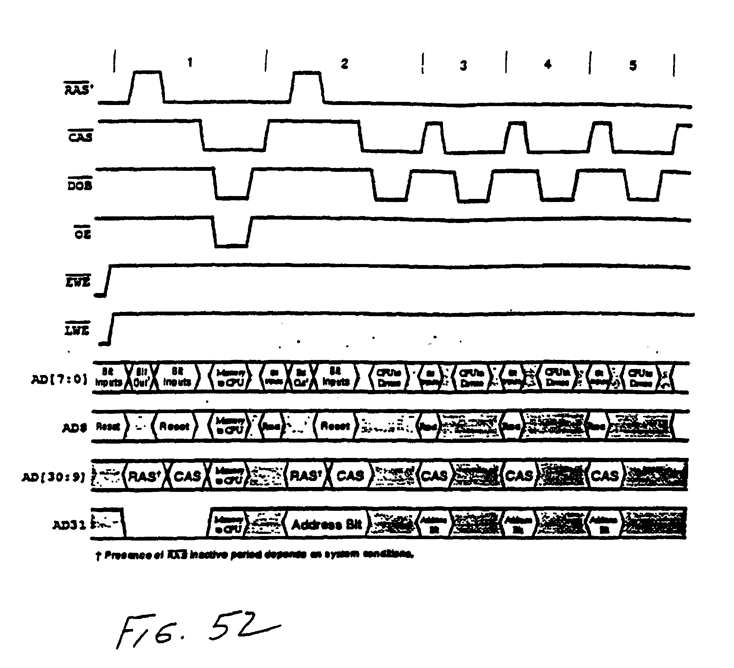

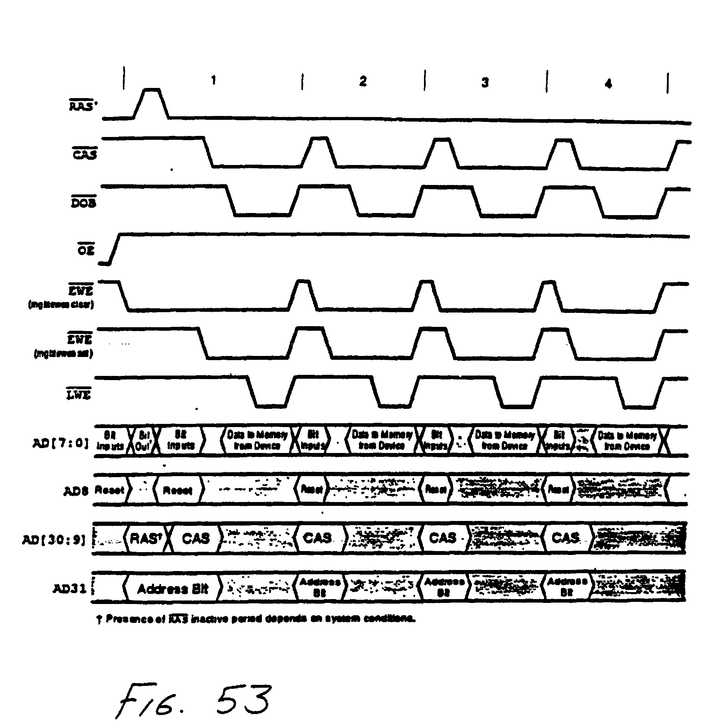

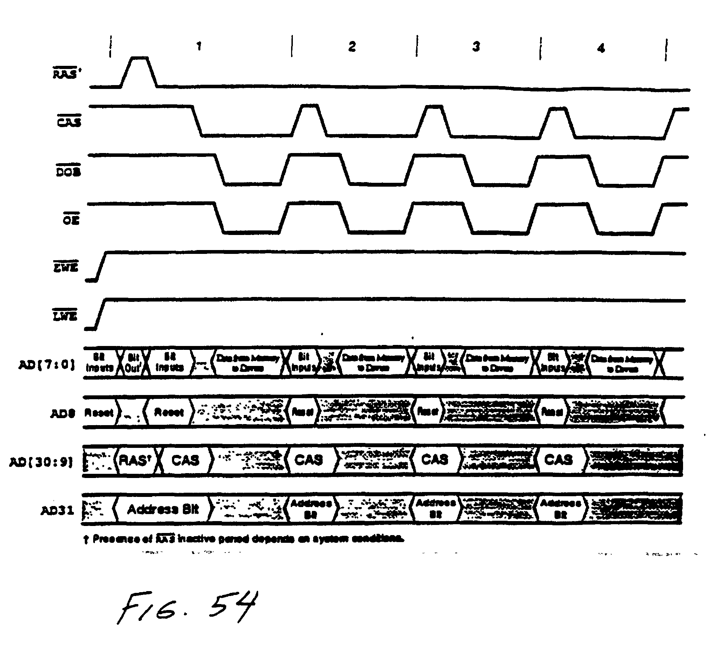

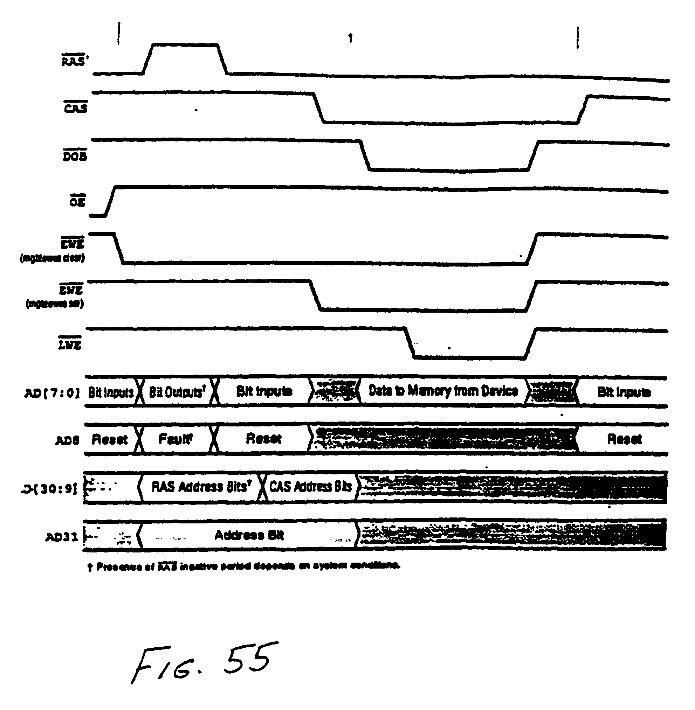

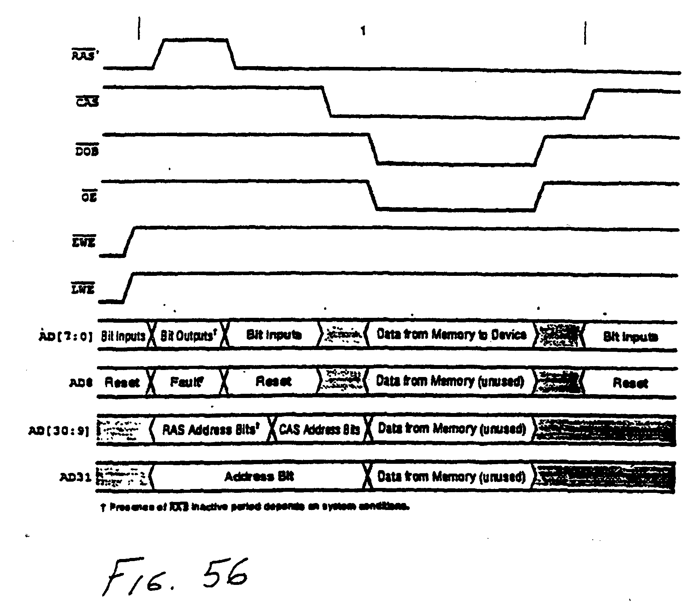

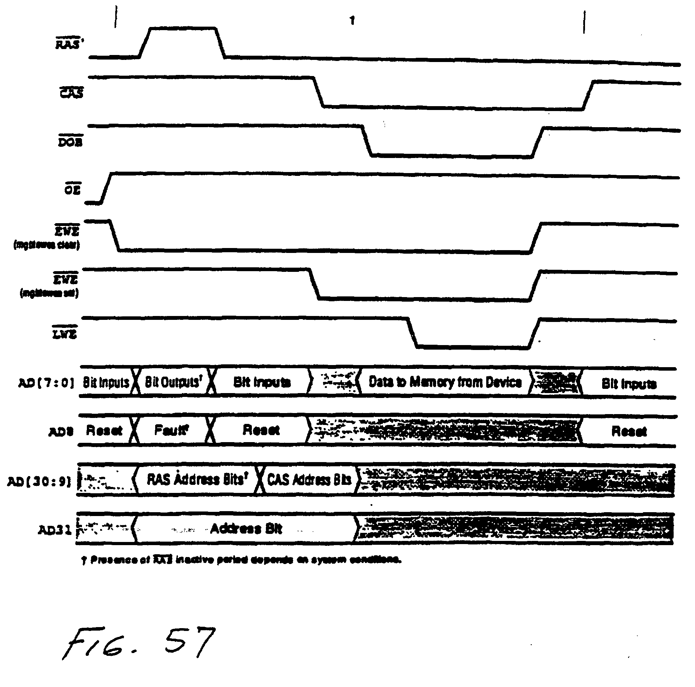

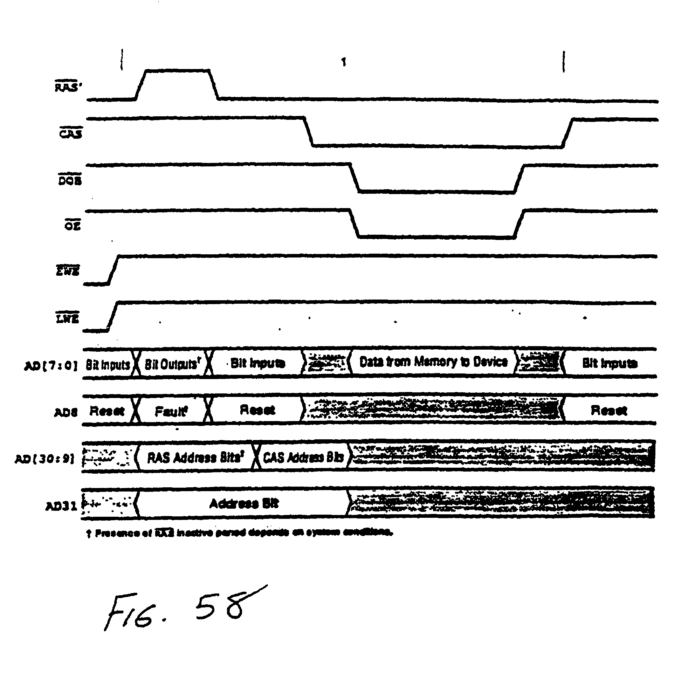

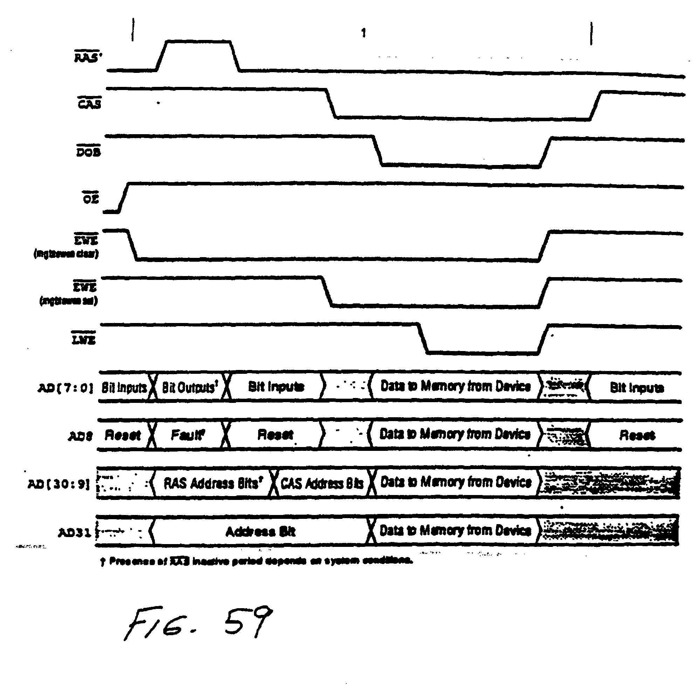

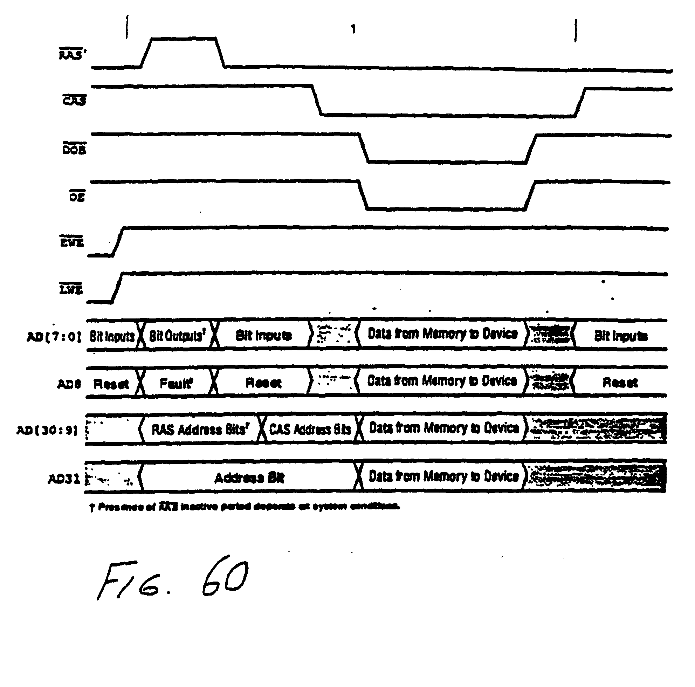

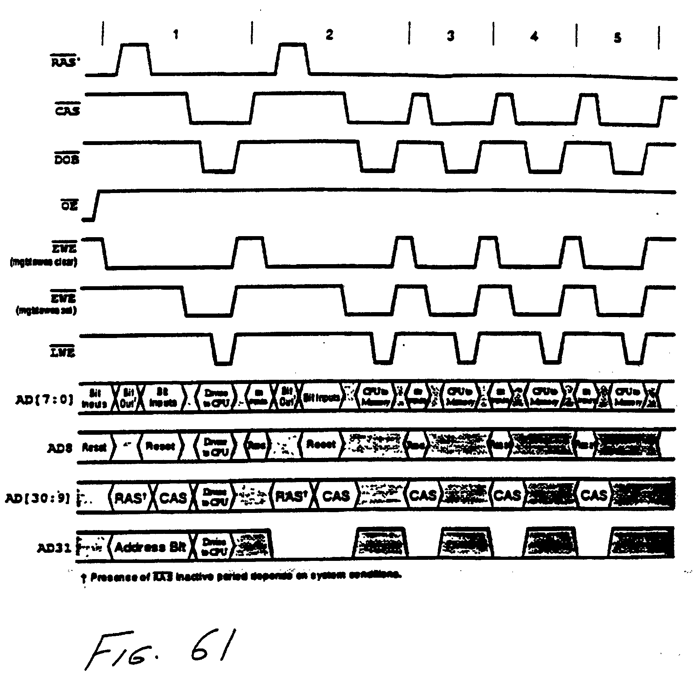

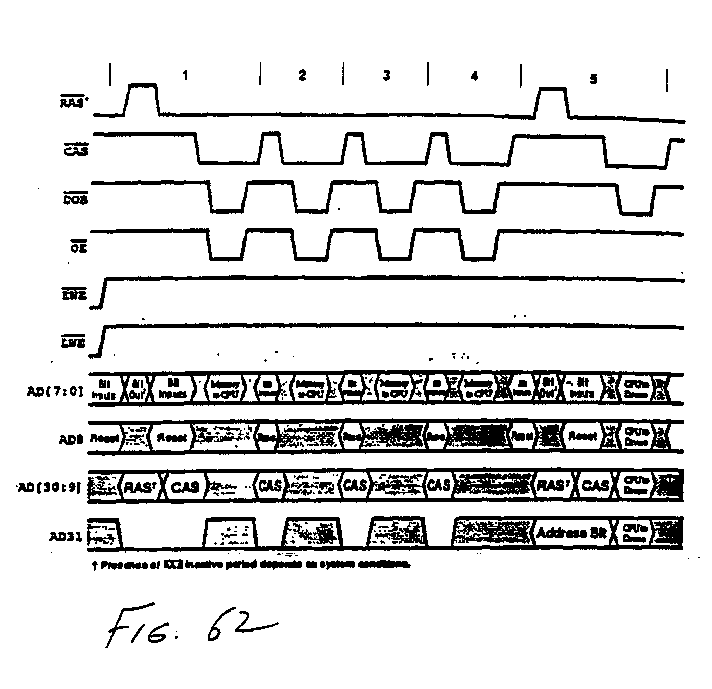

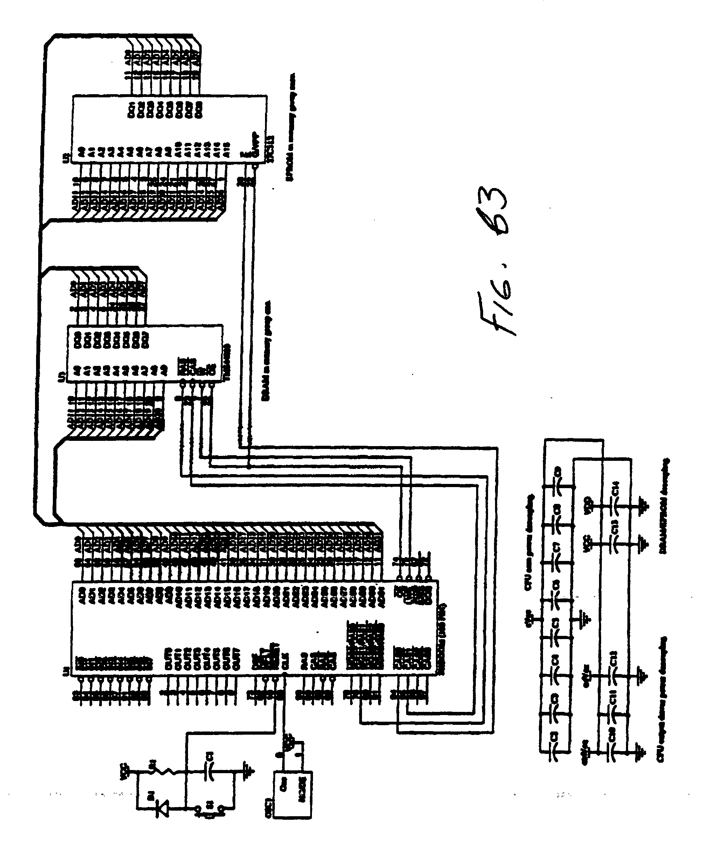

Figures 47-62 are sets of signal timing diagrams for memory accesses using the systems of Figures 17-18.

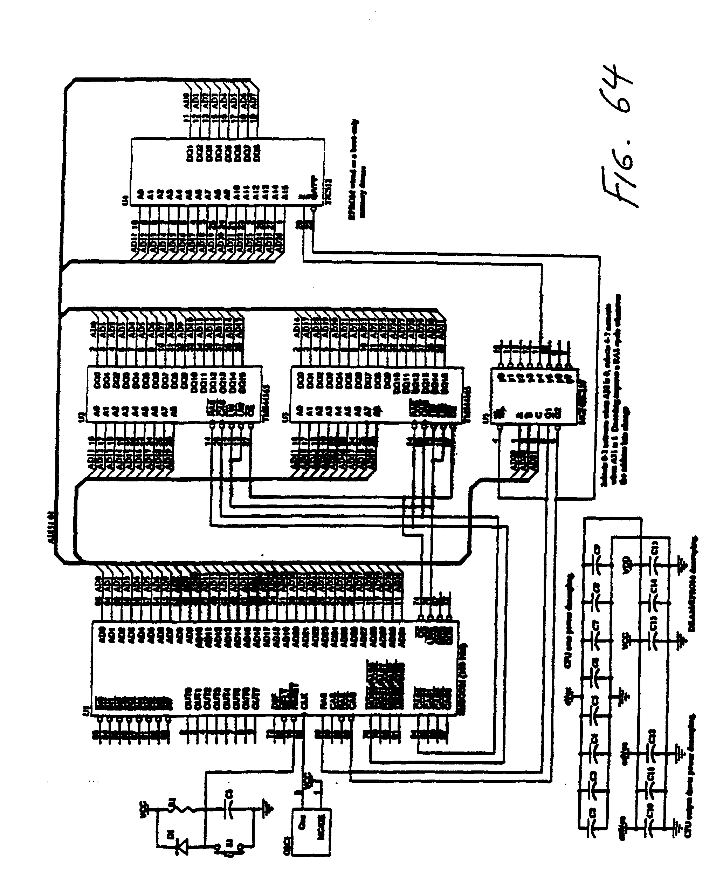

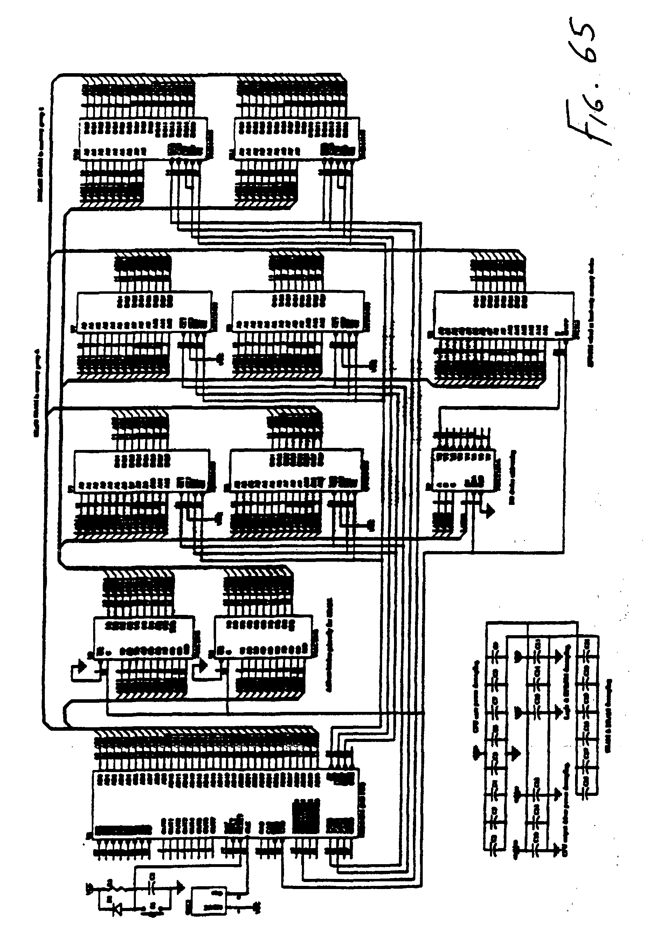

Figures 63-65 are block diagrams of systems incorporating the microprocessor of Figure 1.

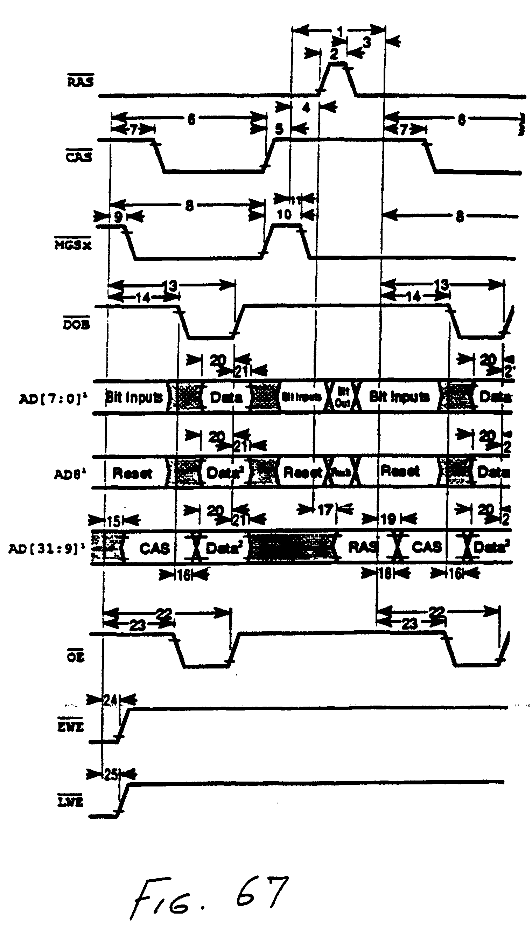

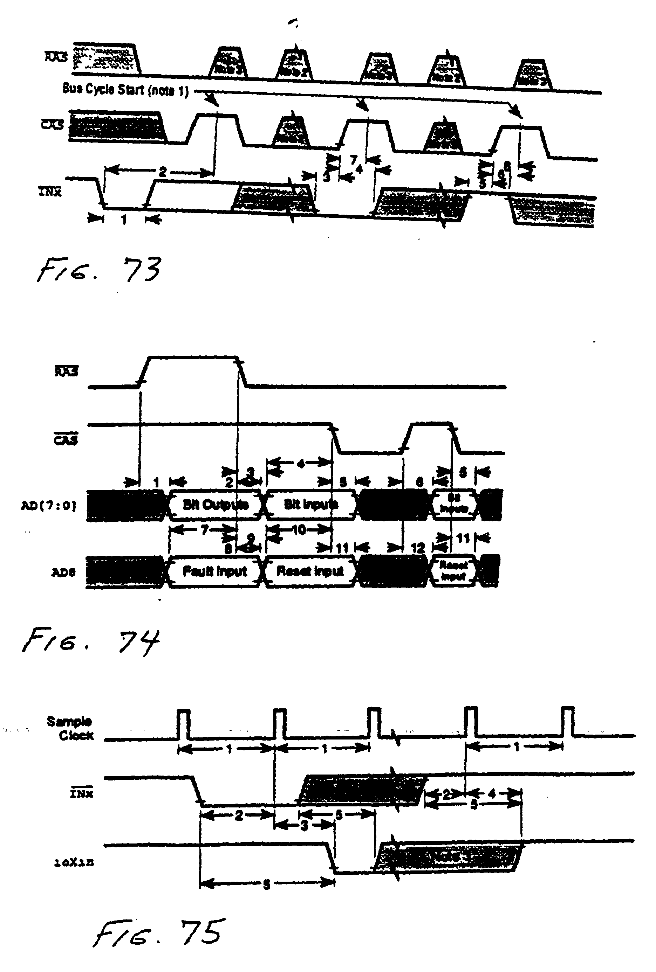

Figures 66-76 are sets of signal timing diagrams useful for understanding operation of the microprocessor of Figure 1.

### DESCRIPTION OF SPECIFIC EMBODIMENTS

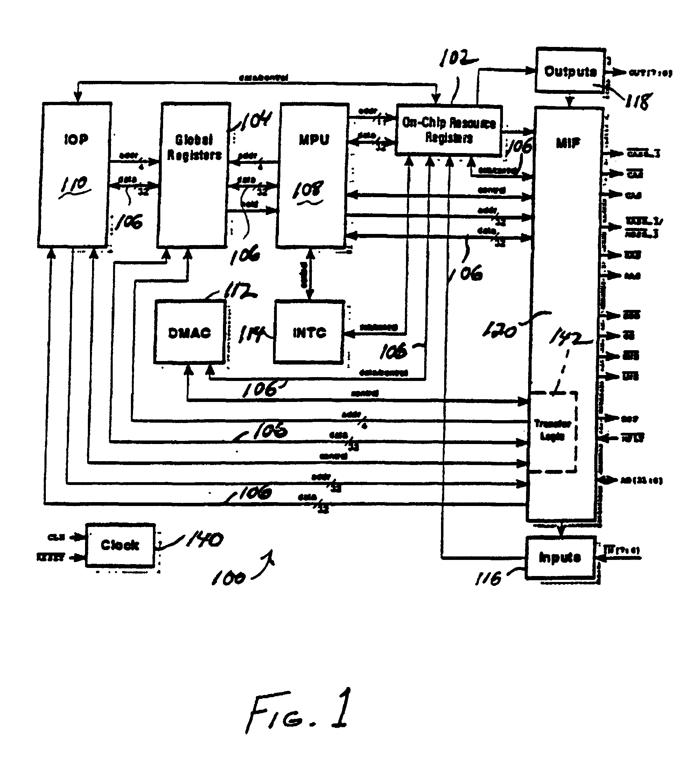

The ShBoom Microprocessor 100 (Figure 1) is a highly integrated 32-bit RISC processor that offers high performance at low system cost for a wide range of embedded applications. At 100 MHz internally, the processor executes with 100 native MIPS peak performance. The 32-bit registers 102 and 104 and data paths 106 fully support 32-bit addresses and data types. The processor 100 addresses up to four gigabytes of physical memory, and supports virtual memory with the use of external mapping logic.

Conventional high-performance microprocessors are register-based with large register sets, and are pipelined or superscaler. These complex architectures consume costly silicon with multiple-operand instructions, multiple execution units, or lengthy execution pipelines. All these features diminish the fastest possible execution of individual instructions and increase silicon size, thus increasing chip cost.

The ShBoom CPU 100 architectural philosophy is that of simplification and efficiency of use. A zero-operand design eliminates most operand bits and the decoding time and instruction space they require. Instructions are shrunk to 8-bits, significantly increasing instruction bandwidth and reducing program size. By not using pipeline or superscalar execution, the resulting control simplicity increases execution speed to issue and complete an instruction in a single clock cycle - as often as every clock cycle - without a conventional instruction cache. To ensure a low-cost chip, a data cache and its cost are also elminated in favor of efficient register caches.

The ShBoom CPU 100 operates up to four groups of programmable bus configurations from as fast as 20 ns to as slow as 810 ns, allowing any desired mix of high-speed and low-speed memory. Minimum system cost is reduced, thus allowing the system designer to trade system cost for performance as needed.

By incorporating many on-chip system functions and a "glueless" bus interface, support chips are elminated further lowering system cost. The CPU 100 includes an MPU 108, an I/O processor 110, a DMA controller 112, an interrupt controller 114, bit inputs 116, bit outputs 118, and a programmable memory interface 120. It can operate with 32-bit-wide or 8-bit-wide memory and devices, and includes hardware debugging support. A minimum system consists of ShBoom CPU, an 8-bit-wide EPROM, an oscillator, and optionally one x8 or two x16 memories - a total of 4 or 5 active components. The small die, which contains only 137,500 transistors, produces a high-performance, low-cost CPU, and a high level of integration produces a high-performance, low-cost system.

### FEATURES

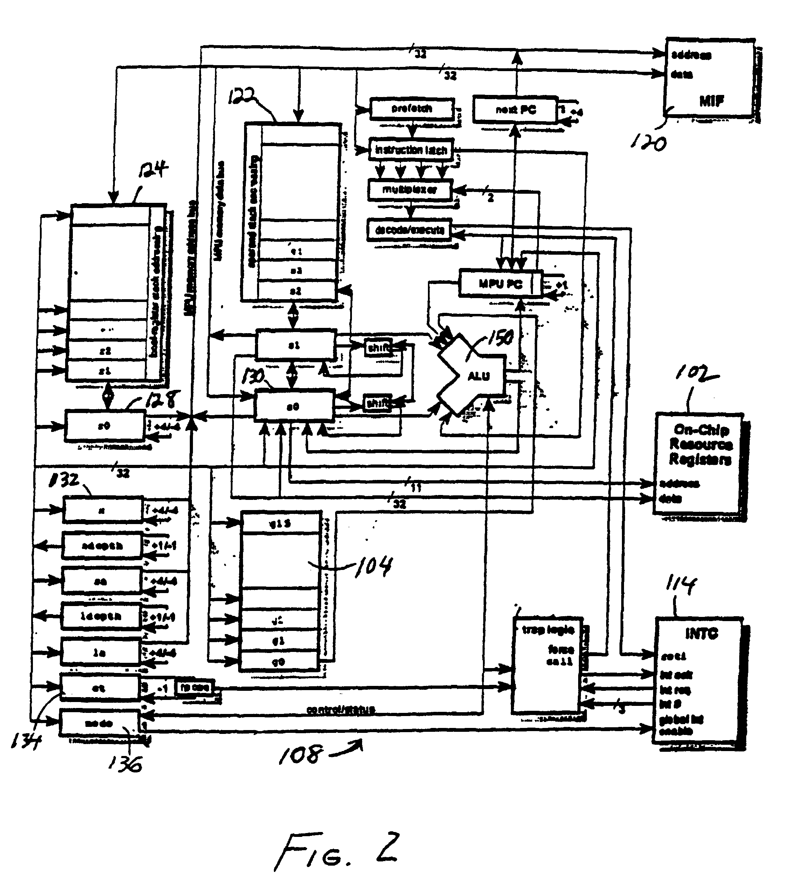

### Microprocessing Unit (MPU) 108 (Figure 2)

Zero-operand dual-stack 122 and 124 architecture
10-ns instructions cycle
52 General-Purpose 32-Bit Registers
16 global data registers (g0-g15) 104
16 local registers (r0-r15) double as return stack cache 124
r0 is an index register 128 with predecrement and postincrement
Automatic local-register stack 124 spill and refill
18 operand stack cache registers (s0-s17) 122
s0 is an address register 130
Automatic operand stack spill and refill
Index register (x) 132 with predecrement and postincrement
Count register (ct) 134
Stack paging traps
Cache-management instructions
MPU 108 communicates with DMA 112 and IOP 110 via global registers 104
Hardware single- and double-precision IEEE floating-point support
Fast multiply
Fast bit-shifter
Hardware single-step and breakpoint
Virtual-memory support
Posted write
Power-on-reset flag
Instruction-space-saving 8-bit opcodes

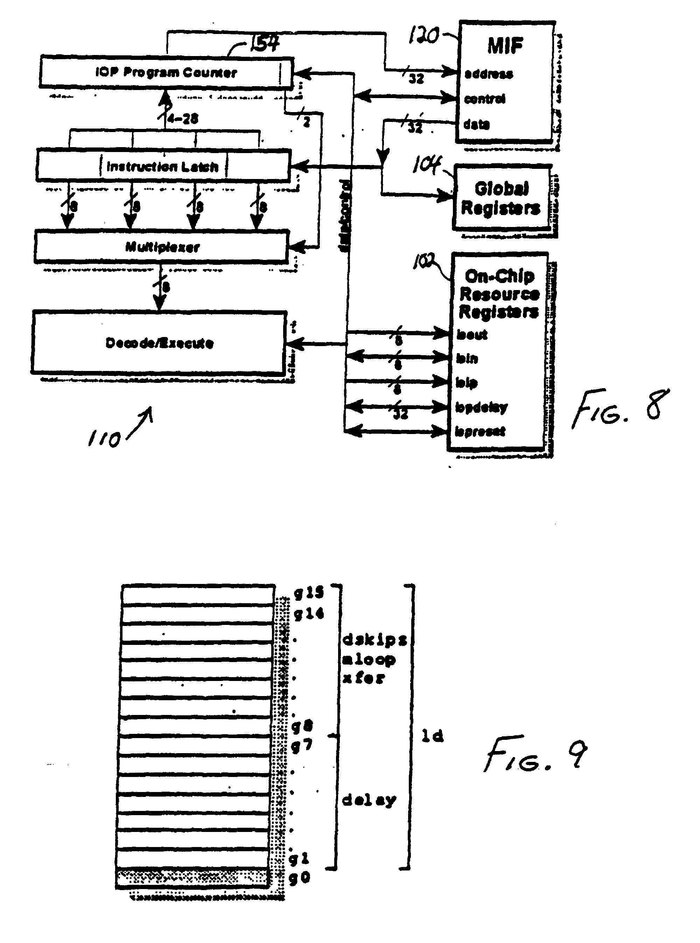

### Direct Memory Access Controller (DMAC) 112 (Figure 11)

Eight prioritized DMA channels
Fixed or revolving DMA priorities
Byte, four-byte or cell DMA devices
Single or back-to-back DMA requests
Transfer rates to 200 MB/second
Programmable timing per channel
Interrupt MPU on transfer boundary/count reached
Terminate DMA on transfer boundary/count reached
Channels can be configured as event counters
DMA 112 communicates with MPU 108 and IOP 110 via global registers 104

### Input-Output Processor (IOP) 110

Executes instruction stream independent of MPU 108
Deterministic execution
Used to perform timing, time-synchronous data transfers, bit output operations,
DRAM refresh
Eight transfer channels
Byte, four-byte or cell device transfers
Programmable timing per channel
Interrupt MPU on transfer boundary/count reached
Set/reset output bits
Set MPU interrupt
Test and branch on input bit
Looping instructions
Load transfer address, direction, interrupt on boundary
IOP 110 communicates with DMA 112 and MPU 108 via global registers 104 or memory
Channels can be configured as timers
Instruction-space-saving 8-bit opcodes

### Input-Output 116 and 118/Interrupts

Eight input 116 bits
Bits can be configured as zero-persistent
Register- and bit-addressable
Eight output 118 bits
Register- and bit-addressable
I/O bits available on pins or multiplexed on bus
Eight prioritized and vectored interrupts

### Programmable Memory Interface (MIF) 120

Programmable bus interface timing to 1/4 external clock
Four independently configurable memory groups:
Any combination of 32-bit and 8-bit devices
Any combination of EPROM, SRAM, DRAM, VRAM
Almost any DRAM size/configuration
Fast-page mode access for each DRAM group
Glueless support for one memory bank per group
1.25 gates per memory bank for decoding up to 16 memory banks (four per memory group)
Virtual-memory support
DRAM refresh support (via IOP)
VRAM support includes DSF, $\overline{\text{OE}}$, $\overline{\text{WE}}$, $\overline{\text{Cas}}$ before $\overline{\text{RAS}}$ control

Signals shown in Figure 1 are described below in Table 1.

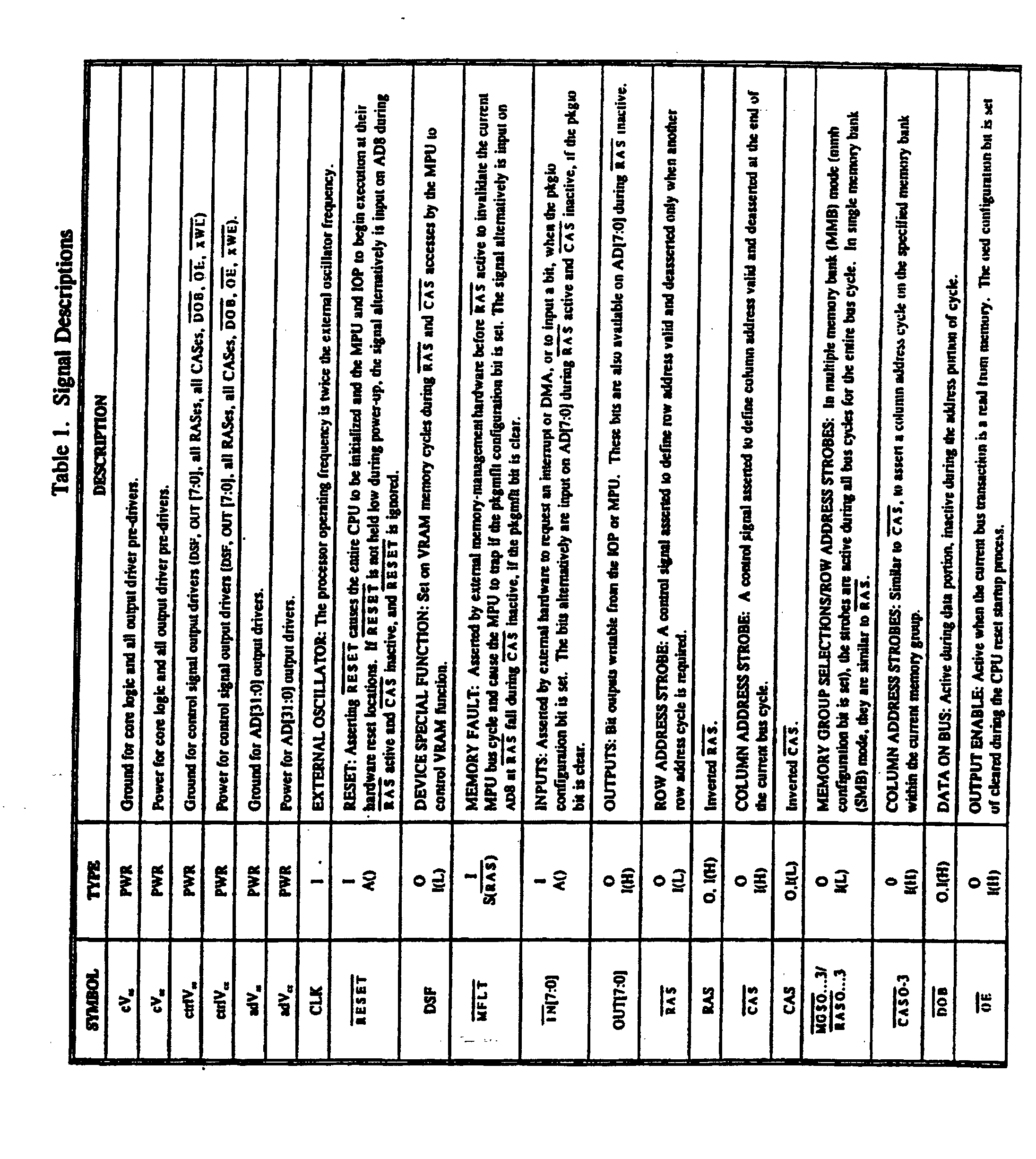

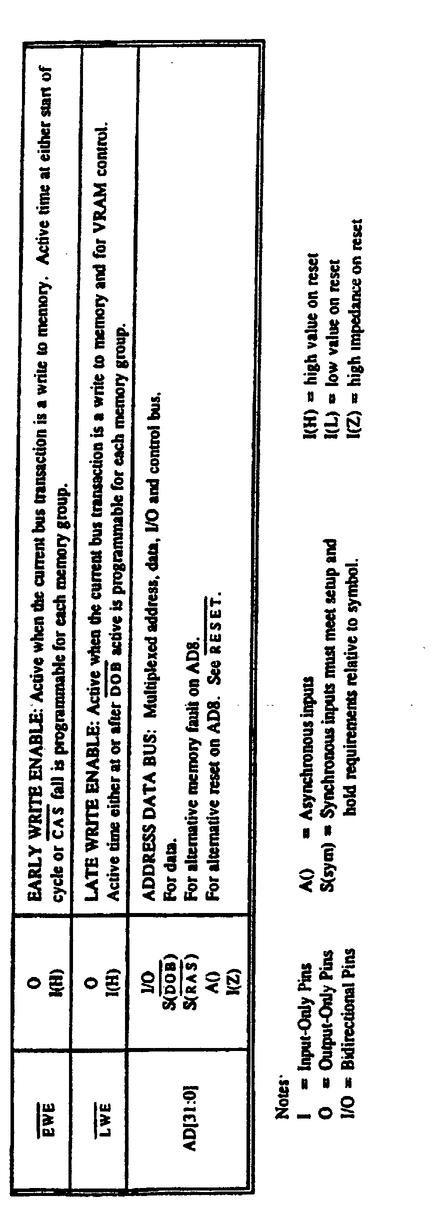

Signal pinouts from the single chip microprocessor 100 when packaged in a National Semiconductor type VJG/VJU 100 Pin Plastic Quad Flat Package are shown below in Table 2.

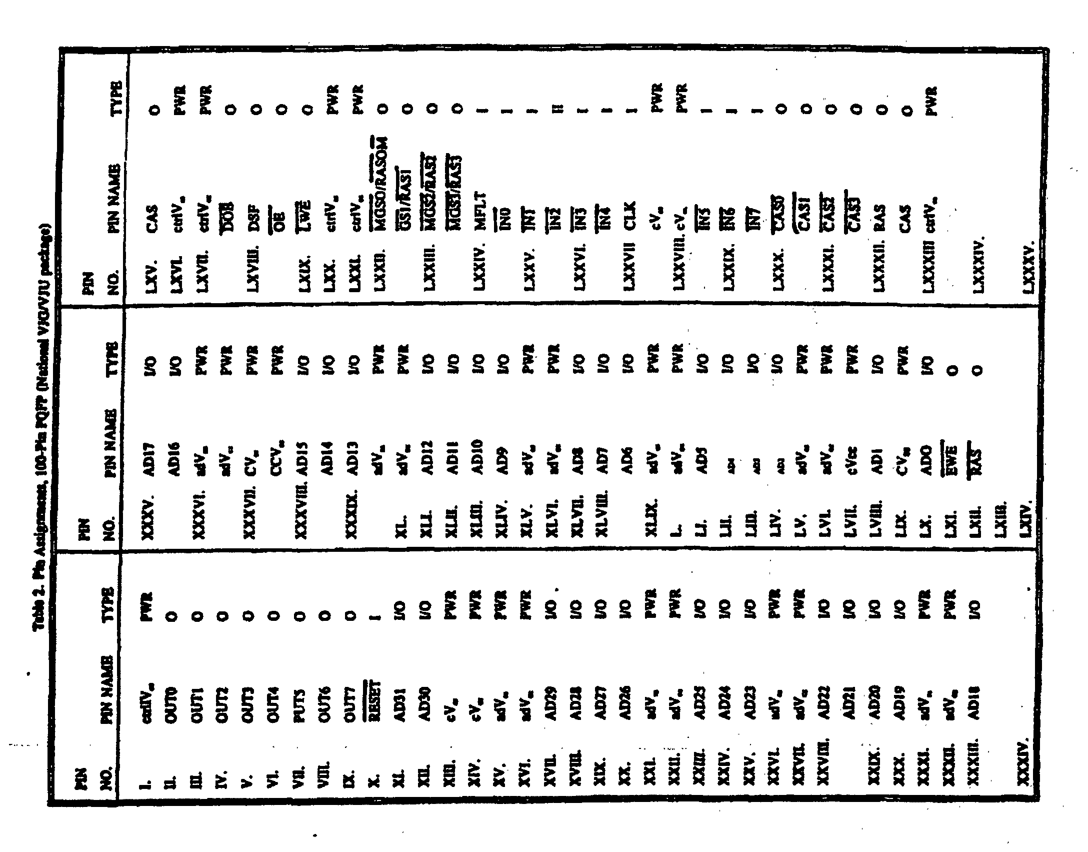

### Purpose

The following material describes the architecture, hardware interface, and programming of the ShBoom Microprocessor 100. The processor is targeted for embedded applications that require high MPU performance and low system cost. These include laser printers, graphics accelerators, ignition controllers, network routers, personal digital assistants, set-top cable controllers, video games, and many other applications. This material provides the information required to design products that will use the ShBoom CPU 100, including functional capability, electrical characteristics and ratings, and package definitions, as well as programming both the MPU 108 and IOP 110.

### Overview

The ShBoom Microprocessor 100 is a highly integrated 32-bit RISC processor that executes at 100 native MIPS peak performance with a 100-MHz internal clock frequency. The CPU 100 is designed specifically for use in embedded applications for which MPU performance and system cost are deciding selection factors.

The ShBoom CPU instruction sets are hardwired, allowing most instructions to execute in a single cycle, without the use of pipelines or superscalar architecture. A "flow-through" design allows the next instruction to start before the prior instruction completes, thus increasing performance.

The ShBoom MPU 108 (see Figure 2) contains 52 general-purpose registers, including 16 global data registers 104, an index register 132, a count register 134, a 16-deep addressable register/return stack 124, and an 18-deep operand stack 122. Both stacks contain an index register 128 or 130 in the top elements, are cached on chip, and, when required, automatically spill to and refill from external memory. The stacks minimize the data movement typical of register-based architectures, and also minimize memory access during procedure calls, parameter passing, and variable assignments. Additionally, the MPU contains a mode/status register 136 and 41 locally addressed registers 102 for I/O, control, configuration, and status.

### KEY FEATURES

Dual-Processor Architecture: The CPU 100 contains both a high-performance, zero-operand, dual-stack architecture microprocessing unit (MPU)108, and an input-output processor (IOP) 110 that executes instructions to transfer data, count events, measure time, and perform other timing-dependent functions.

Zero-Operand Architecture: Many RISC architectures waste valuable instruction space - often 15 bits or more per instruction - by specifying three possible operands for every instruction. Zero-operand (stack) architectures eliminate these operand bits, thus allowing much shorter instructions - typically one-fourth the size - and thus a higher instruction-execution bandwidth and smaller program size. Stacks also minimize register saves and loads within and across procedures, thus allowing shorter instruction sequences and faster-running code.

Fast, Simple Instructions: Instructions are simpler to decode and execute than those of conventional RISC processors, allowing the ShBoom MPU 108 and IOP 110 to issue and complete instructions in a single clock cycle - each at 100 native MIPS peak execution.

Four-Instruction Buffer: Using 8-bit opcodes, the CPU 100 obtains up to four instructions from memory each time an instruction fetch or pre-fetch is performed. These instructions can be repeated without rereading them from memory. This maintains high performance when connected directly to DRAM, without the expense of a cache.

Local and Global Registers: Local and global registers minimize the number of accesses to data memory. The local-register stack 124 automatically caches up to sixteen registers and the operand stack 122 up to eighteen registers. As stacks, the data space allocated efficiently nests and unnests across procedure calls. The sixteen global registers 104 provide storage for share data.

Posted Write: Decouples the processor from data writes to memory, allowing the processor to continue executing after a write is posted.

Programmable Memory/Bus Interface: Allows the use of lower-cost memory and system components in price-sensitive systems. The interface supports many types of EPROM/SRAM/DRAM/VRAM directly, including fast-page mode on up to four groups of DRAM devices. On-chip support of RAS cycle $\overline{\text{OE}}$ and $\overline{\text{WE}}$, CAS-before-RAS, and the DSF signal allow use of VRAM without additional external hardware. Programmable bus timing and driver power allow the designer a range of solutions to system design challenges to match the time, performance and budget requirements for each project.

Clock Multiplier: Internally doubles and quadruples the external clock. An on-chip PLL circuit eliminates typical stringent oscillator specifications, thus allowing the use of lower-cost oscillators.

Fully Static Design: A fully static design allows running the clock from DC up to rated speed. Lower clock speeds can be used to drastically cut power consumption.

Hardware Debugging Support: Both breakpoint and single-step capability aid in debugging programs.

Virtual Memory: Supported through the use of external mapping SRAMs and support logic.

Floating-Point Support: Special instructions implement efficient single- and double-precision IEEE floating-point arithmetic:

Interrupt Controller: Supports up to eight prioritized levels with interrupt responses as fast as eight 2X-clock cycles.

Eight Bit Inputs 116 and Eipht Bit Outputs 118: I/O bits are available for MPU and IOP application use, reducing the need for external hardware.

### CENTRAL PROCESSING UNIT

The ShBoom CPU 100 architectural philosophy is that of simplification and efficiency of use: implement the simplest solution that adequately solves the problem and provides the best utilization of existing resources. In hardware, this typically equates to using fewer transistors, and fewer transistors means a lower-cost CPU.

Early RISC processors reduced transistor counts compared to CISC processors, and gained their cost and performance improvements therein. Today, interconnections between transistors dominate the silicon of many CPUs. The ShBoom MPU architectural philosophy results in, along with fewer transistors, the minimization of interconnections compared to register-based MPUs.

### Resources

The ShBoom CPU 100 (Figure 1) contains ten major functional units: microprocessing unit (MPU) 108, input-output processor (IOP) 110, global registers 104, direct memory acces controller (DMAC) 112, interrupt controller (INTC) 114, on-chip resources 102, bit inputs 116, bit outputs 118, programmable memory interface (MIF) 120, and clock 140. In part, the ShBoom CPU gains its small silicon size and capability from the resource sharing within and among these units. For example:
- The global registers 104 are shared by the MPU 108, the IOP 110, and transfer logic 142 within the MIF 120. They are used by the MPU 108 for data storage and control communication with the DMAC 112 and the IOP 110; by the IOP 110 for transfer information, loop counts, and delay counts; and by the DMAC 112 for transfer information. Further, the transfer information is used by the transfer logic in the MIF 120 that is shared by the IOP 110 and DMAC 112.
- The MIF 120 is shared by the MPU 108, the IOP 110, the DMAC 112, the bit outputs 118 and the bit inputs 116 for access to the system bus. Bus transaction requests are arbitrated and prioritized by the MIF 120 to ensure temporally deterministic execution of the IOP 110.
- The DMAC 112 transfer-termination logic is significantly reduced by using specific termination conditions and close coupling with the MPU 108 for intelligent termination action.
- The INTC 114 is shared by the bit inputs 116, the IOP 110, and the DMAC 112 (through the MIF 120 transfer logic 142) for interrupt requests to the MPU 108.
- The bit outputs 118 are made available to the system through the On-Chip Resources Registers 102. They are shared by the MPU 108 and the IOP 110 for programmed output, and are bit-addressable.

Although the maximum usage case requiring a complex IOP 110 program, many interrupt sources, many input bits, many output bits, all available DMA channels, and maximum MPU 108 computational ability might leave a shortage of resources, such applications are not typical. The sharing of resources among functional units significantly reduces transistor count, package pin count, and thus silicon size and cost, and increases CPU capability and flexibility. The ability to select among available resources, compared to the fixed resource set of other CPUs, allows the ShBoom CPU 100 to be used for a wider range of applications.

### Clock Speed

The clock speed of a CPU is not a predictor of its performance. For instance, the PowerPC 604, running at about half the speed of the DEC Alpha 21064A, achieves about the same SPECint95 benchmark performance. In this respect, the ShBoom CPU 100 is more like the DEC Alpha than the PowerPC. However, the ShBoom CPU 100 is based on a significantly different design philosophy than either of these CPUs.

Most processors historically have forced the system designer to maintain a balanced triangle among CPU execution speed, memory bandwidth, and I/O bandwidth. However, as system clock rate increases so typically does bus speed, cache memory speed and system interface costs. Typically, too, so does CPU cost, as often thousands of transistors are added to maintain this balance.

The ShBoom CPU 100 lets the system designer select the performance level desired, while maintaining low system cost. This may tilt the triangle slightly, but cost is not part of the triangle-balancing equation. The ShBoom CPU's programmable memory interface permits a wide range of memory speeds to be used, allowing systems to use slow or fast memory as needed. Slow memory will clearly degrade system performance, but the fast internal clock speed of the ShBoom CPU 100 causes internal operations to be completed quickly. Thus the multi-cycle multiply and divide instructions always execute quickly, without the silicon expense of a single-cycle multiply unit. At up to eight times the clock rate of competing parts with single-cycle multipliers, the difference in multiply/divide performance diminishes while the remainder of the application executes correspondingly faster. Although higher performance can sometimes be gained by dedicating large numbers of transistors to functions such as these, silicon cost also increases, and increased cost did not fit the design goals for this version of the ShBoom CPU 100.

### MICROPROCESSING UNIT

The MPU 108 (Figure 2) supports the ShBoom CPU architectural philosophy of simplification and efficiency of use through the basic design in several interrelated ways.

Whereas most RISC processors use pipelines and superscalar execution to execute at high clock rates, the ShBoom MPU 108 uses neither. By having a simpler architecture, the ShBoom MPU issues and completes most instructions in a single clock cycle. There are no pipelines to fill and none to flush during changes in program flow. Though more instructions are sometimes required to perform the same procedure in ShBoom MPU code, the MPU operates at a higher clock frequency than other processors of similar silicon size and technology, thus giving comparable performance at significantly reduced cost.

A microprocessor's performance is often limited by how quickly it can be fed instructions from memory. The MPU 108 reduces this bottleneck by using 8-bit instructions so that up to four instructions (an instruction group) can be obtained during each memory access. Each instruction typically takes one 2X-clock cycle to execute, thus requiring four 2X-clock cycles to execute the instruction group. Because a memory access can take four 2X-clock cycles, the next instruction-group completes. This makes it possible to feed instructions to the processor at maximum instruction-execution bandwidth without the cost and complexity of an instruction cache.

The zero-operand (stack) architecture makes 8-bit instructions possible. The stack architecture eliminates the need to specify source and destination operands in every instruction. By not using opcode bits on every instruction for operand specification, a much greater bandwidth of functional operations - up to four times as high - is possible. Table 3 depicts an example ShBoom MPU instruction sequence that demonstrates twice the typical RISC CPU instruction bandwidth. The instruction sequence on the ShBoom MPU requires one-half the instruction bits, and the uncached performance benefits from the resulting increase in instruction bandwidth.

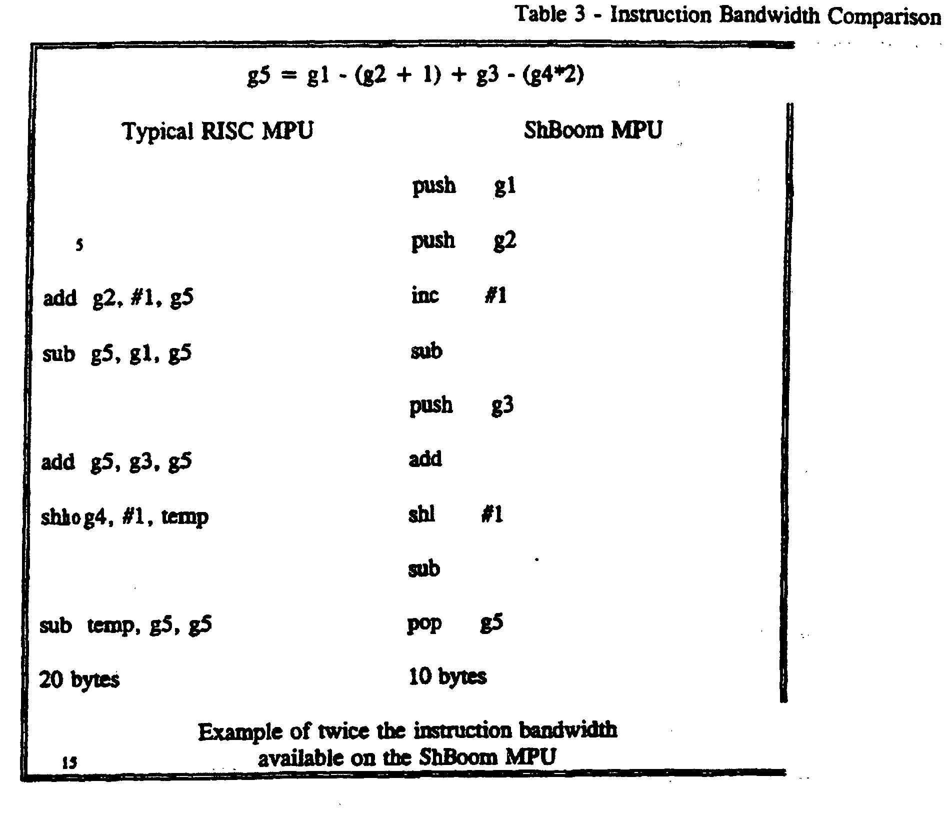

Stack MPUs are thus simpler than register-based MPUs, and the ShBoom MPU 108 has two hardware stacks 122 and 124 to take advantage of this: the operand stack 122 and the local-register stack 124. The simplicity is widespread and is reflected in the efficient ways stacks are used during execution.

ALU 150 processes data from primarily one source of inputs - the top 130 of the operand stack 122. The ALU 150 is also used for branch address calculations. Data bussing is thus greatly reduced and simplified. Intermediate results typically "stack up" to unlimited depth and are used directly when needed, rather than requiring specific register allocations and management. The stacks 122 and 124 are individually cached and spill and refill automatically, eliminating software overhead for stack manipulation typical in other RISC processors. Function parameters are passed on, and consumed directly off of, the operand stack 122, elminating the need for most stack frame management. When additional local storage is needed, the local-register stack 124 supplies registers that efficiently nest and unnest across functions. As stacks, the stack register spaces are only allocated for data actually stored, maximizing storage utilization and bus bandwidth when registers are spilled or refilled - unlike architectures using fixed-size register windows. Stacks speed context switches, such as interrupt servicing, because registers do not need to be explicitly saved before use - additional stack space is allocated as needed. The stacks thus reduce the number of explicitly addressable registers otherwise required, and speed execution by reducing data location specification and movement. Stack storage is inherently local, so the global registers 104 supply non-local register resources when required.

Eight-bit opcodes are too small to contain much associated data. Additional bytes are necessary for immediate values and branch offsets. However, variable-length instructions usually complicate decoding and complicate and lengthen the associated data access paths. To simplify the problem, byte literal data is taken only from the rightmost byte of the instruction group, regardless of the location of the byte literal opcode withing the group. Similarly, branch offsets are taken as all bits to the right of the branch opcode, regardless of the opcode position. For 32-bit literal data, the data is taken from a subsequent memory cell. These design choices ensure that the required data is always right-justified for placement on the internal data busses, reducing interconnections and simplifying and speeding execution.

Since most instructions decode and execute in a single clock cycle, the same ALU 150 that is used for data operations is also available, and is used, for branch address calculations. This eliminates an entire ALU normally required for branch offset calculations.

Rather than consume the chip area for a single-cycle multiply-accumulate unit, the higher clock speed of the MPU 108 reduces the execution time of conventional multi-cycle multiply and divide instructions. For efficiently multiplying by constants, a fast multiply instruction will multiply only by the specified number of bits.

Rather than consume the chip area for a barrel shifter the counted bit-shift operation is "smart" to first shift by bytes, and then by bits, to minimuze the cycles required. The shift operations can also shift double cells (64 bits), allowing bit-rotate instructions to be easily synthesized.

Although floating-point math is useful, and sometimes required, it is not heavily used in embedded applications. Rather than consume the chip area for a floating-point unit, MPU instructions to efficiently perform the most time-consuming aspects of basic IEEE floating-point math operations, in both single-and double-precision, are supplied. The operations use the "smart" shifter to reduce the cycles required.

Byte read and write operations are available, but cycling through individual bytes is slow when scanning for byte values. These types of operations are made more efficient by instructions that operate on all of the bytes within a cell at once.

### Address Space

The MPU 108 fully supports a linear four-gigabyte address space for all program and data operations. I/O devices are selected by mapping them into memory addresses. By convention, the uppermost address bits select I/O device addresses decoded in external hardware. This convention leaves a contiguous linear program and data space of two gigabytes with a sparse address space above two gigabytes. It also allows simultaneous addressing of an I/O device and a memory address for I/O channel transfers. See Memory and Device Addressing, below.

Several instructions of operations expect addresses aligned on four-byte (cell) boundaries. These addresses are referred to as cell-aligned. Only the upper 30 bits of the address are used to locate the data; the two least-significant address bits are ignored. Within a cell, the high order byte is located at the low byte address. The next lower-order byte is at the next higher address, and so on. For example, the value 0x12345678 would exist at byte addresses in memory, from low to high address, as 12 34 56 78.

### Registers and Stacks

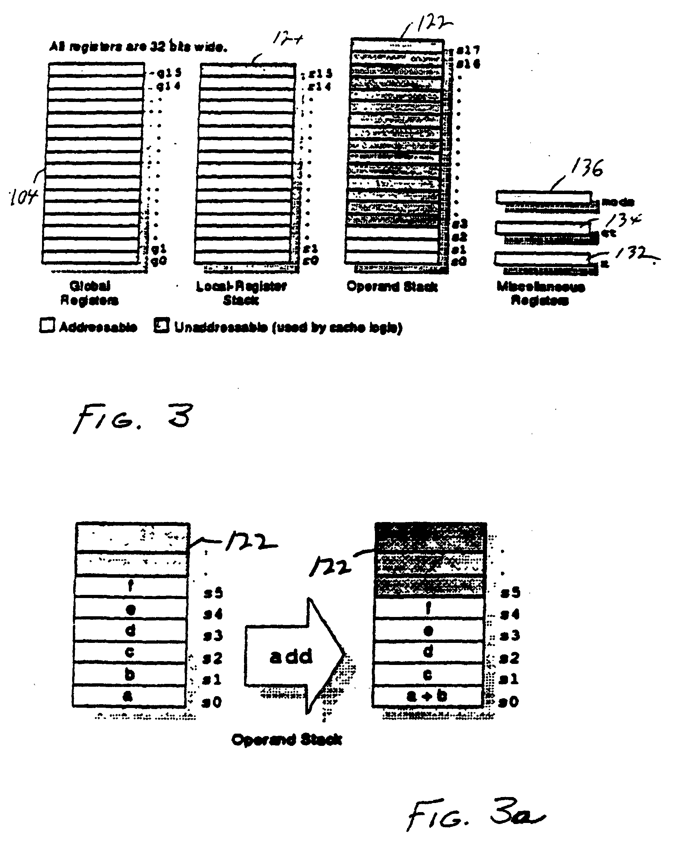

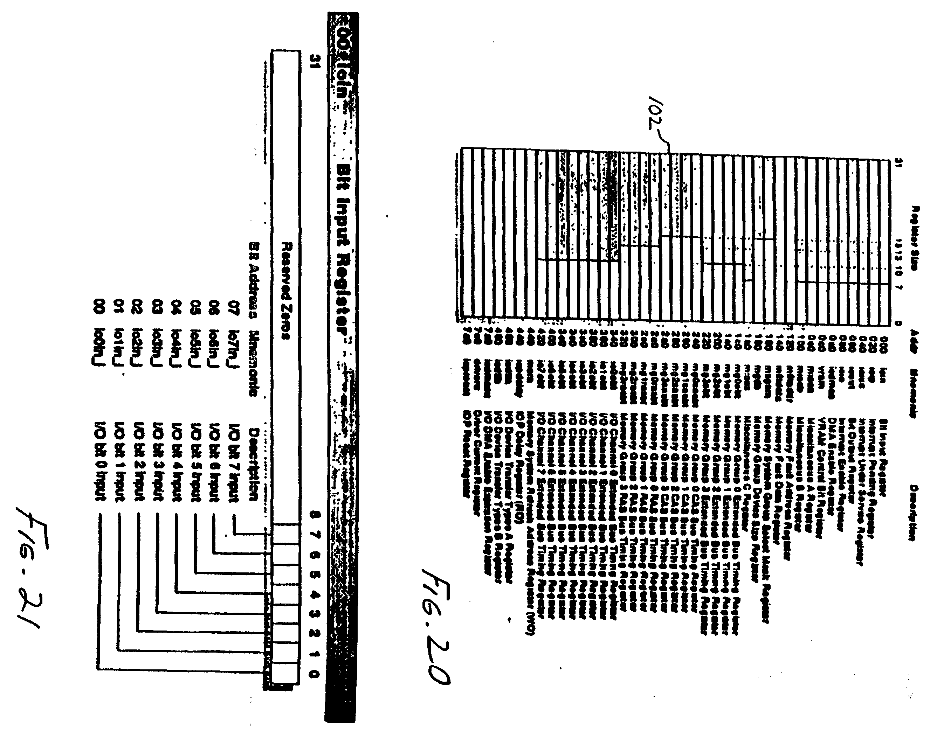

The register set contains 52 general-purpose registers 122, 124, 104, 132 and 134 (Figure 3), mode/status register 136, and 41 local address-mapped on-chip resource registers 102 (Figure 20) used for I/O, configuration, and status.

The operand stack 122 contains eighteen registers s0-s17 and operates as a push-down stack, with direct access to the top three registers (s0-s2). These registers and the remaining registers (s3-s17) operate together as a stack cache. Arithmetic, logical, and date-movement operations, as well as intermediate result processing, are performed on the operand stack. Parameters are passed to procedures and results are returned from procedures on the stack, without the requirement of building a stack frame or necessarily moving data between other registers and the frame. As a true stack, registers are allocated only as needed for efficient use of available storage.

The local-register stack 124 contains sixteen registers r0-r15 and operates as a push-down stack with direct access to the first fifteen registers (r0-r14). These registers and the remaining register (r15) operate together as a stack cache. As a stack, they are used to hold subroutine return addresses and automatically nest local-register data.

Both cached stacks 122 and 124 automatically spill to memory and refill from memory, and can be arbitrarily deep. Additionally, s0 and r0 can be used for memory access. See Stacks and Stack Caches below.

The use of stack-cached operand and local registers improves performance by eliminating the overhead required to save and restore context (when compared to processors with only global registers available). This allows for very efficient interrupt and subroutine processing.

In addition to the stacks are sixteen global registers 104 and three other registers. The global registers (g0-g15) are used for data storage, as operand storage for the MPU multiply and divide instructions (g0), and for the IOP 110. Since these registers are shared, the MPU 108 and the IOP 110 can also communicate through them. Remaining are mode register 136, which contains mode and status bits; x register 132, which is an index register (in addition to s0 and r0); and ct register 134, which is a loop counter and also participates in floating-point operations.

### Programming Model

For those familiar with American National Standard Forth (ANS Forth), or Hewlett-Packard calculators that use postfix notation, commonly known as Reverse Polish Notation (RPN), programming the ShBoom MPU will in many ways be very familiar.

An MPU architecture can be classified as to the number of operands specified within its instruction format. Typical 16-bit and 32-bit CISC and RISC MPUs are usually two- or three-operand architectures, whereas smaller microcontrollers are often one-operand archictectures. In each instruction, two- and three-operand architectures specify a source and destination, or two sources and a destination, whereas one-operand architectures specify only one source and have an implicit destination, typically the accumulator. Architectures are also usually not pure. For example, one-operand archictectures often have two-operand instructions to specify both a source and destination for data movement between registers.

The ShBoom MPU 100 is a zero-operand architecture, known as a stack computer. Operand sources and destinations are assumed to be on the top of the operand stack, which is also the accumulator. See Figure 3a. An operation such as add uses both source operands from the top of the operand stack 122, adds them as indicated at 152, and returns the result to the top of the operand stack 122, thus causing a net reduction of one in the operand stack depth.

Most ALU 150 operations behave similarly, usiing two source operands and returning one result operand to the operand stack. A few ALU operations use one source operand and return one result operand to the operand stack. Some ALU and other operations also require a non-stack register, and a very few do not use the operand stack at all.

Non-ALU operations are also similar. Loads (memory reads) either use an address on the operand stack or in a specified register, and place the retrieved data on the operand stack. Stores (memory writes) use either an address on the operand stack or in a register, and use data from the operand stack. Data movement operations push data from a register onto the operand stack, or pop data from the stack into a register.

Once data is on the operand stack it can be used for any instruction that expects data there. The result of an add, for instance, can be left on the stack indefinitely, until needed by a subsequent instruction. See Table 3 above. Instructions are also available to reorder the data in the top few cells of the operand stack so that prior results can be accessed when required. Data can also be removed from the operand stack and placed in local or global registers to minimize or eliminate later reordering of stack elements. Data can even be popped from the operand stack and restacked by pushing it onto the local-register stack.

Computations are usually most efficiently performed by executing the most deeply nested computations first, leaving the intermediate results on the operand stack, and then combining the intermediate results as the computation unnests. If the nesting of the computation is complex, or if the intermediate results need to be used sometime later after other data will have been added to the operand stack, the intermediate results can be removed from the operand stack and stored in global or local registers.

Global registers are used directly and maintain their data indefinitely. Local registers are registers within the local-register stack cache and, as a stack, must first be allocated. Allocation can be performed by popping data from the operand stack and pushing it onto the local-register stack one cell at a time. It can also be performed by allocating a block of uninitialized stack registers at one time; the uninitialized registers are then initialized by popping data, one cell at a time, into the registers in any order. The allocated local registers can be deallocated by pushing data onto the operand stack and popping it off of the local register stack one cell at a time, and then discarding from the operand stack the data that is unneeded. Alternatively, the allocated local registers can be deallocated by first saving any data needed from the registers, and then deallocating a block of registers at one time. The method selected will depend on the number of registers required and whether the data on the operand stack is in the required order.

Registers on both stacks 122 and 124 are referenced relative to the tops of the stacks and are thus local in scope. What was accessible in r0, for example, after one cell has been push onto the local-register stack 124, is accessible as r1; the newly pushed value is accessible as r0.

Parameters are passed to and returned from subroutines on the operand stack 122. An unlimited number of parameters can be passed and returned in this manner. An unlimited number of local-register allocations can also be made. Parameters and allocated local registers thus conveniently nest and unnest across subroutines and program basic blocks.

Subroutine return addresses are pushed onto the local-register stack 124 and thus appear as r0 on entry to the subroutine, with the previous r0 accessible as r1, and so on. As data is pushed onto the stacks and the available register space fills, registers are spilled to memory when required. Similarly, as data is removed from the stacks and the register space empties, the registers are refilled from memory as required. Thus from the program's perspective, the stack registers are always available.

### Instruction Set Overview

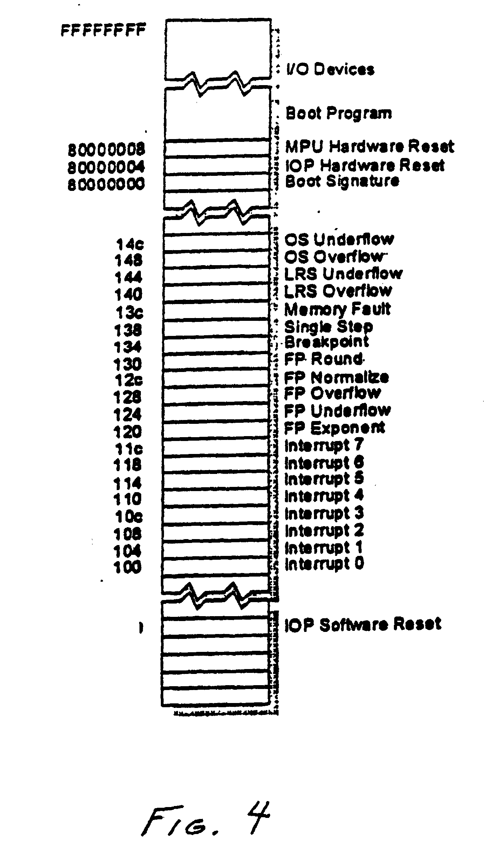

Table 4 lists the MPU instructions; Table 34, below, and Table 37, below, list the mnemonics and opcodes. All instructions consist of eight bits, except for those that require immediate data. This allows up to four instructions (an instruction group) to be obtained on each instruction fetch, thus reducing memory-bandwidth requirements compared to typical RISC machines with 32-bit instructions. This characteristic also allows looping on an instruction group (a micro-loop) without additional instruction fetches from memory, further increasing efficiency. Instruction formats are depicted in Figure 6.

**Table 4 -**

| MPU Instruction Set | | |
|---|---|---|
| **ARITHMETIC/SHIFT** | **CONTROL TRANSFER** | **LOGICAL** |
| ADD | BRANCH | AND |
| ADD with carry | BRANCH ON ZERO | OR |
| ADD ADDRESS | BRANCH INDIRECT | XOR |
| SUBTRACT | CALL | NOT AND |
| SUBTRACT with borrow | CALL INDIRECT | TEST BYTES |
| INCREMENT | DECREMENT AND | EQUAL ZERO |
| DECREMENT | BRANCH | |
| NEGATE | SKIP | **DEBUGGING** |
| SIGN EXTEND BYTE | SKIP ON CONDITION | STEP |
| COMPARE | MICRO-LOOP | BREAKPOINT |
| MAXIMUM | MICRO-LOOP ON | |
| MULTIPLY SIGNED | CONDITION | **DATA MANAGEMENT** |
| MULTIPLY UNSIGNED | RETURN | LOAD |
| FAST MULTIPLY | RETURN FROM | STORE |
| SIGNED DIVIDE UNSIGNED | INTERRUPT | STORE INDIRECT, pre-dec/post-inc |
| SHIFT LEFT/RIGHT | **FLOATING POINT** | PUSH |
| DOUBLE SHIFT | TEST EXPONENT | REGISTER/STACK |
| LEFT/RIGHT | EXTRACT EXPONENT | POP REGISTER/STACK |
| INVERT CARRY | EXTRACT SIGNIFICAND RESTORE EXPONENT | EXCHANGE REVOLVE |
| **MISCELLANEOUS** | DENORMALIZE | SPLIT |
| CACHE CONTROL | NORMALIZE | REPLACE BYTE |
| FRAME CONTROL | RIGHT/LEFT | PUSH LITERAL |
| STACK DEPTH | EXPONENT | STORE ON-CHIP |
| NO OPERATION | DIFFERENCE | RESOURCE |
| ENABLE/DISABLE | ADD EXPONENTS | LOAD ON-CHIP |
| INTERRUPTS | SUBTRACT EXPONENTS ROUND | RESOURCE |

### ALU Operations

Almost all ALU operations occur on the top of the operand stack 122 in s0 and, if needed, s1. A few operands also use g0, ct 134, or pc.

Only one ALU status bit, carry, is maintained and is stored in mode 136. Since there are no other ALU status bits, all other conditional operations are performed by testing s0 on the fly. eqz is used to reverse the zero/non-zero state of s0. Most arithmetic operations modify carry from the result produced out of bit 31 of s0. The instruction add pc is available to perform pc-relative data references. adda is available to perform address arithmetic without changing carry. Other operations modify carry as part of the result of the operation.

s0 and s1 can be used together for double-cell shifts, with s0 containing the more-significant cell and s1 the less-significant cell of the 64-bit value. Both single-cell and double-cell shifts transfer a bit between carry and bit 31 of s0. Code depicting single-cell rotates constructed from the double-cell shift is given below.

All ALU instructions opcodes are formatted as 8-bit values with no encoded fields.

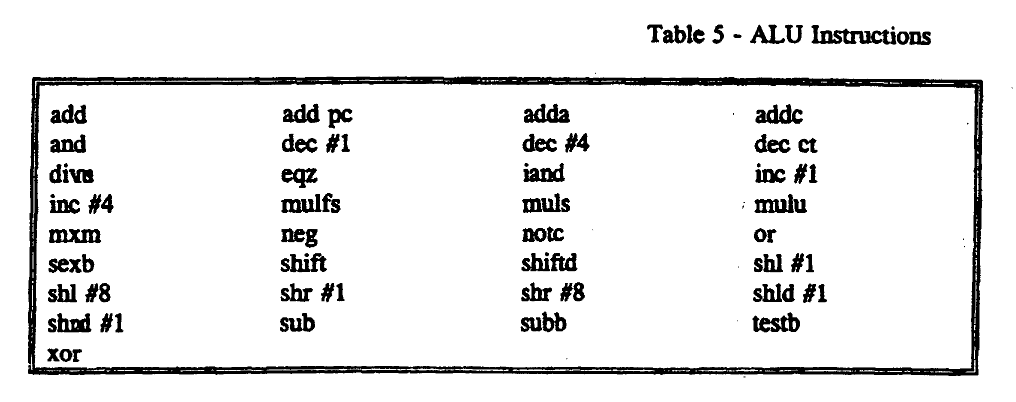

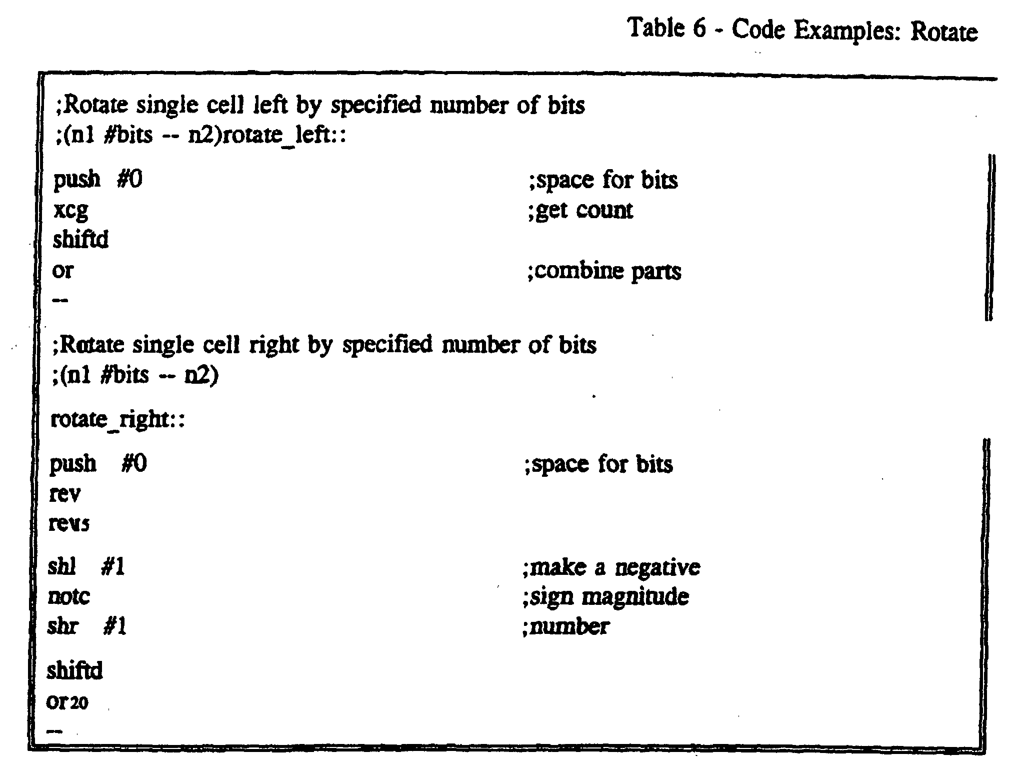

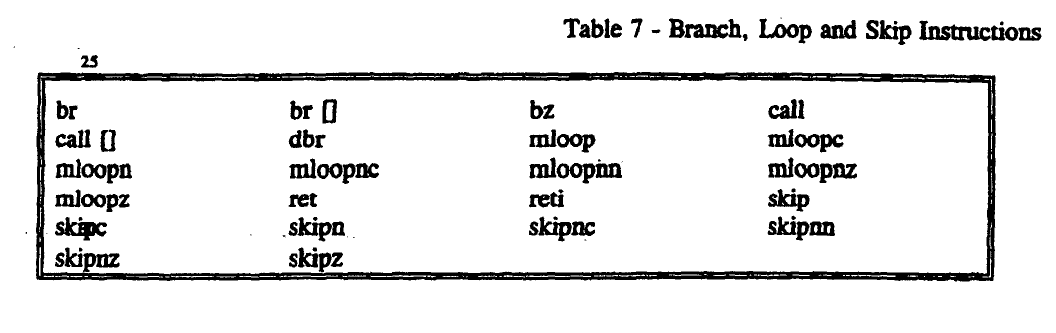

### Branches, Skips, and Loops (Table 7)

The instructions br, bz, call and dbr are variable-length. The three least-significant bits in the opcode and all of the bits in the current instruction group to the right of the opcode are used for the relative branch offset. See Figure 6. Branch destination addresses are cell-aligned to maximize the range of the offset and the number of instructions that will be executed at the destination. The offset is 3, 11, 19 or 27 bits long, depending on the location of the opcode within the current instruction group. The address of the destination is offset from the address of the beginning of the cell containing the branch opcode. The offsets have a range of +12/-16, +4092/-4096, +1048572/-1048576. and +268435452/-268435456 bytes, respectively. If an offset is not of sufficient size for the branch to reach the destination, the branch must be moved to an instruction group where more offset bits are available, or br [] or call [] can be used.

Register-indirect branches are available with br [] and call []. They use an absolute byte address from s0. The instruction add pc can be used if a computed pc-relative branch is required.

The mloop_instructions are referred to as micro-loops. If specified, a condition is tested, and then ct is decremented. If a termination condition is not met, execution continues at the beginning of the current instruction group. Micro-loops are used to re-execute short instructions sequences without re-fetching the instructions from memory. See Table 10.

Other than branching on zero with bz, other conditional branching is performed with the skip_ instructions. They terminate execution of the current instruction group and continue execution at the beginning of the next instruction group. They can be combined with the br, call, dbr, and ret (or other instructions) to create additional flow-of-control operations.

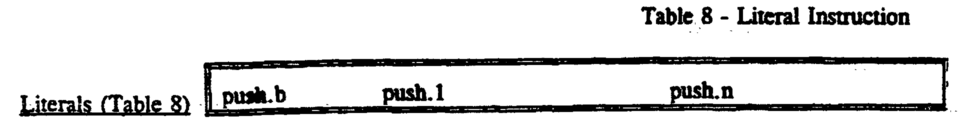

To maximize opcode bandwidth, three sizes of literals are available. The data for four-bit (nibble) literals, with a range of -7 to +8. is encoded in the four least-significant bits of the opcode; the numbers are encoded as two's-complement values with the value 1000 binary decoded as +8. The data for eight-bit (byte) literals, with a range of 0-255, is located in the right-most byte of the instruction group, regardless of the position of the opcode within the instruction group. The data for 32-bit (long, or cell) literals, is located in a cell following the instruction group in the instruction stream. Multiple push.1 instructions in the same instruction group access consecutive cells immediately following the instruction group. See Figure 6.

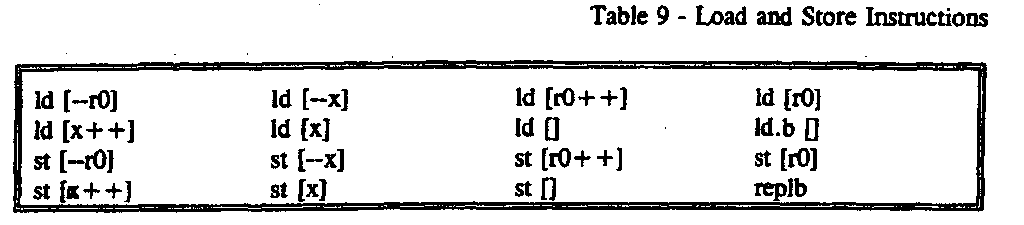

### Loads and Stores (Table 9)

r0 and x support register-indirect addressing and also register-indirect addressing with predecrement by four our postincrement by four. These modes allow for efficient memory reference operations. Code depicting memory move and fill operations is given in Table 10.

Register indirect addressing can also be performed with the address in s0. Other addressing modes can be implemented using adda. Table 11 depicts the code for a complex memory reference operation.

The memory accesses depicted in the examples above are cell-aligned, with the two least-significant bits of the memory addresses ignored. Memory can also be read at byte addresses with 1d.b [] and written at byte addresses using x and replb. See Byte Operations.

The MPU contains a one-level posted write. This allows the MPU to continue executing while the posted write is in progress and can significantly reduce execution time. Memory coherency is maintained by giving the posted write priority bus access over other MPU bus requests, thus writes are not indefinitely deferred. In the code examples in Table 10, the loop execution overhead is zero when using posted writes. Posted writes are enabled by setting mspwe.

All load and store instruction opcodes are formatted as 8-bit values with no encoded fields.

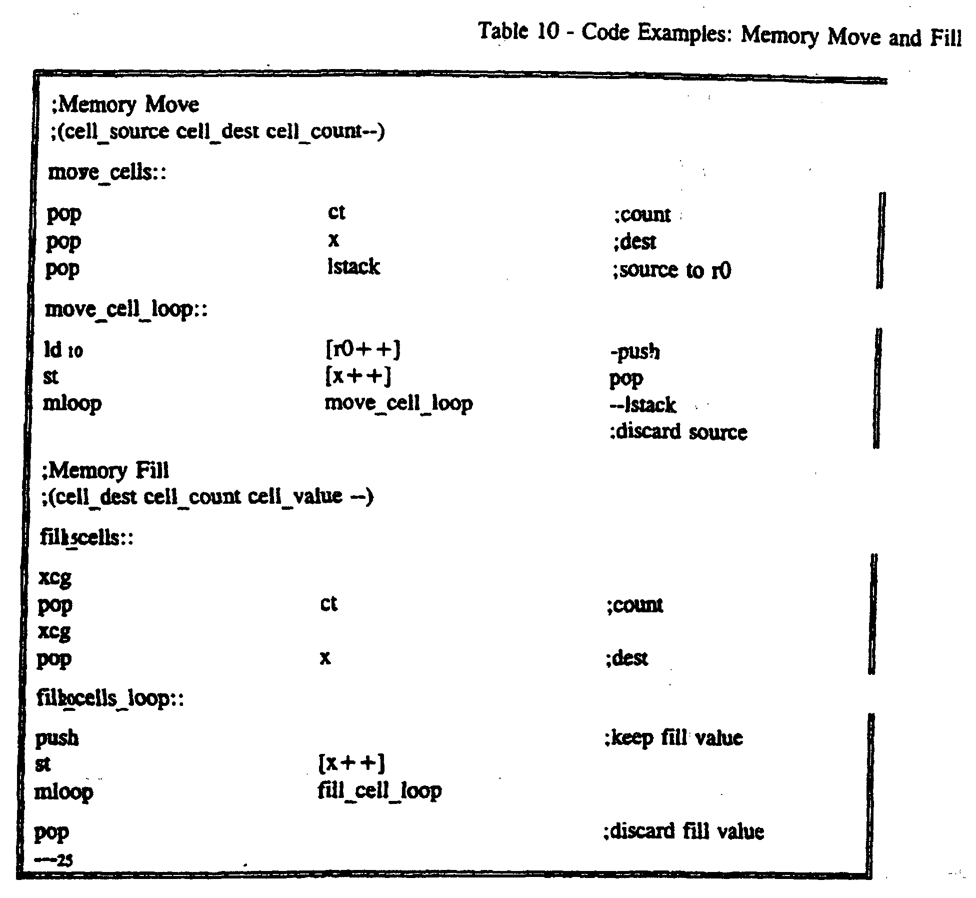

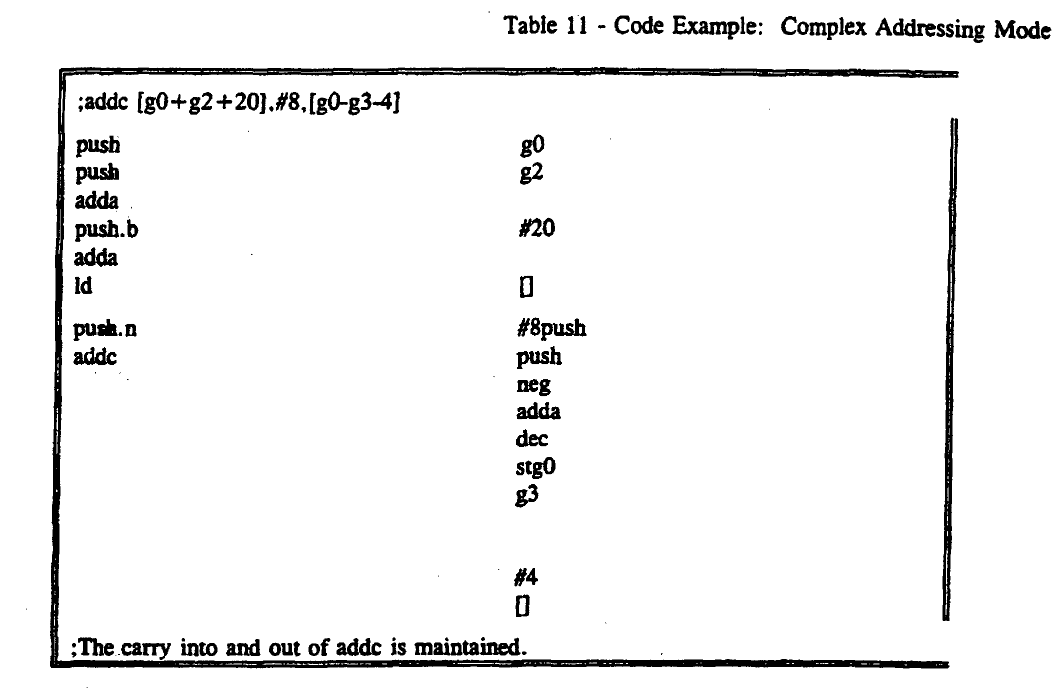

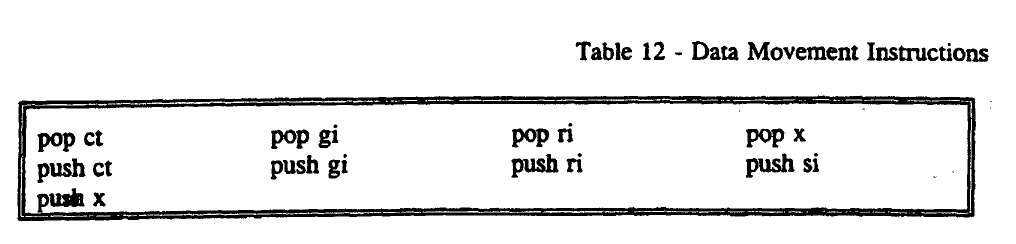

### Data Movement (Table 12)

Register data is moved by first pushing the register onto the operand stack, and then popping it into the destination register. Memory data is moved similarly. See Loads and Stores, above.

The opcodes for the date-movement instructions that access gi and ri are 8-bit values with the register number encoded in the four least-significant bits. All other date-movement instruction opcodes are formatted as 8-bit values with no encoded fields.

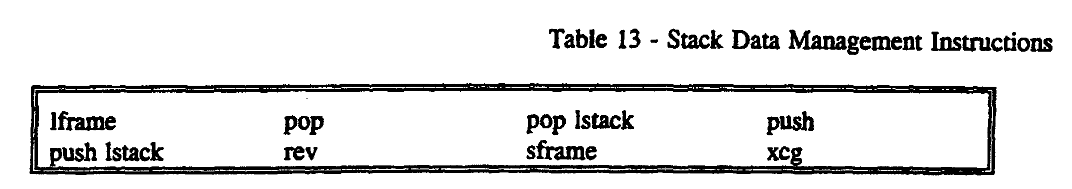

### Stack Data Management (Table 13)

Operand stack data is used from the top of the stack and is generally consumed when processed. This can require the use of instructions to duplicate, discard, or reorder the stack data. Data can also be moved to the local-register stack to place it temporarily out of the way, or to reverse its stack access order, or to place it in a local register for direct access. See the code examples in Table 10.

If more than a few stack data management instructions are required to access a given operand stack cell, performance usually improves by placing data in a local or global register. However, there is a finite supply of global registers, and local registers, at some point, spill to memory. Data should be maintained on the operand stack only while it is efficient to do so. In general, if the program requires frequent access to data in the operand stack deeper than s2, that data, or other more accessible data, should be placed in directly addressable registers to simplify access.

To use the local-register stack, data can be popped from the operand stack and pushed onto the local-register stack, or data can be popped from the local-register stack and push onto the operand stack. This mechanism is convenient to move a few more cells when the resulting operand stack order is acceptable. When moving more data, or when the data order on the operand stack is not as desired, 1frame can be used to allocate or deallocate the required local registers, and then the registers can be written and read directly. Using 1frame also has the advantage of making the required local-register stack space available by spilling the stack as a continuous sequence of bus transactions, which will minimize the number of RAS cycles required when writing to DRAM.

The instruction sframe behaves similarly to 1frame and is primarily used to discard a number of cells from the operand stack.

All stack data management instruction opcodes are formatted as 8-bit values with no encoded fields.

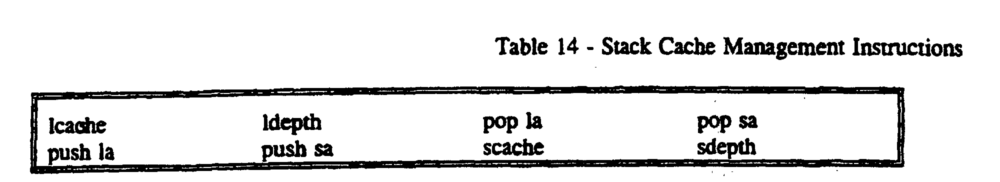

### Stack Cache Management (Table 14)

Other than initialization, and possibly monitoring of overflow and underflow via the related traps. the stack caches do not require active management. Several instructions exist to efficiently manipulate the caches for context switching, status checking, and spill and refill scheduling.

The _depth instructions can be used to determine the number of cells in the SRAM part of the stack caches. This value can be used to discard the values currently in the cache, to later restore the cache depth with _cache, or to compute the total on-chip and external stack depth.

The _cache instructions can be used to ensure either that data is in the cache or that space for data exists in the cache, so that spills and refills will occur at preferential times. This allows more control over the caching process and thus a greater degree of determination during the program execution process. Scheduling stack spills and refills in this way can also improve performance by minimizing the RAS cycles required due to stack memory accesses.

The _frame instructions can be used to allocate a block of uninitialized register space at the top of the SRAM part of the stack, or to discard such a block of register space when no longer needed. They, like the _cache instructions, can be used to group stack spills and refills to improve performance by minimizing the RAS cycles required due to stack memory accesses.

See Stacks and Stack Caching for more information.

All stack cache management instruction opcodes are formatted as 8-bit values with no encoded fields.

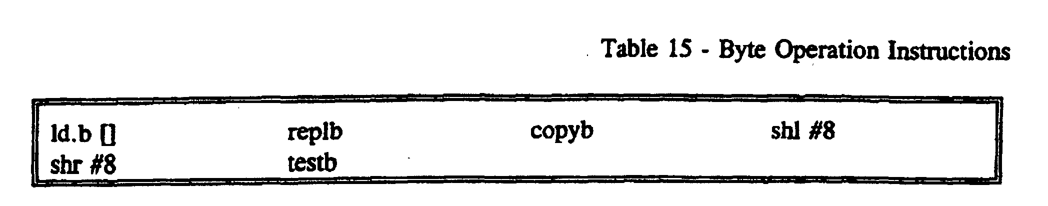

### Byte Operations (Table 15)

Bytes can be addressed and read from memory directly and can be addressed and written to memory with the code depicted in Table 16.

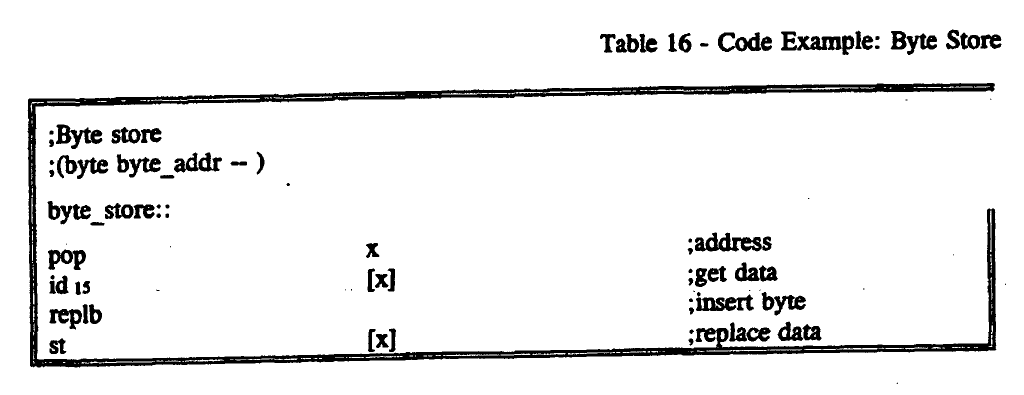

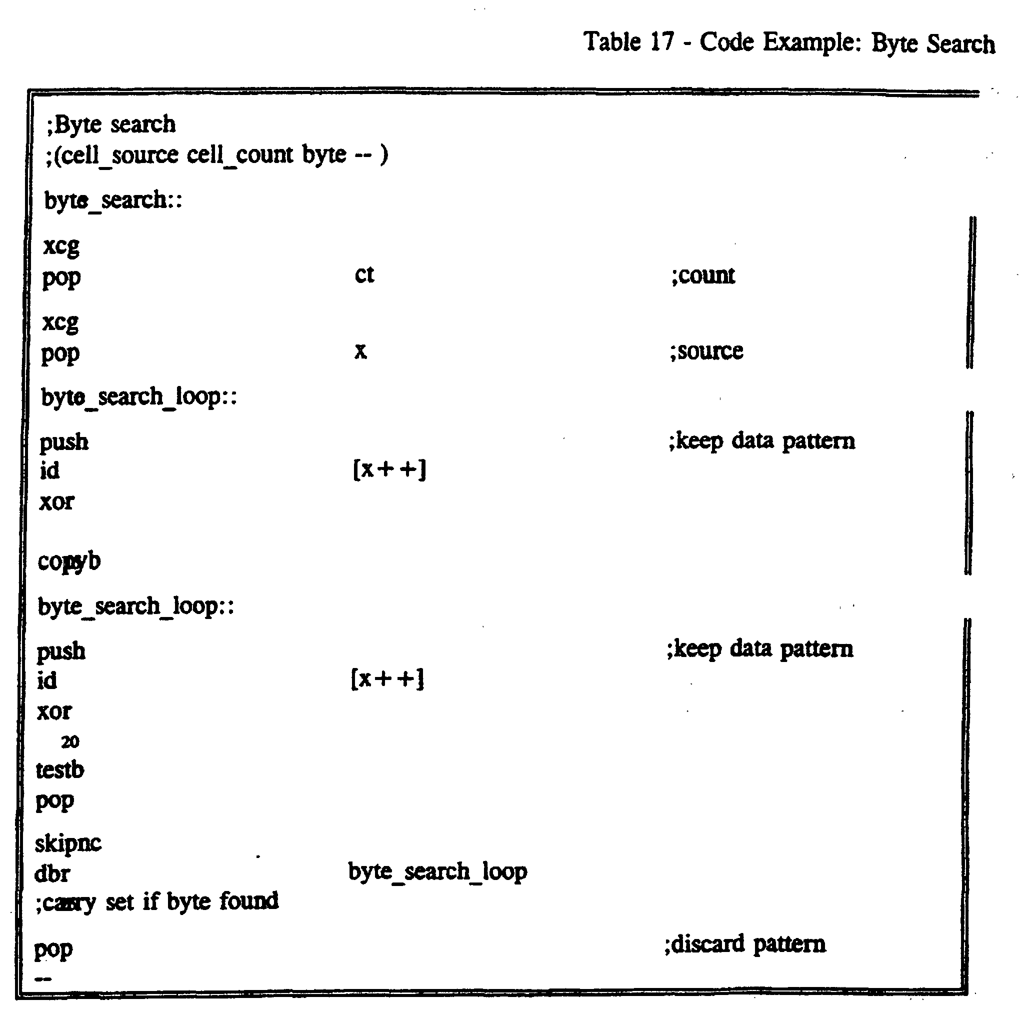

Instructions are available for manipulating bytes within cells. A byte can be replicated across a cell, the bytes within a cell can be tested for zero, and a cell can be shifted by left or right by one byte. Code examples depicting scanning for a specified byte, scanning for a null byte, and moving a null-terminated string in cell-sized units are given in Tables 17-19.

All byte operation instruction opcodes are formatted as 8-bit values with no encoded fields.

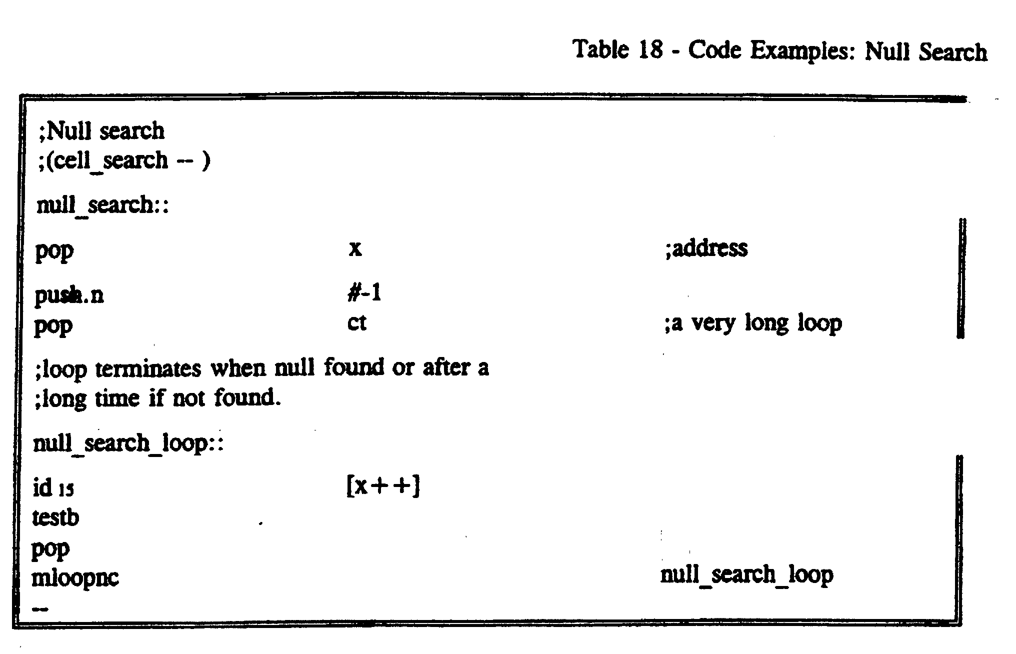

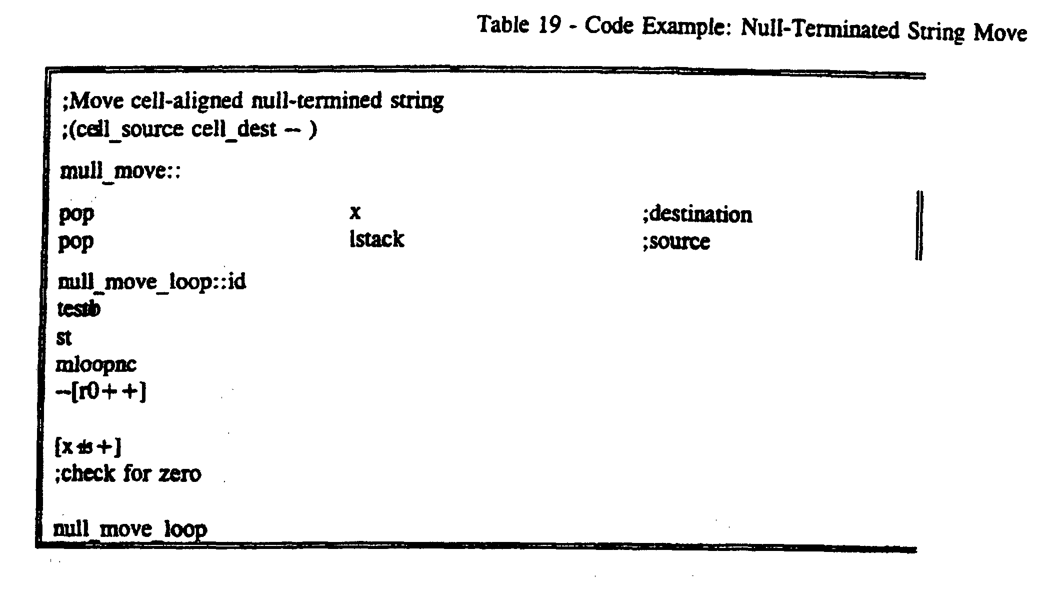

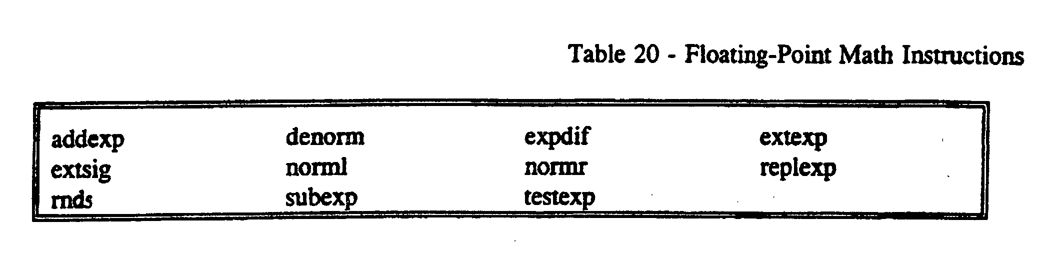

### Floating-Point Math (Table 20)

The instructions above are used to implement efficient single- and double-precision IEEE floating-point software for basic math functions (+, -, *, /), and to aid in the development of floating-point library routines. The instructions performs primarily the normalization, denormalization, exponent arithmetic, rounding and detection of exceptional numbers and conditions that are otherwise execution-time-intensive when programmed conventionally. See Floating-Point Math Support.

All floating-point math instruction opcodes are formatted as 8-bit values with no encoded fields.

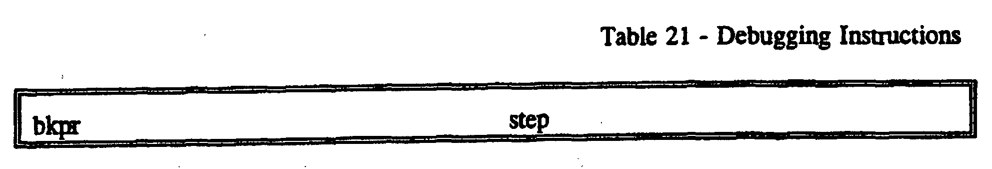

### Debugging Features (Table 21)

Each of these instructions signals an exception and traps to an application-supplied execution-monitoring program to assist in the debugging of programs. See Debugging Support.

Both debugging instruction opcodes are formatted as 8-bit values with no encoded fields.

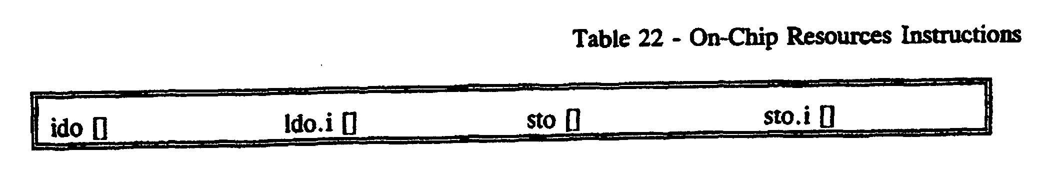

### On-Chip Resources (Table 22)

These instructions allow access to the on-chip peripherals, status registers, and configuration registers. All registers can be accessed with the ldo [] and sto [] instructions. The first six registers each contain eight bits, which are also bit addressable with ldo.i [] and sto.i []. See On-Chip Resource Registers.

All on-chip resource instruction opcodes are formatted as 8-bit values with no encoded fields.

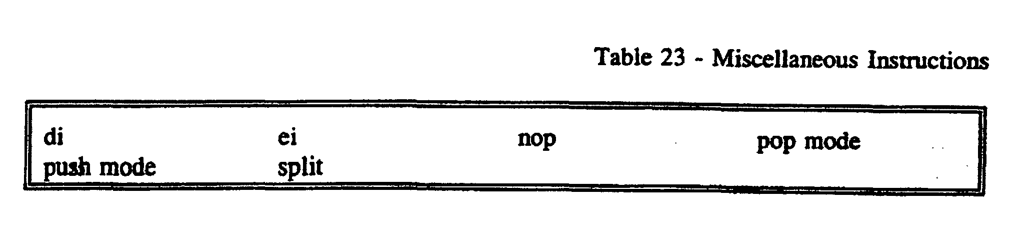

### Miscellaneous (Table 23)

The disable- and enable-interrupt instructions are the only system control instructions; they are supplied to make interrupt processing more efficient. Other system control functions are performed by setting or clearing bits in mode, or in an on-chip resource register. The instruction split separates a 32-bit value into two cells, each containing 16 bits of the original value.

All miscellaneous instruction opcodes are formatted as 8-bit values with no encoded fields.

### Stacks and Stack Caches

The stack caches optimize use of the stack register resources by minimizing the overhead required for the allocation and saving of registers during programmed or exceptional context switches (such as call subroutine execution and trap or interrupt servicing).

The local-register stack 124 (Figure 3) consists of an on-chip SRAM array that is addressed to behave as a conventional last-in, first out queue. Local registers r0-r15 are addressed internally relative to the current top of stack. The registers r0-r14 are individually addressable and are always contiguously allocated and filled. If a register is accessed that is not in the cache, all the lower-ordinal registers will be read in to ensure a contiguous data set.

The operand stack 122 is constructed similarily, with the addition of two registers in front of the SRAM stack cache array to supply inputs to the ALU. These registers are designated s0 and s1, and the SRAM array is designated s2-s17. Only registers s0; s1 and sw are individually addressable, but otherwise the operand stack behaves similarly to the local-register stack. Whereas the SRAM array, s2-s17, can become "empty" (see below), s0 and s1 are always considered to contain data.

The stack caches are designed to always allow the current opertion to execute to completion before an implicit stack memory operation is required to occur. No instruction explicitly pushes or explicitly pops more than one cell from either stack (except for stack management instructions). Thus to allow execution to completion, the stack cache logic ensures that there is always one or more cells full and one or more cells empty in each stack cache (except immediately after power-up, see below) before instruction execution. If, after the execution of an instruction, this is not the case on either stack, the corresponding stack cache will be automatically spilled to memory or refilled from memory to reach this condition before the next instruction is allowed to execute. Similarly, the instructions _cache, _frame, pop sa, and pop 1a, which explicitly change the stack cache depth, will execute to completion, and then ensure the above conditions exist.

Thus r15 and s17 can be filled by the execution of an instruction, but they will be spilled before the next instruction executes. Similarly, r0 and s2 can be emptied by the execution of an instruction, but they will be filled before the next instruction executes.

The stacks can be arbitrarily deep. When a stack spills, data is written at the address in the stack pointer and then the stack pointer is decremented by four (postdecremented stack pointer). Conversely, when a stack refills, the stack pointer is incremented by four, and then data is read from memory (preincremented stack pointer). The stack pointer for the operand stack is sa, and the stack pointer for the local-register stack is 1a.

Since the stacks are dynamically allocated memory areas, some amount of planning or management is required to ensure the memory areas do not overflow or underflow. Alternatively, stack memory can be dynamically allocated or monitored through the use of stack-page exceptions.

### Stack-Page Exceptions

Stack-page exceptions occur on any stack-cache memory access near the boundary of any 1024-byte memory page to allow overflow and underflow protection and stack memory management. To prevent thrashing stack-page exceptions near the margins of the page boundary areas, once a boundary area is accessed and the corresponding stack-page exception is signaled, the stack pointer must move to the middle region of the stack page before another stack-page exception will be signaled. See Figure 5.

Stack-page exceptions enable stack memory to be managed by allowing stack memory pages to be reallocated or relocated when the edges of the current stack page are approached. The boundary regions of the stack pages are located 32 cells from the ends of each page to allow even a _cache or _frame instruction to execute to completion and to allow for the corresponding stack cache to be emptied to memory. Using the stack-page exceptions requires that only 2 KB of addressable memory be allotted to each stack at any given time: the current stack page and the page near the most recently encroached boundary.

Each stack supports stack-page overflow and stack-page underflow exceptions. These exception conditions are tested against the memory address that is accessed when the corresponding stack spills or refills between the execution the execution of instructions mode contains bits that signal local-stack overflow, local-stack underflow, operand stack overflow and operand stack underflow, as well as the corresponding trap enable bits.

The stack-page exceptions have the highest priority of all of the traps. As this implies, it is important to consider carefully the stack effects of the stack trap handler code so that stack-page boundaries will not be violated during its execution.

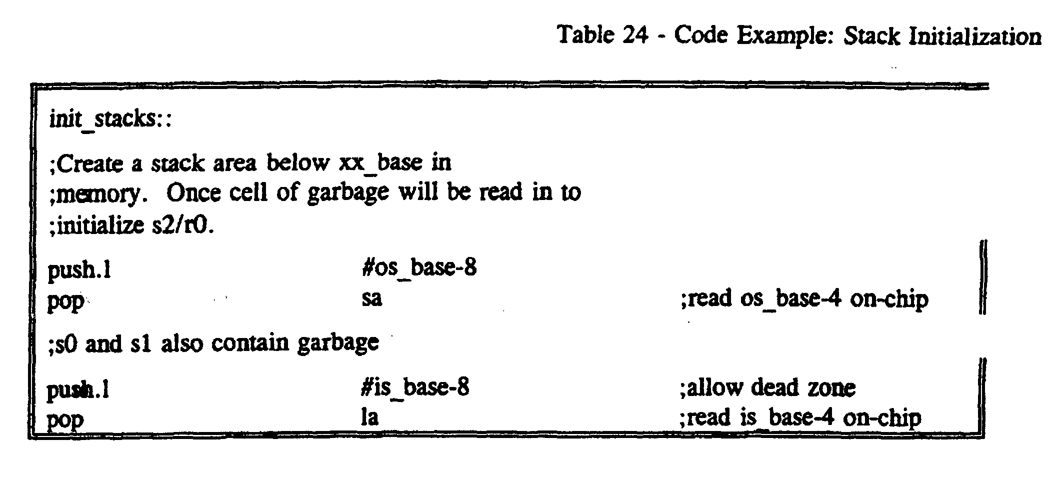

### Stack Initialization (Table 24)

After CPU reset both of the MPU stacks should be considered uninitialized until the rest corresponding stack pointers are loaded, and this should be one of the first operations performed by the MPU.

After a reset, the stacks are abnormally empty. That is, r0 nd s2 have not been allocated, and will be allocated on the first push operation to, or stack pointer initialization of, the corresponding stack. However, popping the pushed cell will cause that stack to be empty and require a refill. The first pushed cell should therefore be left on that stack, or the corresponding stack pointer should be initialized, before the stack is used further.

### Stack Depth

The total number of cells on each stack can readily be determined by adding the number of cells that have spilled to memory and the number of cells in the on-chip caches. See Table 25.

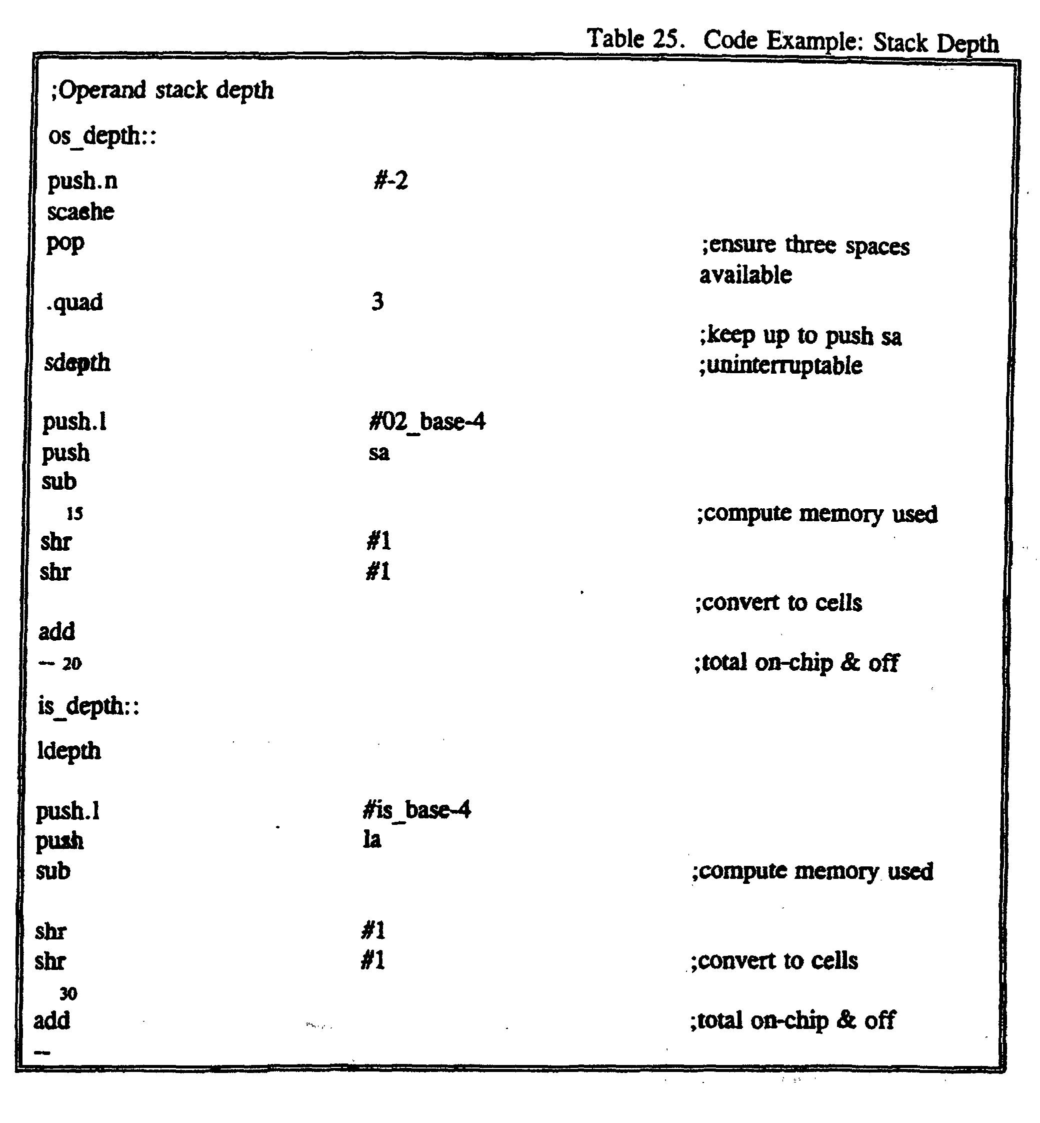

### Stack Flush and Restore

When performing a context switch, it is necessary to spill the data in the stack caches to memory so that the stach caches can be reloaded for the new context. Attention must be given to ensure that the parts of the stack caches that are always maintained on-chip, r0 and s0-s2, are forced into the spillable area of the stack caches so that they can be written to memory. Code examples are given for flushing and restoring the caches in Table 26 and Table 27, respectively.

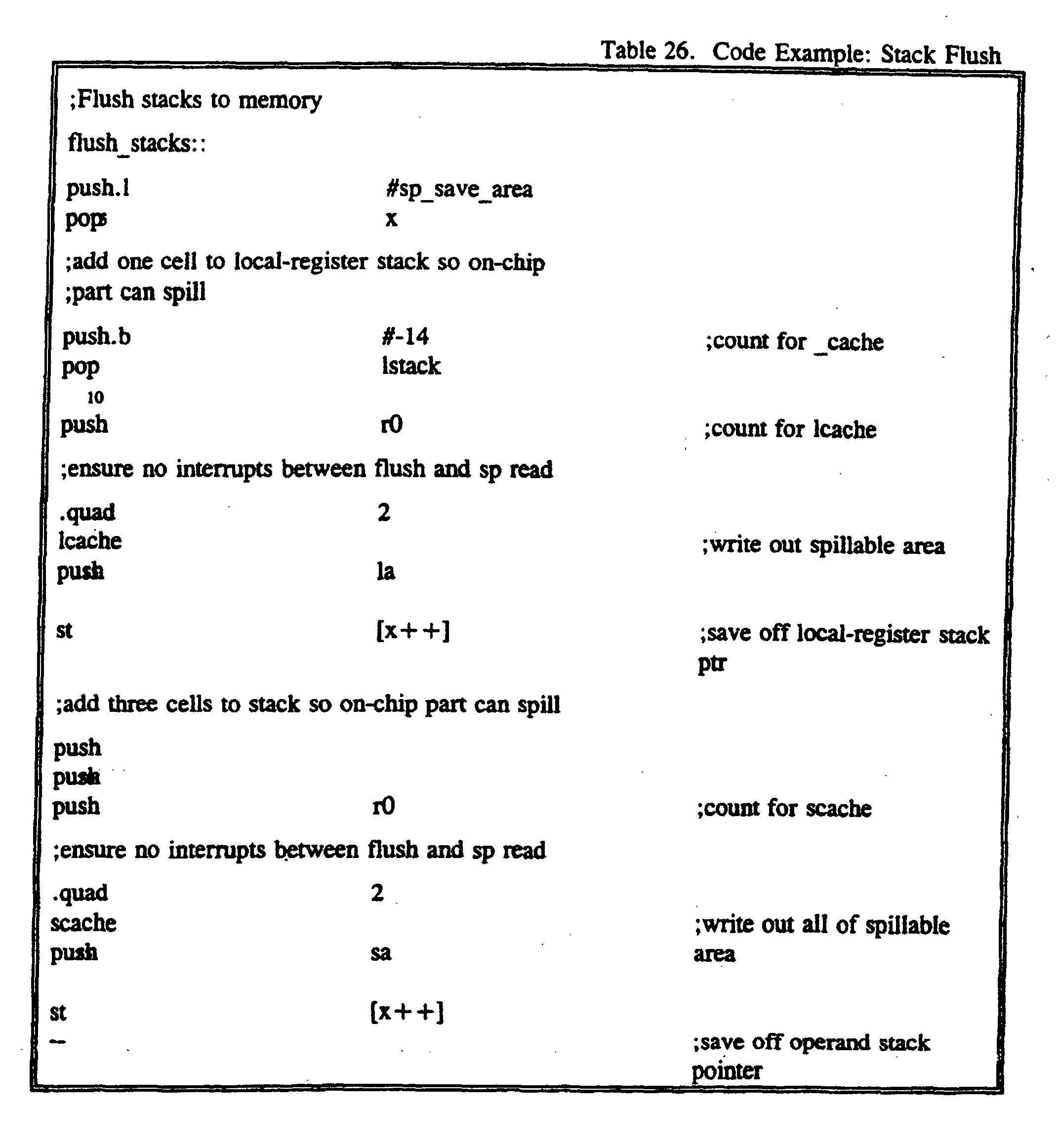

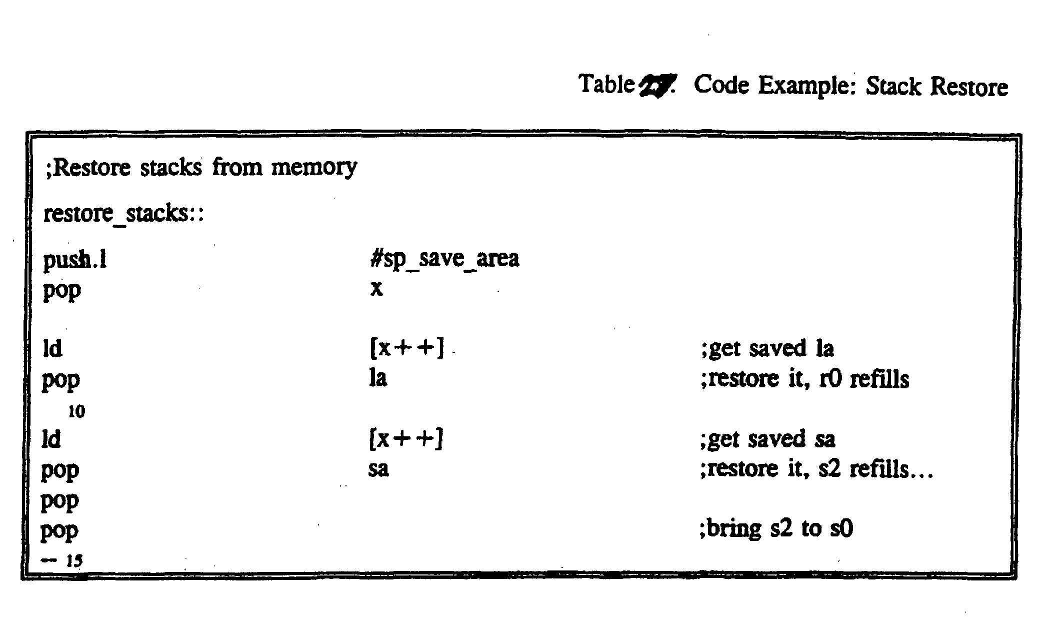

**Table 28.**

| **Traps Dependent on System State** | | |
|---|---|---|
| STACK DEPTH CHANGE | | TRAPS |
| Operand Stack | Local-Register Stack | |
| +n | 0 | OS Ovf |
| -n | 0 | OS Unf |
| 0 | +1 | L.S. Ovf |
| 0 | -1 | LS Unf |
| -1 | -n | LS Unf, OS Ovf, LS Unf & OS Ovf |
| -1 | -n | LS Unf, OS Unf, LS Unf & OS Unf |
| Notes: 1. +n >0, -n <0 | | |
| 2. If the instruction reads or writes memory or if a posted write is in progress, a memory fault can also occur. | | |
| 3. If the instruction is single-stepped, a single-step trap will also occur. | | |
| 4. If any trap occurs, a local-register stack overflow could also occur. | | |
| 5. LS = Local-Register Stack, OS = Operand Stack, Ovf = Overflow, Unf = Underflow. | | |

### Exceptions and Trapping

Exception handling is precise and is managed by trapping to executable-code vectors in low memory. Each 32-bit vector location can contain up to four instructions. This allows servicing the trap within those four instructions or by branching to a longer trap routine. Traps are prioritized and nested to ensure proper handling. The trap names and executable vector locations are shown in Figure 4.

An exception is said to be signaled when the defined conditions exist to cause the exception. If the trap is enabled, the trap is then processed. Traps are processed by the trap logic causing a call subroutine to the associated executable-code vector address. When multiple traps occur concurrently, the lowest-priority trap is processed first, but before the executable-code vector is executed, the next-higher-priority trap is processed, and so on, until the highest-priority trap is processed. The highest-priority trap's executable-code vector then executes. The nested executable-code vector return addresses unrest as each trap handler executes ret, thus producing the prioritized trap executions.

Interrupts are disabled during trap processing and nesting until an instruction that begins in byte one of an instruction group is executed. Interrupts do not need to nest with the traps since their request state is maintained in the INTC registers.

Table 29. lists the priorities of each trap. Traps that can occur explicitly due to the data processed or instruction executed are listed in Table 30. Traps that can occur due to the current state of the system, concurrently with the traps in Table 30, are listed in Table 28.

**Table 29.**

| Trap Priorities | |
|---|---|
| Priority | Trap |
| 1 | local-register stack overflow |
| 2 | operand stack overflow |
| 3 | local-register stack underflow |
| 4 | operand stack overflow |
| 5 | memory fault |
| 6 | floating-point exponent floating-point underflow floating-point overflow floating-point round |
| 7 | floating-point normalize |
| 8 | breakpoint |
| 9 | single step |

**Table 30.**

| Traps Independent of System State | |
|---|---|
| Instruction | Trap Combinations |
| addexp | FP Unf, FP Ovf |
| bkpt | Breakpoint |
| denorm | FP Nm |
| normol | FP Unf, FP Nm, FP Unf & FP Nm |
| normr | FP Ovf, FP Nm, FP Ovf & FP Nm |
| rnd | FP Round |
| step | Single Step |
| subexp | FP Unf, FP Ovf |
| testexp | FP Exponent |
| Notes: | |
| FP = Floating Point, Unf = Underflow, Ovf = Overflow, | |
| Nm = Normalize | |

### Floating-Point Math Support

The MPU supports single-precision (32-bit) and double-precision (64-bit) IEEE floating-point math software. Rather than a floating-point unit and the silicon area it would require, the MPU contains instructions to perform most of the time-consuming operations required when programming basic floating-point math operations. Existing integer math operations are used to supply the core add, substract, multiply and divide functions, while the exponents and detect exception conditions. Additionally, a three-bit extension to the top one or two stack cells (depending on the precision) is used to aid in founding and to supply the required precision and exception signaling operations.

### Data Formats

Though single- and double-precision IEEE formats are supported, from the perspective of the MPU, only 32-bit values are manipulated at any one time (except for double shifting). See Figure 6a. The MPU instructions directly support the normalized data formats depicted. The related denormalized formats are detected by testexp and fully supportable in software.

### Status and Control Bits

mode register 136 contains 13 bits that set floating-point precision, founding mode, exception signals, and trap enables. See Figure 7.

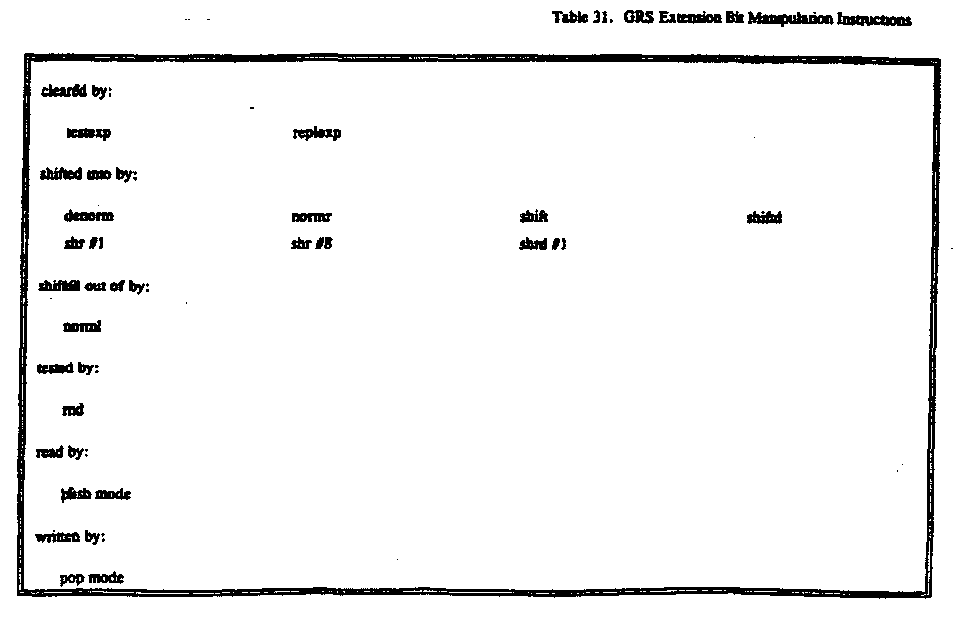

### GRS Extension Bits

To maintain the precision required by the IEEE standard, more significand bits are required than are held in the IEEE format numbers. These extra bits are used to hold bits that have been shifted out of the right of the significand. They are used to maintain additional precision, to determine if any precision has been lost during processing, and to determine whether rounding should occur. The three bits appear in mode so they can be saved, restored and manipulated. Individually, the bits are named guard_bit, round_bit and sticky_bit. Several instructions manipulate or modify the bits. See Table 31.

When denorm and normr shift bits into the GRS extension, the source of the bits is always the least-significant bits of the significand. In single-precision mode the GRS extension bits are taken from s0, and in double-precision mode the bits are taken from s1. For conventional right shifts, the GRS extension bits always come from the least significant bits of the shift (i.e., sO if a single shift and s1 if a double shift). The instruction norml is the only instruction to shift bits out of the GRS extension; it will shift into s0 in single-precision mode and into s1 in double-precision mode. Conventional left shifts will always shift in zeros and do not affect the GRS extension bits.

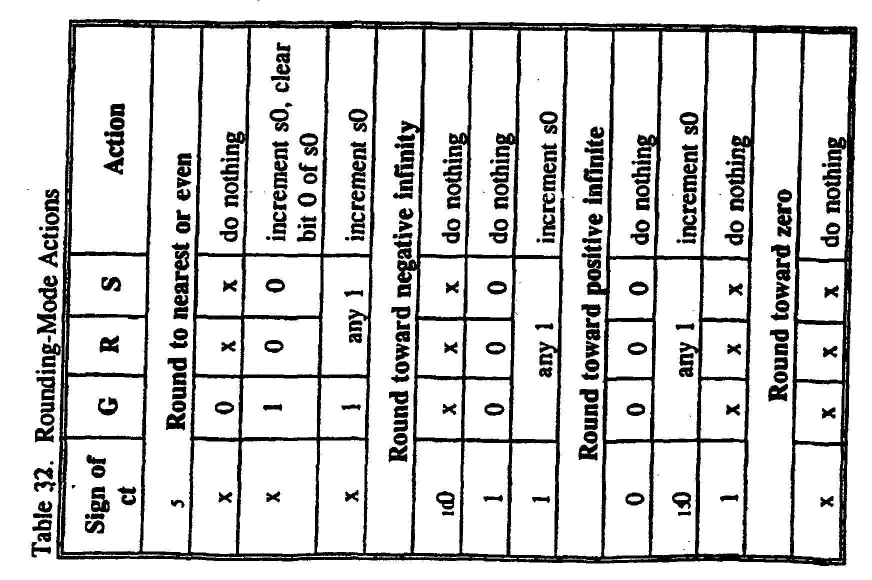

### Rounding

The GRS extension maintains three extra bits of precision while producing a floating-point result. These bits are used to decide how to round the result to fit the destination format. If one views the bits as if they were just to the right of the binary point, then guard_bit has a position value of one-half, round_bit has a positional value of one-quarter, and sticky_bit has a positional value of one-eighth. The rounding operation selected by fp_round_mode uses the GRS extension bits and the sign bit of ct to determine how rounding should occur. If guard_bit is zero the value of GRS extension is below one-half. If guard_bit is one the value of GRS extension is one-half or greater. Since the GRS extension bits are not part of the destination format they are discarded when the operation is complete. This information is the basis for the operation of the instruction rnd.

Most rounding adjustments by rnd involve doing nothing or incrementing s0. Whether this is rounding downn or rounding up depends on the sign of the loating-int result that in ct. If the GRS extension bits are non-zero, then doing nothing has the effect of "rounding down" if the result is positive, and "rounding up" if the result is negative. Similarly, incrementing the result has the effect of "rounding up" if the result is positive and "rounding down" if the result is negative. If the GRS extension bits are zero then the result was exact and rounding is not required. See Table 32.

In practice, the significand (or lower cell of the double-precision significand) is in s0, and the sign and exponent are in ct.carry is set if the increment from rnd carried out of bit 31 of s0; otherwise, carry is cleared. This allows carry to be propagated into the upper cell of a double-precision significand.

### Exceptions

To speed processing, exception conditions detected by the floating-point instructions set exception signaling bits in mode and, if enabled, trap. The following traps are supported:
- Exponent signaled from testexp
- Underflow signaled from norml, addexp, subexp
- Overflow signaled from normr, addexp, subexp
- Normalize signaled from denorm, norml, normr
- Rounded signaled from rnd

Exceptions are prioritized when the instruction completes and are processed with any other system exceptions or traps that occur concurrently. See Exceptions and Trapping.
- Exponent Trap: Detects special-case exponents. If the tested exponent is all zeros or all ones, carry is set and the exception is signaled. Setting carry allows testing the result without processing a trap.
- Underflow Trap: Detects exponents that have become too small due to calculations or decrementing while shifting.
- Overflow Trap: Detects exponents that have become too large due to calculations or incrementing while shifting. 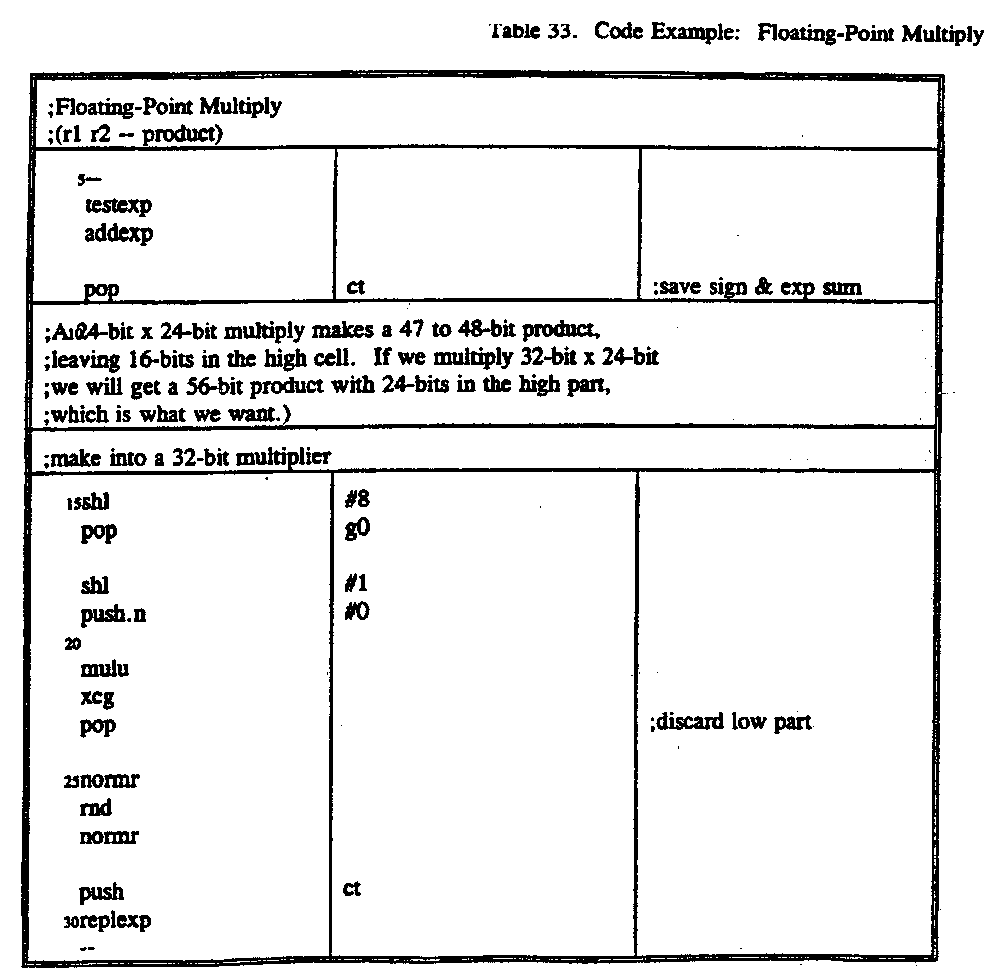
- Normalize Exception: Detects bits lost due to shifting into the GRS extension. The exception condition is tested at the end of instruction execution and is signaled if any of the bits in the GRS extension are set. Testing at this time allows normal right shifts to be used to set the GRS extension bits for later floating-point instructions to test and signal.
- Rounded Exception: Detects a change in bit zero of s0 due to rounding.

### HARDWARE DEBUGGING SUPPORT

The MPU 100 contains both a breakpoint instruction, bkpt, and a single-step instruction, step. The instruction bkpt executes the breakpoint trap and supplies the address of the bkpt opcode to the trap handler. This allows execution at full processor speed up to the breakpoint, and then execution in a program-controlled manner following the breakpoint, step executes the instruction at the supplied address, and then executes the single-step trap. The single-step trap can efficiently monitor execution on an instruction-by-instruction basis.

### Breakpoint

The instruction bkpt performs an operation similar to a call subroutine to address 0x134, except that the return address is the address of the bkpt opcode. This behavior is required because, due to the instruction push.1, the address of a call subroutine cannot always be determined from its return address.

Commonly, bkpt is used to temporarily replace an instruction in an application at a point of interest for debugging. The trap handler for bkpt will typically restore the original instruction, display information for the user, and wait for a command. Or, the trap handler could implement a conditional breakpoint by checking for a termination condition (such as a register value or the number of executions of this particular breakpoint), continuing execution of the application until the condition is met. The advantage of bkpt over step is that the applications executes at full speed between brealtpoints.

### Single-Step

The instruction step is used to execute an application program one instruction at a time. It acts much like a return from subroutine, except that after executing one instruction at the return address, a trap to address 0x138 occurs. The return address from the trap is the address of the next instruction. The trap handler for step will typically display information for the user, and wait for a command. Or, the trap handler could instead check for a termination condition (such as a register value or the number of executions of this particular location), continuing execution of the application until the condition is met.

step is processed and prioritized similarly to the other exception traps. This means that all traps will execute before the step trap. The result is that step cannot directly single-step through the program code of other trap handlers. The instruction step is normally considered to be below the operating-system level, thus operating-system functions such as stack-page traps must execute without its intervention.

Higher-priority trap handlers can be single-stepped by re-prioritizing them in software. Rather than directly executing a higher-priority trap handler from the corresponding executable trap vector, the vector would branch to code to rearrange the return addresses ont he return stack to change the resulting execution sequence of the trap handlers. Various housekeeping tasks must also be performed, and the various handlers must ensure that the stack memory area boundaries are not violated by the re-prioritized handlers.

### VIRTUAL-MEMORY SUPPORT

The MPU 100 supports virtual memory through the use of external mapping logic that translates logical to physical memory addresses. During MPU RAS memory cycles, the CPU-supplied logical row address is translated by an external SRAM to the physical row address and a memory page-fault bit. The memory page-fault bit is sampled during the memory cycle to determine if the translated page in memory is valid or invalid. Sufficient time exists in the normal RAS prechange porition of DRAM memory cycles to map the logical pages to physical pages with no memory-cycle-time overhead.

An invalid memory page indication causes the memory-fault exception to be signaled and, if enabled, the trap to be executed to service the fault condition. Posted-write faults are completed in the trap routine; other types of faulting operations are completed by returning from the trap routine to re-execute them. Whether the fault is from a read or write operation is indicated by mflt write. The fault address and data (if a write) are stored in mfltaddr and mfltdata. Memory-fault traps are enabled by mflt_trap_en. See the code example in Table 34.

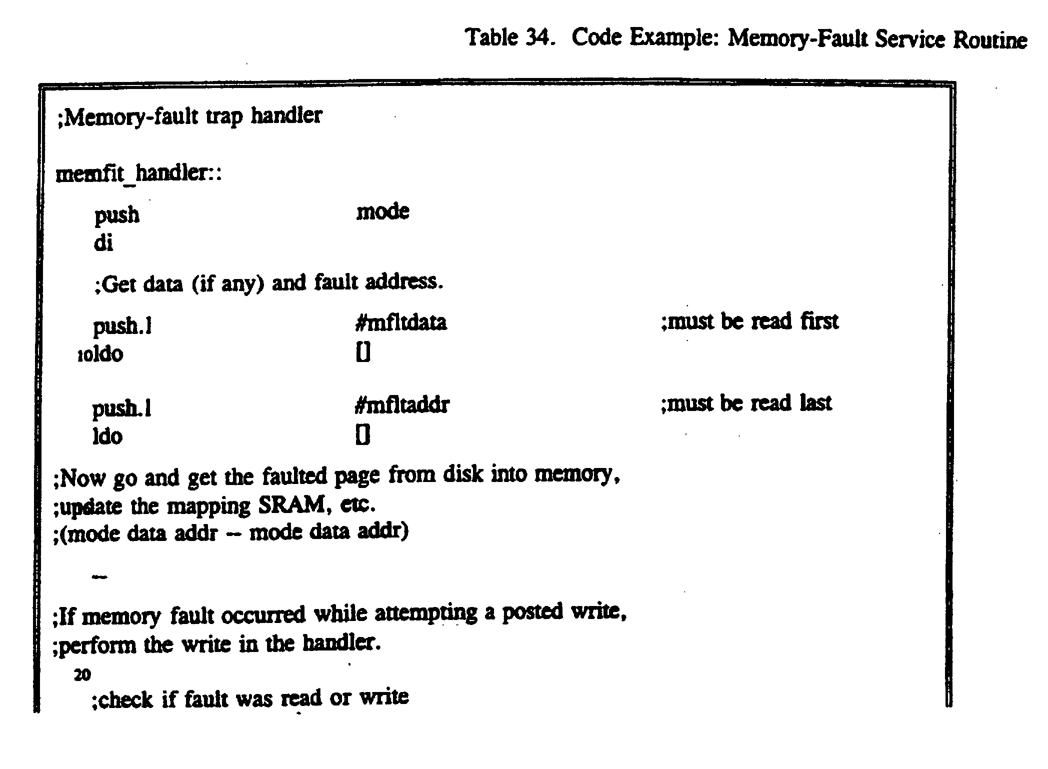

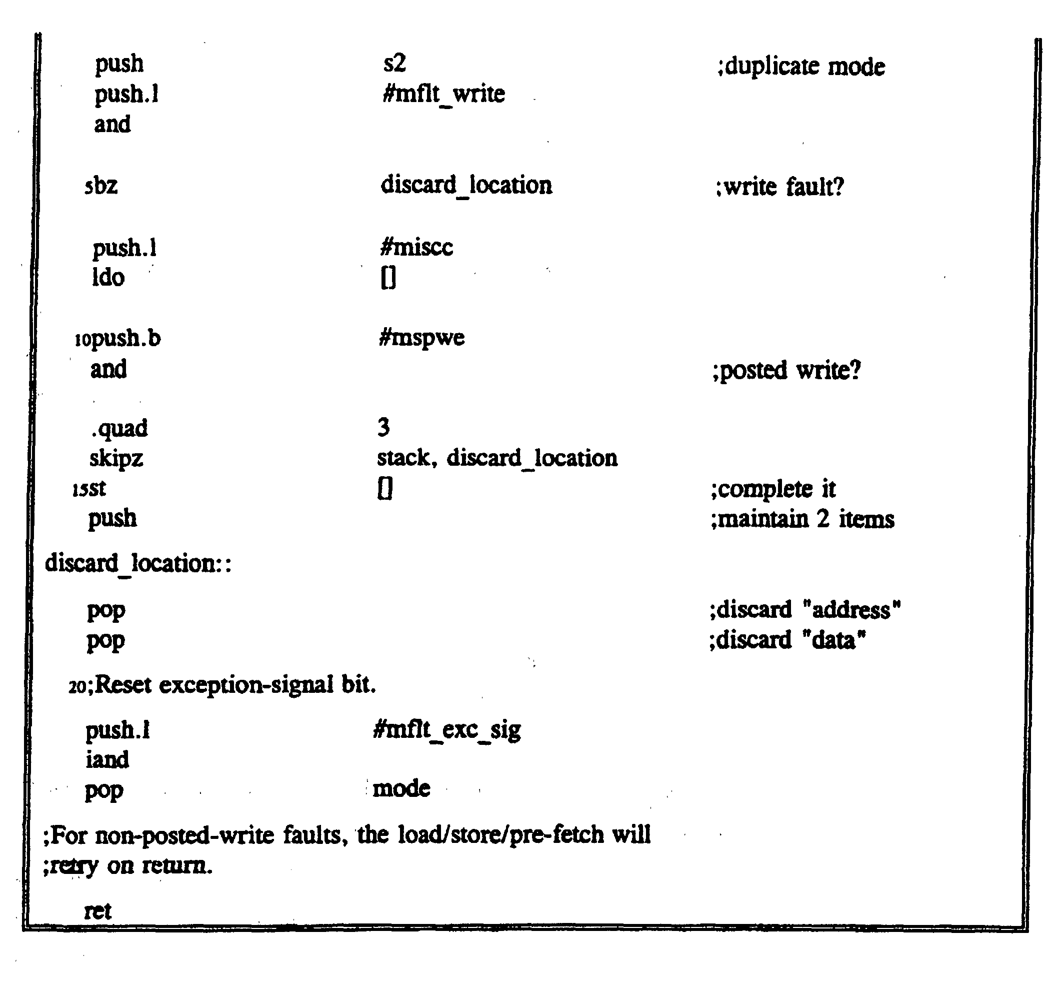

**Table 35.**

| VRAM Commands | | | | | |
|---|---|---|---|---|---|
| Some VRAM Commands | | | | | |
| | At falling edge of: | | | | |
| Description | $\overline{\text{RAS}}$ | | | | $\overline{\text{CAS}}$ |
| | $\overline{\text{CAS}}$ | $\overline{\text{OE}}$ | $\overline{\text{WE}}$ | DSF | DSF |
| RAM read/write | H | H | H | L | L |
| color register set | H | H | H | H | - |
| masked write | H | H | L | L | L |
| flash write | H | H | L | H | - |
| read transfer | H | L | H | L | - |
| split read transfer | H | L | H | H | - |
| block write | H | H | H | L | H |
| masked block write | H | H | L | L | H |
| set bit-bit mode | L | - | L | - | - |

### VIDEO RAM SUPPORT

Video RAM (VRAMs) are DRAMs that have a second port that provides serial access to the DRAM array. This allows video data to be serially clocked out of the memory to the display while normal MPU accesses occur to the DRAM array. To prevent DRAM array access contentions, the MPU periodically issues read transfer requests, which copy the selected DRAM row to the serial transfer buffer. To eliminate read transfer synchronization problems, many VRAMs have split transfer buffers, which allow greater timing flexibility for the MPU's read transfer operations. The MPU instructs the VRAM to perform a read transfer or a split read transfer by encoding the command on the state of the VRAM $\overline{\text{OE}}$, $\overline{\text{WE,}}$ and DSF (device special function) during the time $\overline{\text{RAS}}$ falls. These operations are encoded by writing vram and performing an appropriate read or write to the desired VRAM memory address. See Figure 27.

Some VRAMs have more advanced operations - such as line fills, block fills, and bit-bits - which are encoded with other combinations of $\overline{\text{WE}}$, $\overline{\text{OE}}$, DSF, $\overline{\text{RAS}}$, and $\overline{\text{CAS}}$. A basic set of operations and commands is common among manufacturers, but the commands for more advanced functions vary. The MPU supports all 32 combinations of possible encodings.

### mode Register

mode contains a variety of bits that indicate the status and execution options of the MPU. Except as noted, all bits are writable. The register is shown in Figure 7.

### mflt_write

After a memory-fault is signaled, indicates that the fault occurred due to a memory write.

### guard_bit

The most-significant bit of a 3-bit extension below the least-significant bit of s0 (s1, if fp_precision is set) that is used to aid in rounding floating-point numbers.

### round_bit

The middle bit of a 3-bit extension below the least-significant bit of s0 (s1, if fp_precision is set) that is used to aid in rounding floating-point numbers.

### sticky_bit

The least-significant of a 3-bit extension below the least-significant bit os s0 (s1, if fp_precision is set) that is used to aid in rounding floating-point numbers. Once set due to shifting or writing the bit directly, the bit stays set even though zero bits are shifted right through it, until it is explicity cleared or written to zero.

### mflt_trap_en

If set, enables memory-fault traps.

### mflt_exc_sig

Set if a memory fault is detected.

### ls_boundary

Set if ls_ovf_exc_sig or ls_unf_exc_sig becomes set as a result of a stack spill or refill. Cleared when the address in 1a, as the result of a stack spill or refill, has entered the middle region of a 1024-byte memory page. Used by the local-register stack trap logic to prevent unnecessary stack overflow and underflow traps when repeated local-register stack spills and refills occur near a 1024-byte memory page boundary. Not writable.

### ls_unf_trap_en

If set, enables a local-register stack underflow trap to occur after a local-register stack underflow exception is signaled.

### ls_unf_exc_sig

Set if a local-register stack refill occurs, ls_boundary is clear, and the accessed memory address is in the last thirty-two cells of a 1024-byte memory page.

### ls_ovf_trap_en

If set, enables a local-register stack overflow trap to occur after a local-register stack overflow exception is signaled.

### ls_unf_exc_sig

Set if a local-register stack refill occurs, ls_boundary is clear, and the accessed memory address is in the last thirty-two cells of a 1024-byte memory page.

### ls_ovf_trap_en

If set, enables a local-register stack overflow trap to occur after a local-register stack overflow exception is signaled.

### ls_ovf_exc_sig

Set if a local-register stack spill occurs, ls_boundary is clear, and the accessed memory address is in the first thirty-two cells of a 1024-byte memory page.

### os_boundary

Set if os_ovf_exc_sig or os_unf_exc_sig becomes set as the result of a stack spill or refill. Cleared when the address in sa, as the result of a stack spill or refill, has entered the middle region of a 1024-byte memory page. Used by the operand stack trap logic to prevent unnecessary stack overflow and underflow traps when repeated operand stack spills and refills occur near a 1024-byte memory page boundary. Not writable.

### os_unf_trap_en

If set. enables an operand stack underflow trap to occur after an operand stack underflow exception is signaled.

### os_unf_exc_sig

Set if an operand stack refill occurs, os_boundary is clear, and the accessed memory address is in the last thirty-two cells of a 1024-byte memory page.

### os_ovf_trap_en

If set, enables an operand stack overflow trap to occur after an operand stack overflow exception is signaled.

### os_ovf_exc_sig

Set if an operand stack spill occurs, os_boundary is clear, and the accessed memory address is in the first thirty-two cells of a 1024-byte memory page.

### carry

Contains the carry bit from the accumulator. Saving and restoring mode can be used to save and restore carry.

### power_fail

Set during power-up to indicate that a power failure has occurred. Cleared by any write to mode. Otherwise, not writable.

### interrupt_en

If set, interrupts are globally enabled. Set by the instruction ei, cleared by di.

### fp_rnd_exc_sig

If set, a previous execution of rnd caused a change in the least significant bit of s0 (s1, if fp_precision is set).

### fp_rnd_trap_en

If set, enables a floating-point round trap to occur after a floating-point round exception is signaled.

### fp_nrm_exc_sig

If set, one or more of the guard_bit, round_bit and sticky_bit were set after a previous execution of denorm, norml or normr.

### fp_nrm_trap_en

If set, enables a floating-point normalize trap to occur after a floating-point normalize exception is signaled.

### fp_ovf_exc_sig

If set, a previous execution of normr, addexp or subexp caused the exponent field to increase to or beyond all ones.

### fp_ovf_trap_en

If set, enables a floating-point overflow trap to occur after a floating-point overflow exception is signaled.

### fp_unf_exc_sig

If set, a previous execution of norml, addexp or subexp caused the exponent field to decrease to or beyond all zeros.

### fp_unf_trap_en

If set, enables a floating-point underflow trap to occur after a floating-point underflow exception is signaled.

### fp_exp_exc_sig

If set, a previous execution of testexp detected an exponent field containing all ones or all zeros.

### fp_exp_trap_en

If set, enables a floating-point exponent trap to occur after a floating-point exponent exception is signaled.

### fp_round_mode

Contains the type of rounding to be performed by the MPU instruction rnd.

### fp_precision

If clear, the floating-point instructions operate on stack values in IEEE single-precision (32-bit) format. If set, the floating-point instructions operate on stack values in IEEE double-precision (64-bit) format.

### MPU RESET

After reset, the IOP 110 begins executing at address 0x80000004, before the MPU begins execution. The IOP must be programmed to execute delay before the MPU can access the bus and begin execution. Once the IOP executes delay, the MPU begins executing at address 0x80000008. Details of various startup configurations are detailed in Processor Startup, below.

### INTERRUPTS

The CPU 100 contains an on-chip prioritized interrupt controller 114 that supports up to eight different interrupt levels from twenty-four interrupt sources. Interrupts can be received through the bit inputs, from I/O-channel transfers, from the IOP, or can be forced in software by writing to ioin. For complete details of interrupts and their servicing, see Interrupt Controller, below.

### BIT INPUTS

The CPU 100 contains eight general-purpose bit inputs 116 that are shared with the INTC 114 and DMAC 112 as requests for those services. The bits are taken from $\overline{\text{IN}}$[7:0], or if so configured, are sampled from AD[7:0] on the bus. Sampling from the bus can allow the use of smaller, less-expensive packages for the CPU; it can also reduce PWB area requirements through reuse of the AD bus rather than routing a separate bit-input bus. See Bit Inputs, below.

### BIT OUTPUTS

The CPU 100 contains eight general-purpose bit outputs 118 that can be written by the MPU 108 or IOP 110. The bits are output on $\overline{\text{OUT}}$[7:0] and are also available on AD[7:0] during $\overline{\text{RAS}}$ inactive. Taking the bits from the bus can allow the use of smaller, less-expensive packages for the CPU; it can also reduce PWB area requirements through reuse of the AD bus rather than routing a separate bit-output bus. See Bit Outputs, below.

### ON-CHIP RESOURCES

The non-MPU hardware features of the CPU 100 are generally accessed by the MPU 108 through a set of 41 registers 102 located in their own address space. Using a separate address space simplifies implementation, preserves opcodes, and prevents cluttering the normal memory address space with peripherals. Collectively known as On-Chip Resources, these registers 102 allow access to the bit inputs, bit outputs, INTC, DMAC, MIF, system configuration, and some functions of the IOP. These registers and their functions are referenced throughout this manual and are described in detail in On-Chip Resource Registers, below.

### INSTRUCTION REFERENCE

As a stack-based MPU architecture, the ShBoom MPU instructions have documentation requirements similar to stack based programming languages, such as American National Standards Institute (ANSI) standard Forth. Not surprisingly, many of the American National Standard (ANS) Forth core operations are instructions on the ShBoom MPU. As a result, the ANS Forth stack notation used for language documentation is useful for describing ShBoom MPU instructions. The basic notation adapted for the ShBoom MPU is:
(input_operands -- output_operands)
(L:input_operands -- output_operands)
where "--" indicates the execution of the instruction. "Input_operands" and "output_operands" are lists of values on the operand stack (the default) or local register stack (preceded by "L:"). These are similar, though not always identical, to the source and destination operands that can be represented within instruction mnemonics. The value held in the top-of-stack register (s0 or r0) is always on the right of the operand list with the values held in the higher ordinal registers appearing to the left (e.g., s2 s1 s0). The only items in the operand lists are those that are pertinent to the instruction; other values may exist under these on the stacks. All of the input_operands are considered to be popped off the stack, the operation performed, and the output_operands pushed on the stack. For example, a rotational expression:
n1 n2 -- n3
represents two inputs operands, n1 and n2, and one output operand, n3. For the instruction add, n1 (taken from s1) is added to n2 (taken from s0), and the result is n3 (left in s0). If the name of a value on the left of either diagram is the same as the name of a value on the right, then the value was required, but unchanged. The name represents the operand type. Numeric suffixes are added to indicate different or changed operands of the same type. The values may be bytes, integers, floating-point numbers, addresses, or any other type of a value that can be placed in a single 32-bit cell.

| | |
|---|---|
| addr | address |
| byte | character or byte (upper 24 bits zero) |
| r | real number (floating-point number) |
| flag | true/false flag (non-zero = true) |
| n | integer or 32 arbitrary bits |
| other text | integer or 32 arbitrary bits |

ANS Forth defines other operand types and operands that occupy more than one stack cell; those are not used here.

Note that typically all stack action is described by the notation and is not explicitly described in the text. If there are multiple possible outcomes then the outcome options are on separate lines and should be considered as individual cases. If other regions or memory variables are modified, then that effect is documented in the text.

Also on the stack diagram line is an indication of the effect on carry, if any, as well as the opcode and execution time in the right margin. A timing with an "m" indicates the specified number of required memory cycles. The timing of a memory cycle depends on and the programmed cycle time and whether a RAS or CAS cycle occurs.

See Appendix A for mneomic stacks code.

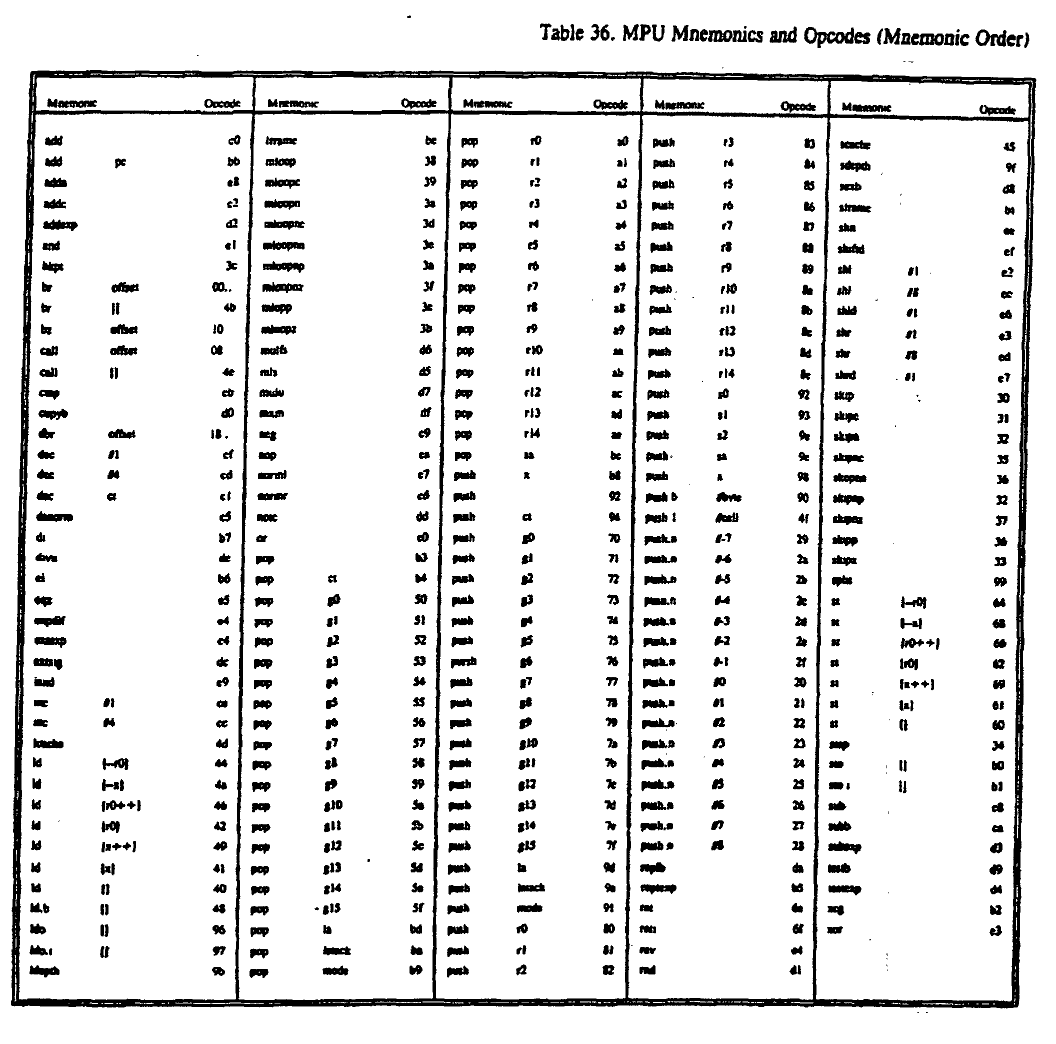

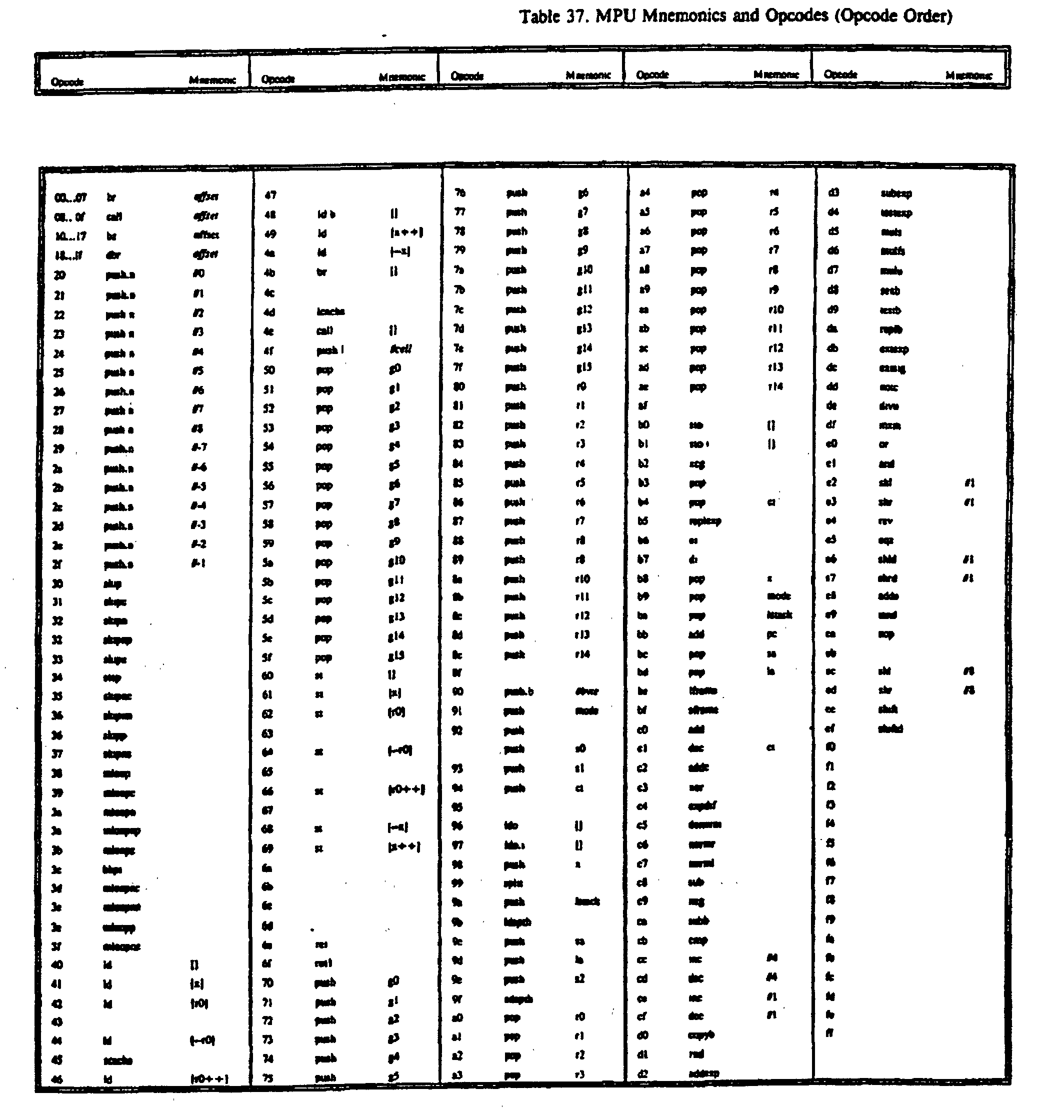

### INPUT-OUTPUT PROCESSOR

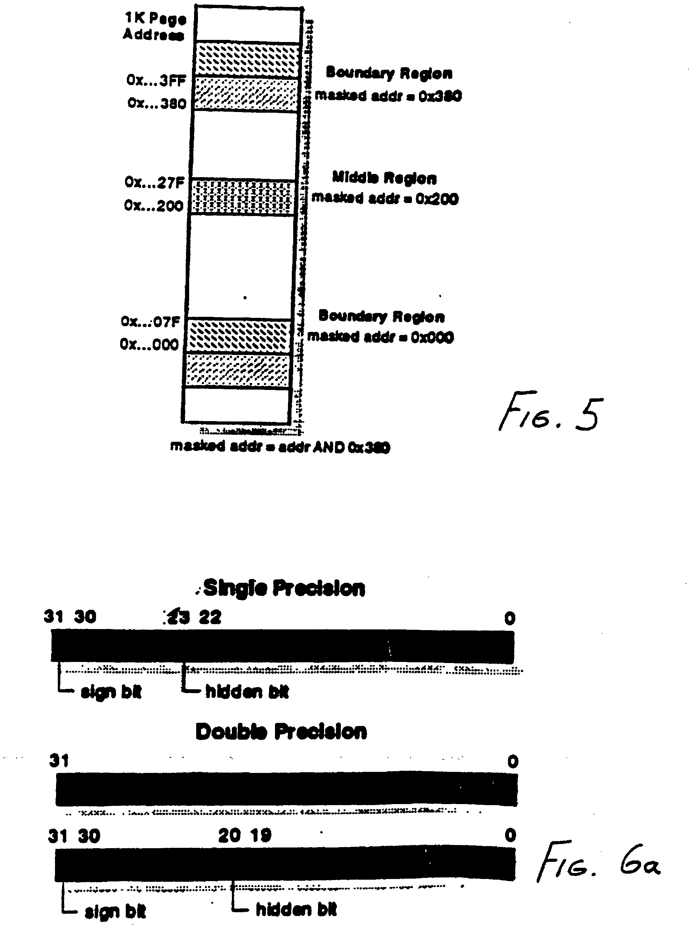

The Input-Output Processor (IOP) 110 (Figure 8) is a special-purpose processing unit that executes instructions to transfer data between device and memory, refresch dynamic memory, measure time, manipulate bit inputs and bit outputs, and perform system timing functions. IOP programs are usually written to be temporally deterministic. Because it can be difficult or impossible to write programs that contain conditional execution paths that execute in an efficient temporally deterministic manner, the IOP contains no computational and minimal decision-making ability. IOP programs are intended to be relatively simple, using interrupts to the MPU 108 to perform computation or decision making.

To ensure temporally deterministic execution, the IOP exercises absolute priority over bus access. Bus timing must always be deterministic; wait states are not even available on the ShBoom CPU 100. Temporal determinism is achieved by counting IOP execution and bus clock cycles between the timed IOP events. Bus access is granted to the IOP 110 unless it is executing delay, which allows MPU and DMA requests access to the bus during a specified time. Thus, when a memory access is needed, the IOP simply seizes the bus and performs the required operation at precisely the programmed instant.

The MIF 120 ensures that the bus will be available when the IOP 110 requires it. The MPU 108 and the DMAC 112 request the bus from the MIF 120, which prioritizes the requests and grants the bus while the IOP 110 is executing delay. The MIF 120 ensures that any transactions will be complete before the IOP next requires the bus.

When transferring data, the IOP 110 does not modify any data that is transferred; it only causes the bus transaction to occur at the programmed time. It performs time-synchronous I/O-channel transfers, as opposed to DMAC 112, which prioritizes and performs asynchronous I/O-channel transfers. Other than how they are initiated, the two types of transfers are identical.

### Usage

An IOP program can be used to eliminate an extensive amount of external logic and simply system designs. Further, by using the IOP 110 for timing dependent system and application operations, timing constraints on the MPU program can often be eliminated or greatly relaxed.

For example, an IOP program of about 150 bytes supplies the data transfers and timing for a video display. The program produces vertical and horizontal sync, and transfers data from DRAM to a video shift register or palette. Additionally, the IOP supplies flexibility. Video data from various areas of memory could be displayed, without requiring that the data be moved to create a contiguous frame buffer. As new data areas are specified, the IOP instructions are rewritten by the MPU 108 to change the program the IOP 110 will execute for the next video frame. While this is executing, the MPU still has access to the bus to execute instructions and process data, and the DMAC 112 still has access to the bus to transfer data.

Many other applications are possible. The IOP 110 is best used for applications that require data to be moved, or some other event to occur, at specific times. For example:
- sending digitized 16-bit data values to a pair of DACs to play CD-quality stereo sound,
- sampling data from input devices at specified time intervals for the MPU to later process,
- sending data and control signals to display images on an LCD display,
- transferring synchronous data blocks for an intelligent SCSI controller,
- sending multiple channels of data to DACs for a wave-table synthesizer,
- controlling video and I/O for serial and X-Windows video terminals or PC video accelerators,
- controlling timed events in process-control environments,
- controlling ignition and fuel for automotive engines, or
- combining several of the above applications to create a PC multimedia board.

The IOP 110 is designed to dictate access to the bus (to ensure temporally deterministic execution), but to be a slave to the MPU 108. The IOP can communicate status to the MPU by:
- the status changing on a device the IOP has accessed,
- loading a value in a global register,
- setting a bit output, or
- consuming a bit input.

The MPU 108 can control the IOP 110 by:
- rewriting IOP instructions in memory,
- modifying the global registers the IOP is using,
- clearing a bit input, or
- resetting the TOP.

The events controlled do not need to occur at a persistent, constant rate. The IOP is appropriate for applications whose event rates must be consistently controlled, whether once or many times. As an example of the former, the IOP can take audio data from memory and send it to a DAC to play the sound at a continuous rate, for as long as the audio clip lasts. As an example of the latter, the IOP 110 can be synchronized to the rotation of an automotive engine by the MPU 108 in order for the IOP to time fuel injection and ignition, with the synchronization constantly changed by the MPU (by changing global registers or rewriting the IOP program) as the MPU monitors engine performance.

### Resources

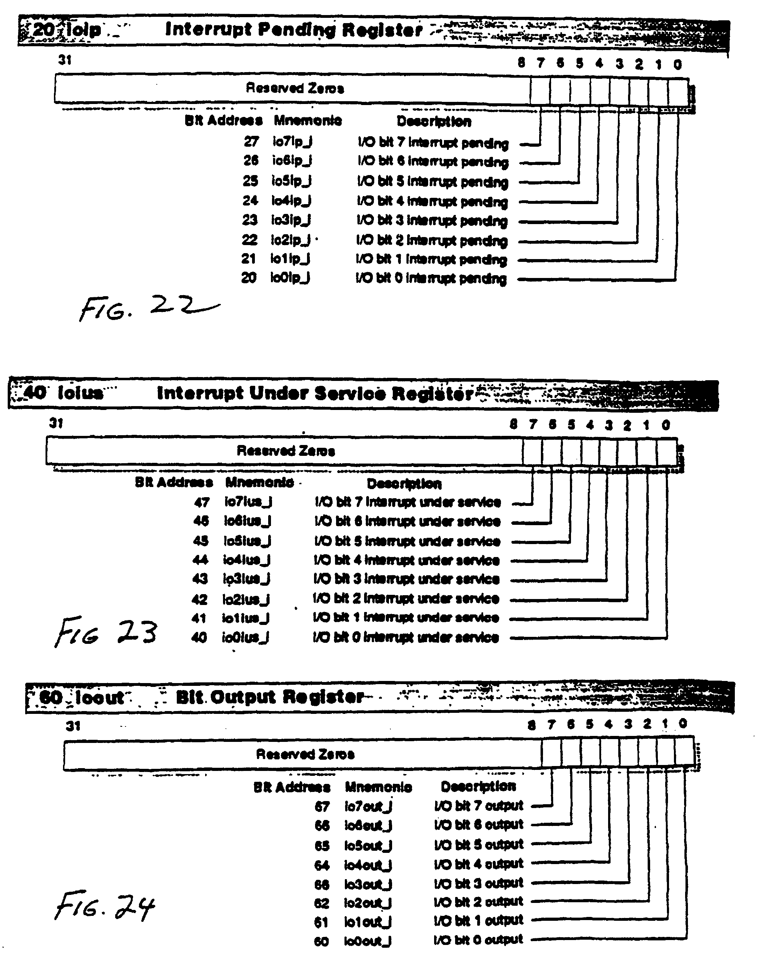

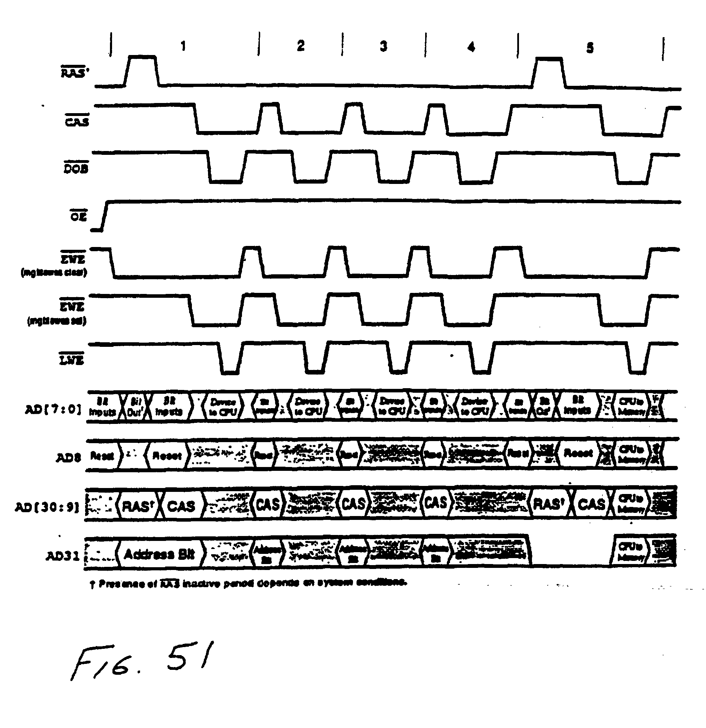

The IOP consists of instruction decode and execution processes, and control paths to other CPU resources, as shown in Figure 8. The IOP 110 and related registers include:
- Bit input register, ioin: bit inputs configured as DMA or interrupt requests, or general bit inputs. See Figure 21.
- Interrupt pending register, ioip: indicates which interrupts have been recognized but are waiting to be prioritized and serviced. See Figure 22.
- Bit output register, ioout: bits that were last written by either the MPU or the IOP. See Figure 24.
- IOP reset register, iopreset: writing any value causes the IOP to begin execution at the IOP software reset address. See Figure 46.
- Global registers g1 through g7: contain values used by delay.
- Global registers g8 through g15: contain loop counts or I/O-channel transfer specifications. Transfer specifications consist of device and memory transfer addresses and control bits. See Figure 12.

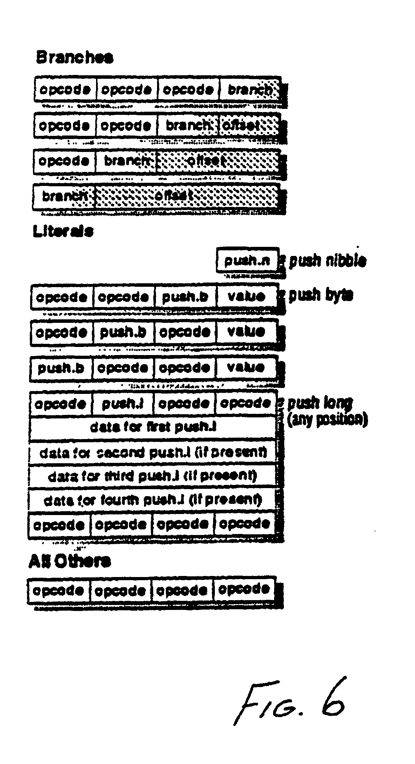

### Register Usage (Figure 9)

The IOP 110 shares global registers g1-g15 with the MPU 108, and uses them for loop counts, delay initialization counts, and transfer information. See Figure 9. Loop counts and delay counts are 32 bits. Transfer addresses in bits 31-2 typically address cells, but can also address bytes, depending on the I/O-channel configuration. Bit one determines whether the transfer is a memory write or a memory read, and bit zero enable interrupts on 1024-byte memory page boundary crossings (see Interrupts, below). See Figure 12.

The MPU can read or write any registers used by the IOP at any time. If there is a register-access contention between the MPU and the IOP, the MPU is held off until the IOP access is complete.

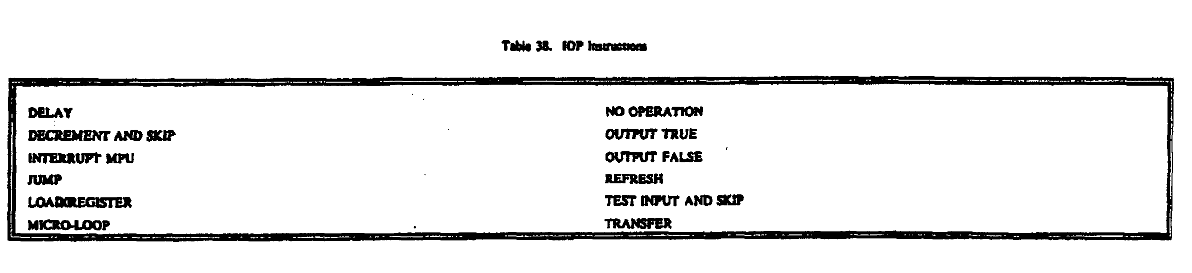

### Instruction Set

Table 38 lists the IOP instructions; Table 40 and Table 41 list the mnemonics and opcodes. Details of instruction execution are given in Instruction Reference, below.

### Instruction Formats

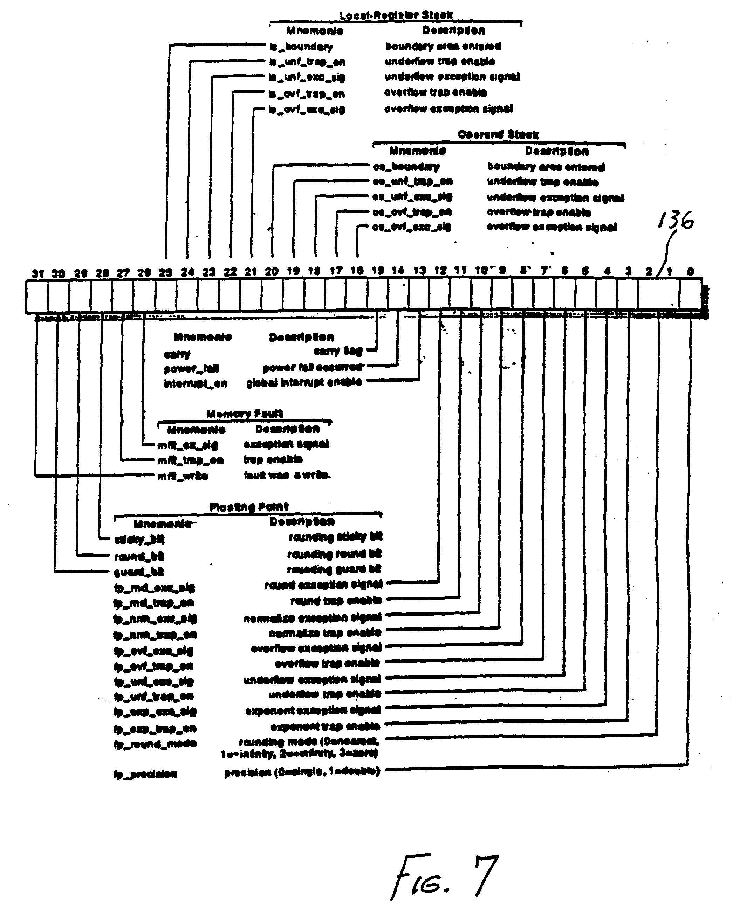

All instructions consist of eight bits except for 1d, which requires 32-bit immediate data, and jump, which requires a page-relative destination address. The use of eight-bit instructions allows up to four instructions (referred to as an instruction group) to be obtained on each instruction fetch, thus reducing memory-bandwidth requirements compared to typical 32-bit processors. This characteristic also allows looping on the instruction group (a micro-loop) without additional instruction fetches, further increasing efficiency. Instruction formats are depicted in Figure 10.

### Jumps

The instruction jump is variable-length. The jump opcode can occur in any position within the instruction group. The four least-significant bits in the opcode and all of the bits in the current instruction group to the right of the opcode are used for the page-relative destination address. See Figure 10. These destination addresses are cell-aligned to maximize the range of the destination address bits and the number of instructions that will be executed at the destination. The page-relative destination address is 4, 12, 20 or 28 bits long, depending on the location of the opcode within the current instruction group. The bits are used to replace the same cell-address bits within the next IOP pc. The next IOP pc is the cell address following the current instruction group, incremented for each 1d instruction that preceded the jump in the current instruction group. The destination address bits can reach any locations within the current 64-byte memory page, within the current 4KB memory page, within the current 1MB memory page, or within the current 256MB memory page, depending on the number of bits in the instruction. If the destination address bits are not of sufficient range for the jump to reach the destination, the jump must be moved to an instruction group where more destination address bits are available.

### Literals

The instruction 1d requires a total of 40 bits, eight bits for the opcode in the current instruction group, and 32 bits following the current instruction group for the literal data. The 1d opcode can occur in any position within the instruction group. The data for the first 1d in an instruction group immediately follows the instruction group in memory; the data for each subsequent 1d occupies successive locations. The four least-significant bits in the opcode contain the number of the global register that is the destination for the data. Global register zero (g0) is not allowed.

### Others

All other instructions require eight bits. Most have a register or bit number encoded in the three or four least-significant bits of the opcode. See Instruction Reference, below, for details on the other individual instructions.

### Execution Timing

Counting execution clock cycles is the key to programming the IOP. Each instruction requires execution time as described in Instruction Reference. In general, instructions require one 2X-clock cycle to execute plus the time for any delay or explicit or implicit bus transaction. Bus transaction times are as programmed and described in Programmable Memory Interface, below and Bus Operation, below.

Additionally, instruction fetch between the execution of instruction groups must be considered. There is no instruction pre-fetch in the IOP, so timing computation is simplified. When execution of the instructions in an instruction group has completed, instruction fetch begins. It requites one 2X-clock cycle for the bus request, plus the time for the bus transaction (including the slot check).

To ensure temporally deterministic execution, after the execution of delay or refresh, the first IOP access to each memory group will result in a RAS cycle, even if one is otherwise not required. RAS cycles will also occur for other reasons. See Table 49. Thus, the primary timing concerns are the memory addresses accessed (whether a RAS or CAS cycle will be implicitly required), and whether or not delay or refresh has been executed since the last access to a memory group. A code example of a typical refresh routine is given in Table 39.

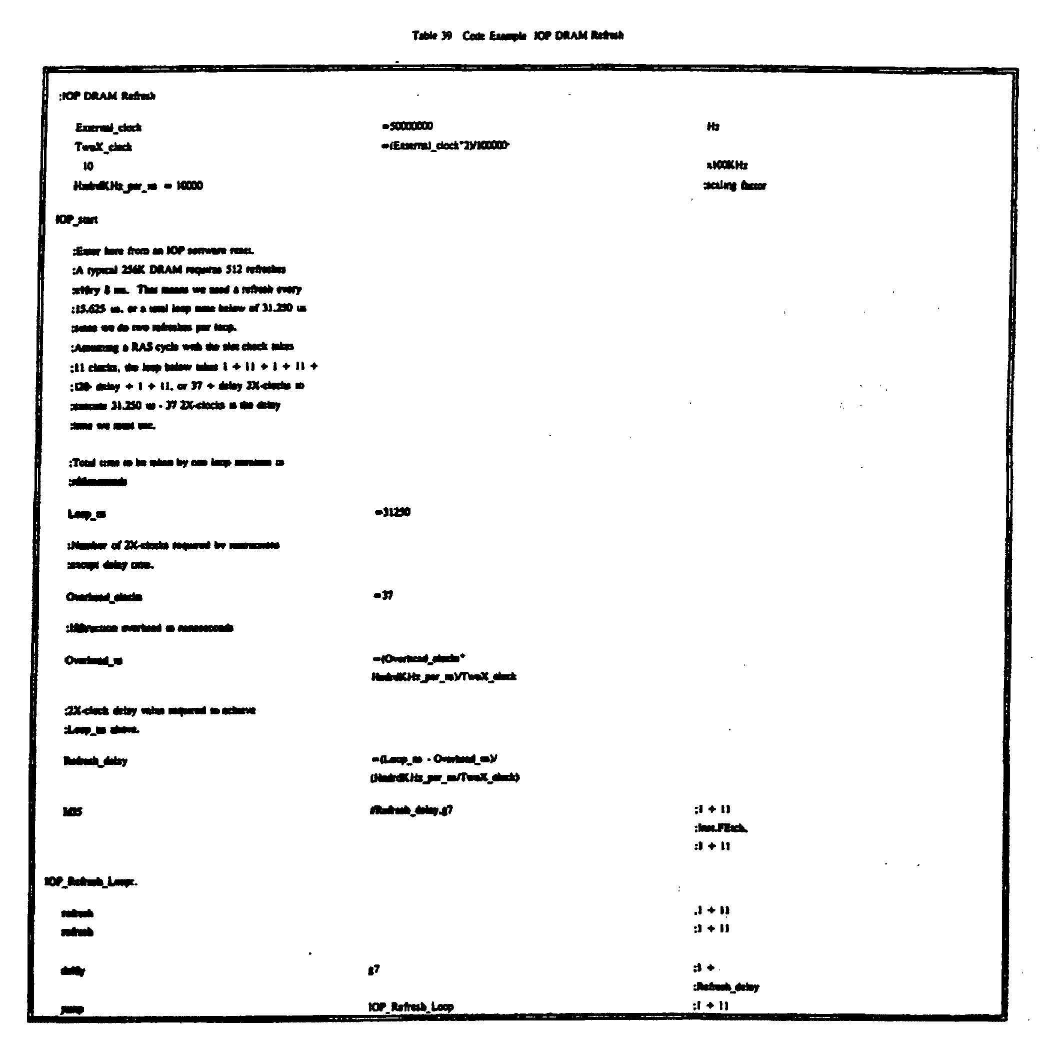

### Address Space, Memory and Device Addressing

The IOP 110 uses the same 32-bit address space as the MPU 108, but has it own program counter 154 and executes independently and concurrently. I/O devices addressed during the execution of xfer are within the same address space. xfer bus transactions are identical to I/O-channel bus transactions except for how they are initiated. See Direct Memory Access Controller, below.

### Interrupts

The IOP 110 can request any of the eight MPU interrupts by executing int. The IOP can also request an MPU interrupt by accessing the last location in a 1024-byte memory page during the execution of xfer. xfer transfer interrupts and I/O-channel transfer interrupts are identical. See Direct Memory Access Controller, below, for more information. The MPU 108 can respond to interrupt requests when the IOP 110 next executes delay.

### Bus Transactions

IOP 110 instruction-fetch bus transactions are identical to MPU 108 memory-read bus transactions, xfer bus transactions are identical to DMA bus transactions except for how they are intitiated. See Bus Operations, below.

### Bit Inputs and Bit Outputs

The bit inputs in ioin are accessed by the IOP 110 with tskipz. This instruction tests an input bit, consumes it, and conditionally skips the remainder of the instruction group. This allows for polled device transfers or complex device-transfer sequences rather than the simple asynchronous transfers available with the DMAC 112. See Bit Inputs, below. Note that since tskipz causes conditional execution, care must be taken when designating program code that contains tskipz if deterministic execution is expected.

The bit outputs in ioout can be individually set or cleared by the IOP 110 with outt and outf. They can be used to activate external events, generate synchronization pulses, etc. See Bit Outputs, below.

### IOP Hardware and Software Reset

After hardware reset, the IOP 110 begins executing an address 0x80000004, before the MPU 108 begins execution. The IOP can then perform the RAS cycles required to initialize DRAM, and begin a program loop to maintain DRAM refresh, before executing delay to allow the MPU to configure the system.

Once the MPU 108 has configured the system, the IOP 110 typically is required to begin execution of its application program code. The IOP power-on-reset address selects the boot memory device, usually because A31 is set and other high address bits are zero. To clear A31 and thus begin execution in non-boot memory, a software reset must be issued by the MPU. See Table 39. The software reset is the only way to clear A31. The software reset can also be used in other instances to cause the IOP to begin execution of a new program. See Processor Startup, below.

### Instruction Reference

The following text contains a description of each of the IOP instructions. In addition to a functional description, at the right margin is the instruction opcode and the number of 2X-cloc cycles required to execute.

See Appendix B for mnemonic codes.

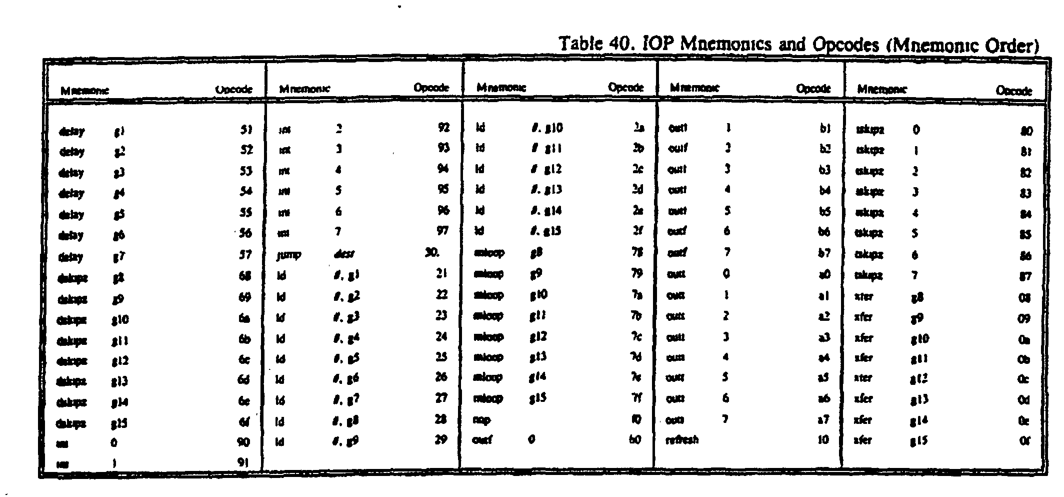

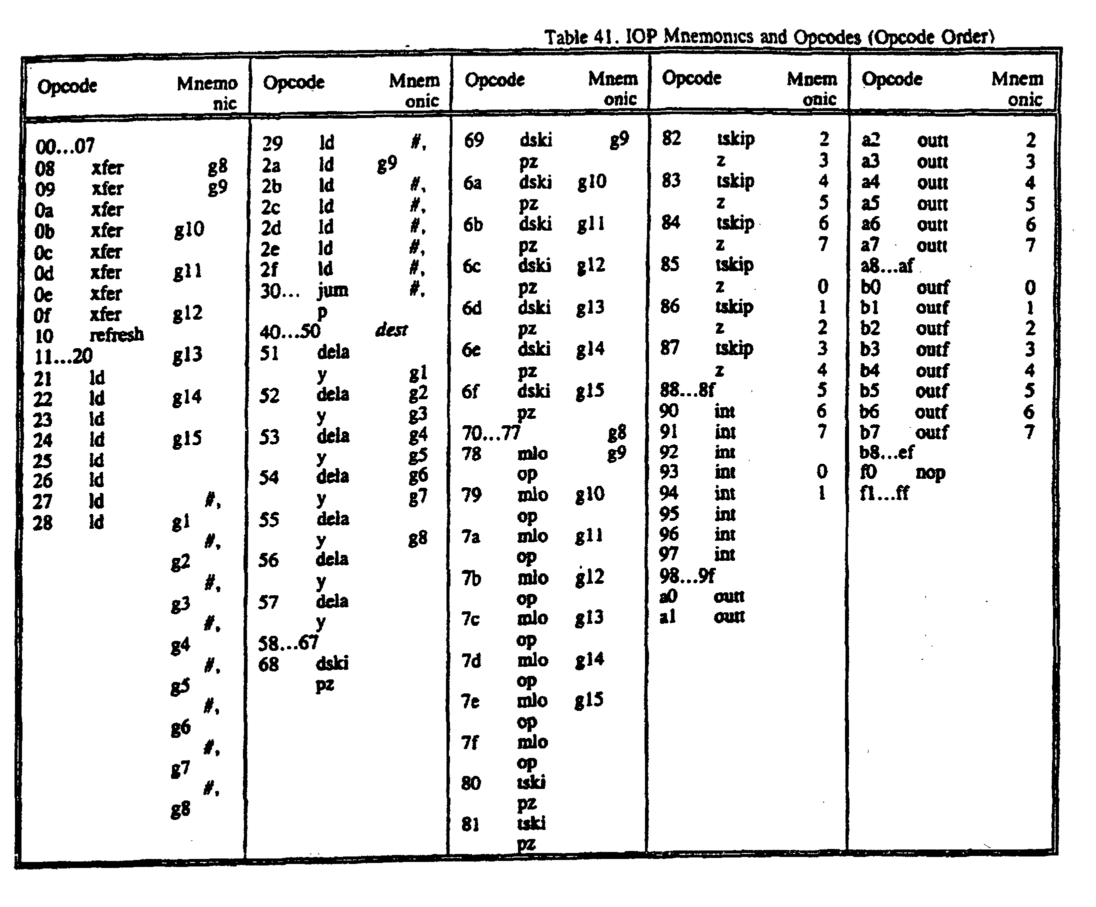

### DIRECT MEMORY ACCESS CONTROLLER

A Direct Memory Access Controller (DMAC) 112 (Figure 11) allows I/O devices to transfer data to and from system memory without the intervention of the MPU. The DMAC supports eight I/O channels prioritized from eight separate sources. Direct memory access (DMA) requests are received from the bit inputs through ioin. DMA and MPU bus request priorities are either fixed, which allows higher-priority requests to block lower-priority requests, or revolving, which prevents higher-priority requests that cannot be satisfied from blocking lower-priority requests.

DMA is supported for both cell-wide and byte-wide devices in both cell-wide and byte-wide memory. Each I/O channel can be individually configured as to the type of device and bus timing requirement. Byte-wide devices can be configured as either one-byte byte-transfer or four-byte byte-transfer devices. Transfers are flybys or are buffered, as required for the I/O-channel bus transaction. See Table 52. DMAC and IOP xfer transfers are identical except for how they are initiated. DMAC transfers occur from asynchronous requests whereas xfer transfers occur at their programmed time.

### Resources

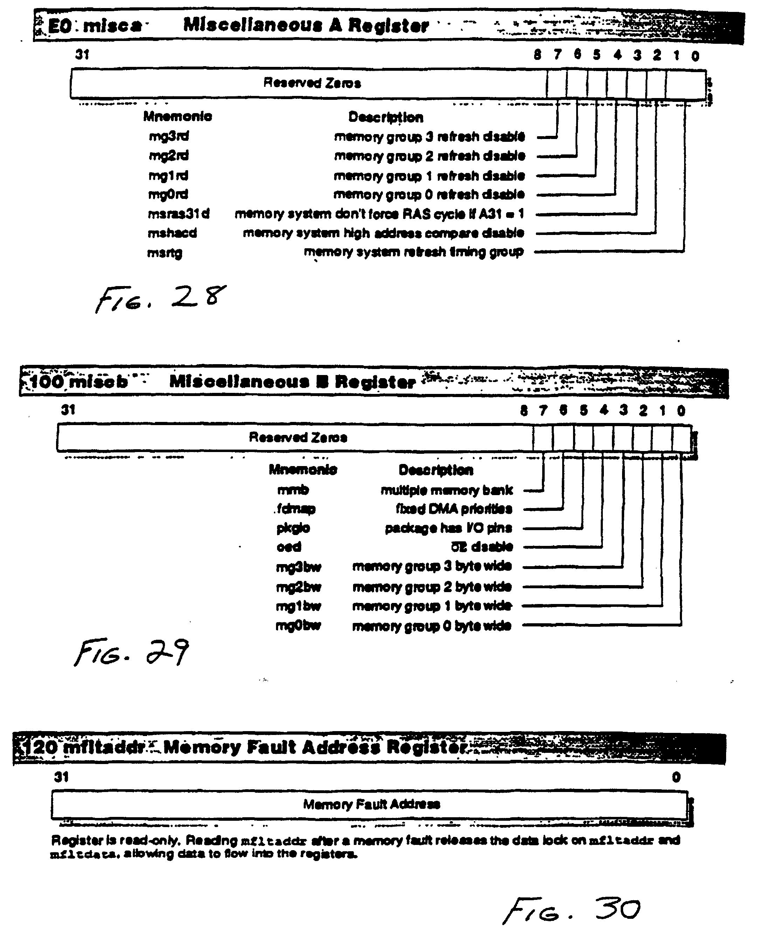

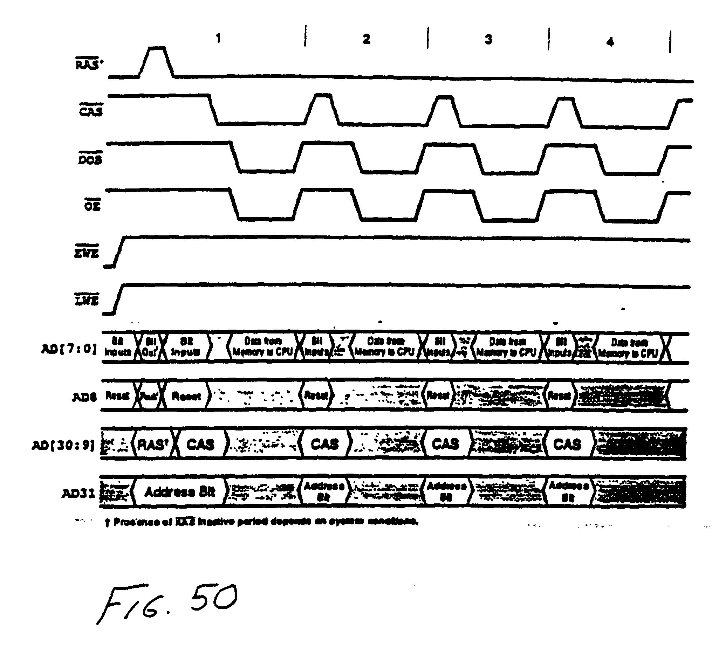

The DMAC consists of several registers and associated control logic. DMA request zero, which corresponds to bit zero of the registers, has the highest priority; DMA request seven, which corresponds to bit seven of the registers, has the lowest priority. The DMAC and related registers include:
- Bit input register, ioin: bit inputs configured as DMA or interrupt requests, or general bit inputs. See Figure 21.
- Interrupt enable register, ioie: indicates which ioin bits are to be recognized as interrupt requests. See Figure 25.
- DMA enable register, iodmae: indicates which ioin bits are to be recognized as DMA requests. If DMA is enabled on an ioin bit, interrupt enable by ioie on that bit is ignored. See Figure 26.
- DMA enable expiration register, iodmaex: indicates which iodmae bits will be cleared following a DMA transfer involving the last location in a 1024-byte memory page occurs on that channel. See Figure 44.
- Global registers g8 through g15: contain I/O-channel transfer specifications. Transfer specifications consist of device and memory transfer addresses and control bits. See Figure 12.
- Fixed DMA priorities bit, fdmap, in register miscellaneous B, miscb: prevents or allows lower-priority bus requests to contend for access to the buss if a higher-priority request cannot be satisfied (i.e., the available bus transaction slot is too small). See Figure 29.

### DMA Requests

An ioin bit is configured as a DMA request source when the corresponding iodmae bit is set and the corresponding ioie bit is clear (though ioie is ignored when iodmae is set). Once a zero reaches ioin, it is available to request a DMA I/O-channel transfer. See DMA Usage, below. A DMA request is forced in software by clearing the corresponding ioin bit. Individually disabling DMA operations on an I/O channel by clearing its iodmae bit prevents a corresponding zero bit in ioin from being recognized as a DMA request, but does not affect the zero-persistence of the corresponding bit in ioin.

### Prioritization

A DMA request is prioritized with other pending DMA requests, and, if the request has the highest priority or is the next request in revolving-priority sequence (see below), its corresponding I/O channel will be the next to request the bus. DMA request prioritization requires one 2X-clock cycle to complete. When the I/O channel bus request is made, the MIF 120 waits until the current bus transaction, if any, is almost complete. It then checks iopdelay to determine if the available bus slot is large enough for the required I/O channel bus transaction. If the bus slot is large enough, the bus is granted to the I/O channel, and the bus transaction begins.

The IOP always seizes the bus when iopdelay decrements to zero. Otherwise, a DMA I/O channel bus request and an MPU 108 bus request contend for the bus, with the DMA I/O channel bus request having higher priority.

If fdmap is set and the bus slot is too small, the DMA I/O channel does not get the bus. Until a higher-priority DMA I/O channel request is made that fits the shrinking available bus slot, no bus transactions occur until the IOP seizes the bus. When the IOP 110 next executes delay, the highest-priority DMA request, or the MPU 108 if there are no DMA requests, repeats the bus request process.

If fdmap is clear and the bus slot is too small, the DMA I/O channel does not get the bus. The next lower-priority bus request is then allowed to request the bus, with the MPU 108 as the lowest-priority request. The process repeats until the bus is granted or the IOP 110 seizes the bus. When the IOP 110 next executes delay, the highest-priority DMA request, or the MPU 108 if there are no DMA requests, repeats the bus request process.

### Memory and Device Addressing

Addresses used for I/O channel transfers contain both the I/O device address and the memory address. By convention, the uppermost address bits (when A31 is set) select I/O device addresses, while the lower address bits select the memory source/destination for the transfer. Multi-cycle transfer operations (e.g., transferring between a byte device and cell memory) assume A31 is part of the external I/O-device address decode and pass/clear A31 to select/deselect the I/O device as needed during the bus transaction. See I/O Addressing, below, and I/O-Channel Transfers, below.

1024-byte memory page boundaries have special significance to I/O channel transfers. When each I/O-channel bus transaction completes, bits 15-2 of the memory address in the global register are incremented. The new address is evaluated to determine if the last location in a 1024-byte memory page was just transferred (by detecting that bits 9-2 are now zero). When the last location in a 1024-byte memory page was just transferred, and MPU interrupt can be requested or DMA can be disabled. See Interrupts and Terminating DMA I/O-Channel Transfers, below.

### Interrupts

An MPU 108 interrupt can be requested after an I/O channel transfer accesses the last location in a 1024-byte memory page. The interrupt requested is the same as the I/O-channel number, and occurs if interrupts are enabled on that channel (i.e., if bit zero of the corresponding global register is set). See Figure 12, and Interrupt Controller, below. This allows, for example, the MPU to be notified that a transfer has completed (by aligning the end of a transfer memory area with the end of a 1024-byte memory page), or to inform the MPU of progress during long transfers.

Note that for the interrupt to be serviced, the MPU 108 must obtain the bus for sufficient time to execute the ISR. If the IOP 110 does not execute delay, or continuous DMA transfers occur, the MPU will be unable to get the bus.

### Bus Transaction Types

The type of bus transaction performed with an I/O device depends on whether the memory group involved is cell-wide or byte-wide and the whether the device is a one-byte byte-transfer, four-byte byte-transfer, or one-cell cell-transfer device. See I/O-Channel Transfers, below.

### Device Access Timing

Any I/O device accessed during an I/O-channel transfer must complete the transfer by the end of the programmed bus cycle. Wait states are not available. Since I/O devices generally have longer access times than memory, during an I/O-channel bus cycle the programmed bus timing for the accessed memory group is modified by substituting ioXebt for the corresponding value in mgXebt. Note that ioXebt must be adequate both for the I/O device and for any memory group involved in the transfer. See Programmable Memory Interface, below.

### Maximum Bandwidth Transfers

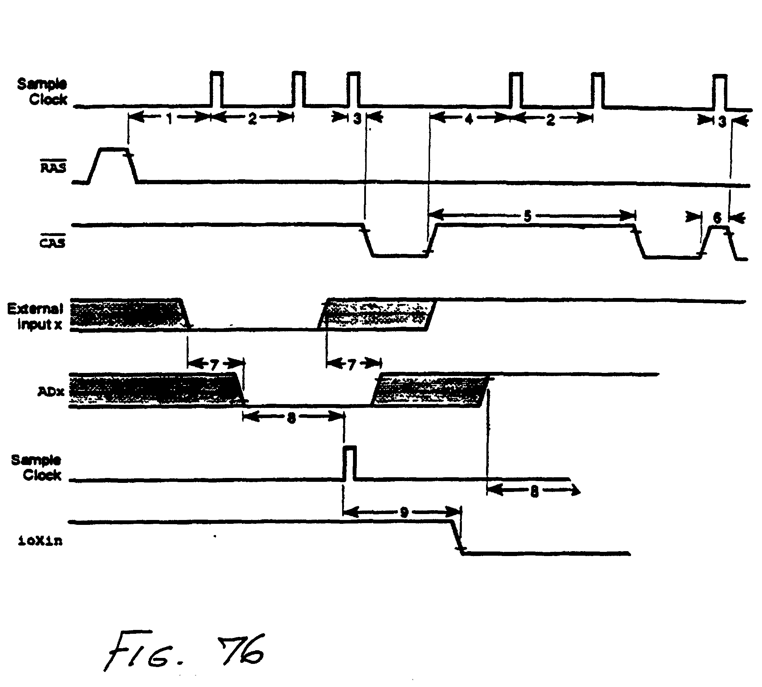

When the external input source for ioin is $\overline{\text{IN}}$[7:0], maximum-bandwidth, back-to-back DMA transfers are possible. To achieve this, at the end of the DMA bus transaction an internal circuit bypasses the input sampling circuitry to check the DMA request bit directly on $\overline{\text{IN}}$[7:0]; if the signal is low and no higher-priority requests are pending, another DMA bus request occurs immediately without the usual sampling and prioritization delays. This requires that the external DMA hardware ensure the bit is valid at this time. See Figure 76 78, page 192. If the remaining bus slot is large enough, the DMA bus request is granted, and the transfer starts immediately. To terminate back-to-back DMA bus transactions, the DMA request input must go high before the end of the current DMA bus transaction, or the corresponding DMA enable bit must be cleared. See Terminating DMA I/O-Channel Transfers, below. The maximum possible transfer rate is four bytes every two 2X-clock cycles. For example, with a 50-MHz 1X clock, the maximum transfer rate is 200 MB/second.

### Terminating DMA I/O-Channel Transfers

DMA I/O channel bus transactions occur on an I/O channel while DMA remains enabled and DMA requests are received. To limit DMA transfers to a specified number of transactions:
- program the DMA transfer address so that the last data transfer desired occurs using the last location in a 1024-byte memory page, and
- set the corresponding icdmaex bit.
   When the above transaction completes, the DMA enable bit in iodmae is cleared. If the transfer interrupt is enabled in the global register for the corresponding I/O channel, a corresponding MPU interrupt will also be requested.

If more than 1024 bytes are to be transferred, enable the transfer interrupt for the I/O channel in the corresponding global register. Program the interrupt service routine to check the global register for the next-to-last 1024-byte page, and, at that time, set the corresponding iodmaex bit. When the last location in the next 1024-byte page is transferred, the corresponding bit in iodmae will be cleared, disabling DMA on that channel. Note that this assumes the bus is available to the MPU to execute the ISR during the DMA transfers.

### Other Capabilities

The DMAC 112 can also be used to count events, and to interrupt the MPU 108 when a given count is reached. To do this, events are designed to produce a normal DMA memory read request, and the resulting transfer cycle increments the "address" in the corresponding global register. This "address" becomes the event counter. The MPU can also examine the register at any time to determine how many events have occurred. To interrupt the MPU after a given event count, program the global register for a negative count value within bits 9-2, and enable the page-boundary interrup. The MPU 108 will be interrupted when the counter reaches zero.

### INTERRUPT CONTROLLER

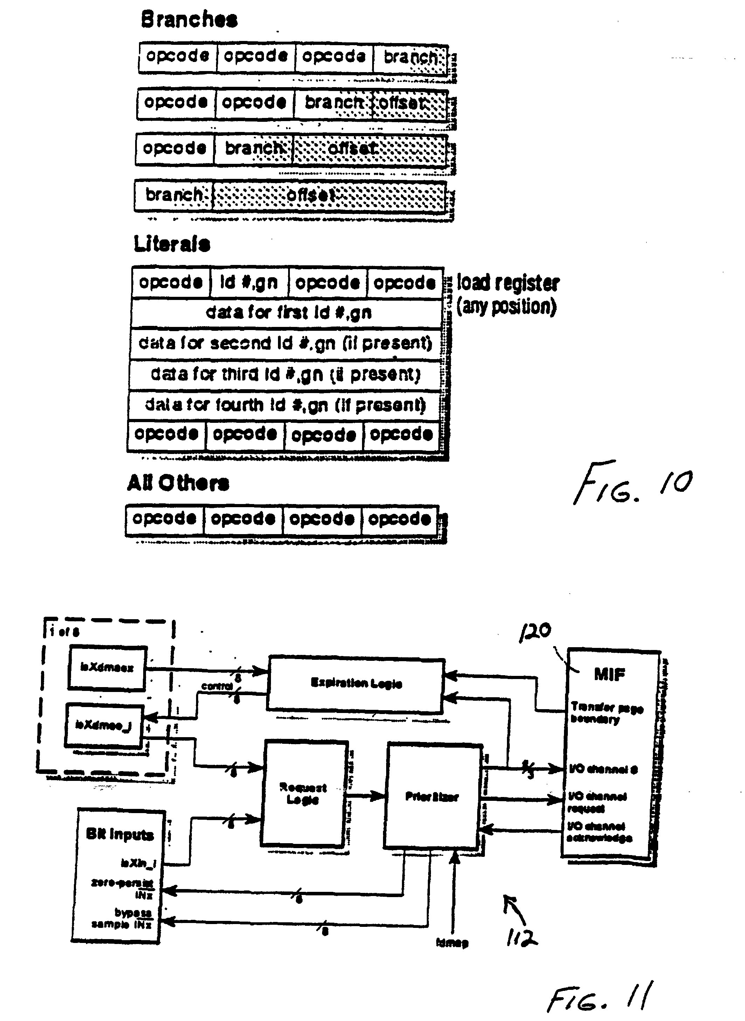

An interrupt controller (INTC) 114 (Figure 13) allows multiple external or internal requests to gain, in an orderly and prioritized manner, the attention of the MPU. The INTC supports up to eight prioritized interrupt requests from twenty-four sources. Interrupts are received from the bit inputs through ioin, from I/O-channel transfers, or from the IOP interrupt instruction int.

### Resources

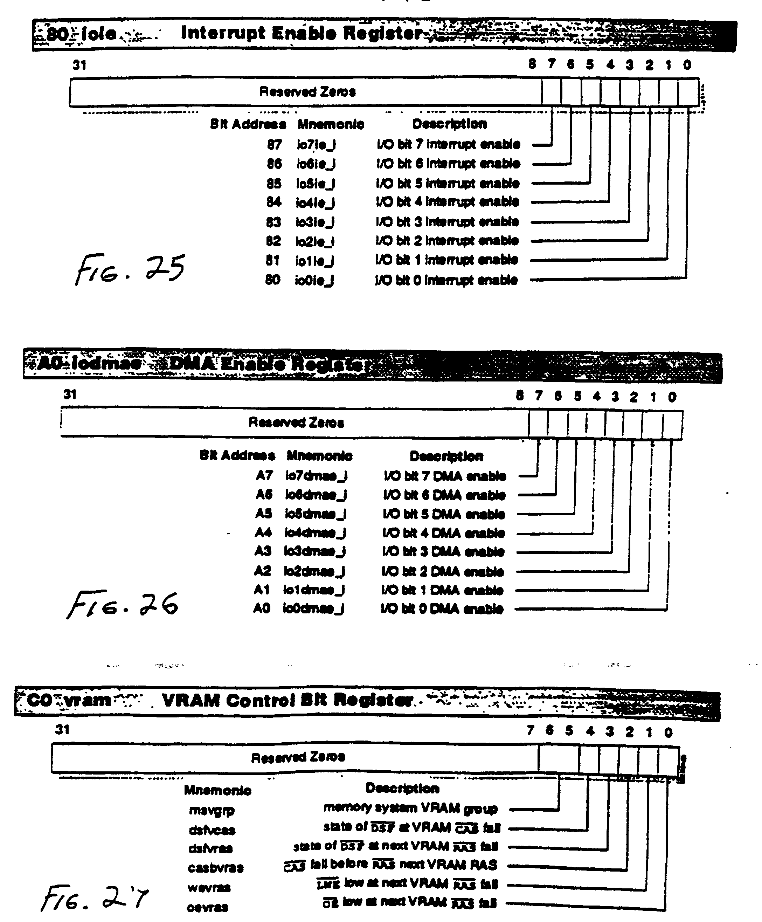

The INTC 114 consists of several registers and associated control logic. Interrupt zero, which corresponds to bit zero of the registers, has the highest priority; interrupt seven, which corresponds to bit seven of the registers, has the lowest priority. The INTC 114 and related registers include:
- Bit input register 116, ioin: bit inputs configured as DMA or interrupt requests, or general bit inputs. See Figure 21.
- Interrupt enable register 158, ioie: indicates which ioin bits are to be recognized as interrupt requests. See Figure 25.
- Interrupt pending register, ioip: indicates which interrupts have been recognized, but are waiting to be prioritized and serviced. See Figure 22.
- Interrupt under service register, ioius: indicates which interrupts are currently being serviced. See Figure 23.
- Global registers g8 through g15: contain I/O-channel transfer specifications. Transfer specifications consist of device and memory transfer addresses and control bits. Bit zero enables interrupts during I/O-channel transfers on the corresponding channel. See Figure 12.
- DMA enable register, iodmae: indicates which ioin bits are to be recognized as DMA requests. If DMA is enabled on an ioin bit, interrupt enable by ioie on that bit is ignored. See Figure 26.

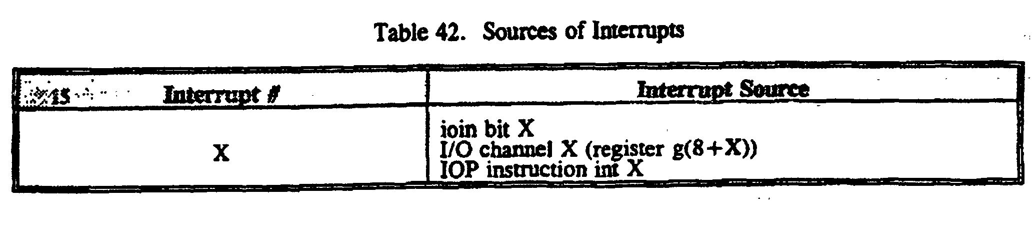

### Operation

Each interrupt request is shared by three sources. A request can arrive from a zero bit in ioin (typically from an external input low), from an I/O-channel transfer interrupt, or from the IOP instruction int. Interrupt request zero comes from ioin bit zero, I/O channel zero (using g8), or int 0; interrupt request one comes from ioin bit one, I/O channel one (using g9), or int 1; the other interrupt requests are similarly assigned. See Table 42. Application usage typically designates only one source for an interrupt request, though this is not required.

Associated with each of the eight interrupt requests is an interrupt service routine (ISR) executable-code vector located in external memory. See Figure 4. A single ISR executable-code vector for a given interrupt request is used for all requests on that interrupt. It is programmed to contain executable code, typically a branch to the ISR. When more than one source is possible, the current source might be determined by examining associated bits in ioin, ioie, iodmae and the global registers.

### Interrupt Request Servicing

When an interrupt request from any source occurs, the corresponding bit in ioip is set, and the interrupt request is now a pending interrupt. Pending interrupts are prioritized each 2X-clock cycle. The interrupt_en bit in mode holds the current global interrupt enable state. It can be set with the MPU enable-interrupt instruction, ei; cleared with the disable-interrupt instruction, di; or changed by modifying mode. Globally disabling interrupts allows all interrupt requests to reach ioip, but prevents the pending interrupts in ioip from being serviced.

When interrupts are enabled, interrupts are recognized by the MPU between instruction groups, just before the execution of the first instruction in the group. This allows short, atomic, uninterruptable instruction sequences to be written easily without having to save, restore, and manipulate the interrupt state. The stack architecture allows interrupt service routines to be executed without requiring registers to be explicitly saved, and the stack caches minimize the memory accesses required when making additional register resources available.

If interrupts are globally enabled and the highest-priority ioip bit has a higher priority than the highest-priority ioius bit, the highest-priority ioip bit is cleared, the corresponding ioius bit is set, and the MPU is interrupted just before the next execution of the first instruction in an instruction group. This nests the interrupt servicing, and the pending interrupt is now the current interrupt under service. The ioip bits are not considered for interrupt servicing while interrupts are globally disabled, or while none of the ioip bits has a higher priority than the highest-priority ioius bit.

Unless software modifies ioius, the current interrupt under service is represented by the highest-priority ioius bit currently set. reti is used at the end of ISRs to clear the highest-priority ioius bit that is set and to return to the interrupted program. If the interrupted program was a lower-priority interrupt service routine, this effectively "unnests" the interrupt servicing.

### External Interrupts

An ioin bit is configured as an interrup request source if the corresponding ioie bit is set and the corresponding iodmae bit is clear. Once a zero reaches ioin, it is available to request an interrupt. An interrupt request is forced in software by clearing the corresponding ioin bit or by setting the corresponding ioip bit. Individually disabling an interrupt request by clearing its ioie bit prevents a corresponding zero bit in ioin from being recognized as an interrupt request, but does not affect a corresponding interrupt request from another source.

While an interrupt request is being processed, until its ISR terminates by executing reti, the corresponding ioin but is not zero-persistent and follows the sampled level of the external input pin. Specifically, for a given interrupt request, while its ioin bit is not zero-persistent. This effect can be used to disable zero-persistent behavior on non-interrupting bits.

For waveforms, see Figure 75 and Figure 76.

### I/O-Channel Transfer Interrupts

If an ioin bit is configured as a DMA request, or if that I/O channel is used by xfer, interrupt requests occur after a transfer involving the last location in a 1024-byte memory page, provided bit zero in the corresponding global register is set (i.e., transfer interrupts are enabled). The request occurs by the corresponding ioip bit being set, and is thus not disabled by clearing the corresponding ioie bit. See Direct Memory Access Controller, above, and Input-Output Processor, above.

### IOP int Interrupts

The IOP can also directly request any of the eight available interrupts by executing int. The request occurs by the corresponding ioip bit being set, and is thus not disabled by clearing the corresponding ioie bit. The MPU will be able to respond to the interrupt request when the IOP next executes delay.

### ISR Processing

When an interrupt request is recognized by the MPU, a call to the corresponding ISR executable-code vector is performed, and interrupts are blocked until an instruction that begins in byte one of an instruction group is executed. To service an interrupt without being interrupted by a higher-priority interrupt:
- the ISR executable-code vector typically contains a four-byte branch, and
- the first instruction group of the interrupt service routine must globally disable interrupts. See the code example in Table 43.

If interrupts are left globally enabled during ISR processing, a higher-priority interrupt can interrupt the MPU during processing of the current ISR. This allows devices with more immediate servicing requirements to be serviced promptly even when frequent interrupts at many priority levels are occurring.

Note that there is a delay of one 2X-clock cycle between the execution of ei, di, or pop mode and the change in the global interrupt enable state taking effect. To ensure the global interrupt enable state change takes effect before byte zero of the next instruction group, the state-changing instruction must not be the last instruction in the current instruction group.

If the global interrupt enable state is to be changed by the ISR, the prior global interrupt enable state should be saved with push mode and restored with pop mode within the ISR. Usually a pop mode, reti sequence is placed in the same instruction group at the end of the ISR to ensure that reti is executed, and the local-register stack unnests, before another interrupt is serviced. Since the return address from an ISR is always to byte zero of an instruction group (because of the way interrupts are recognized), another interrupt can be serviced immediately after execution of reti. See the code example in Table 43.

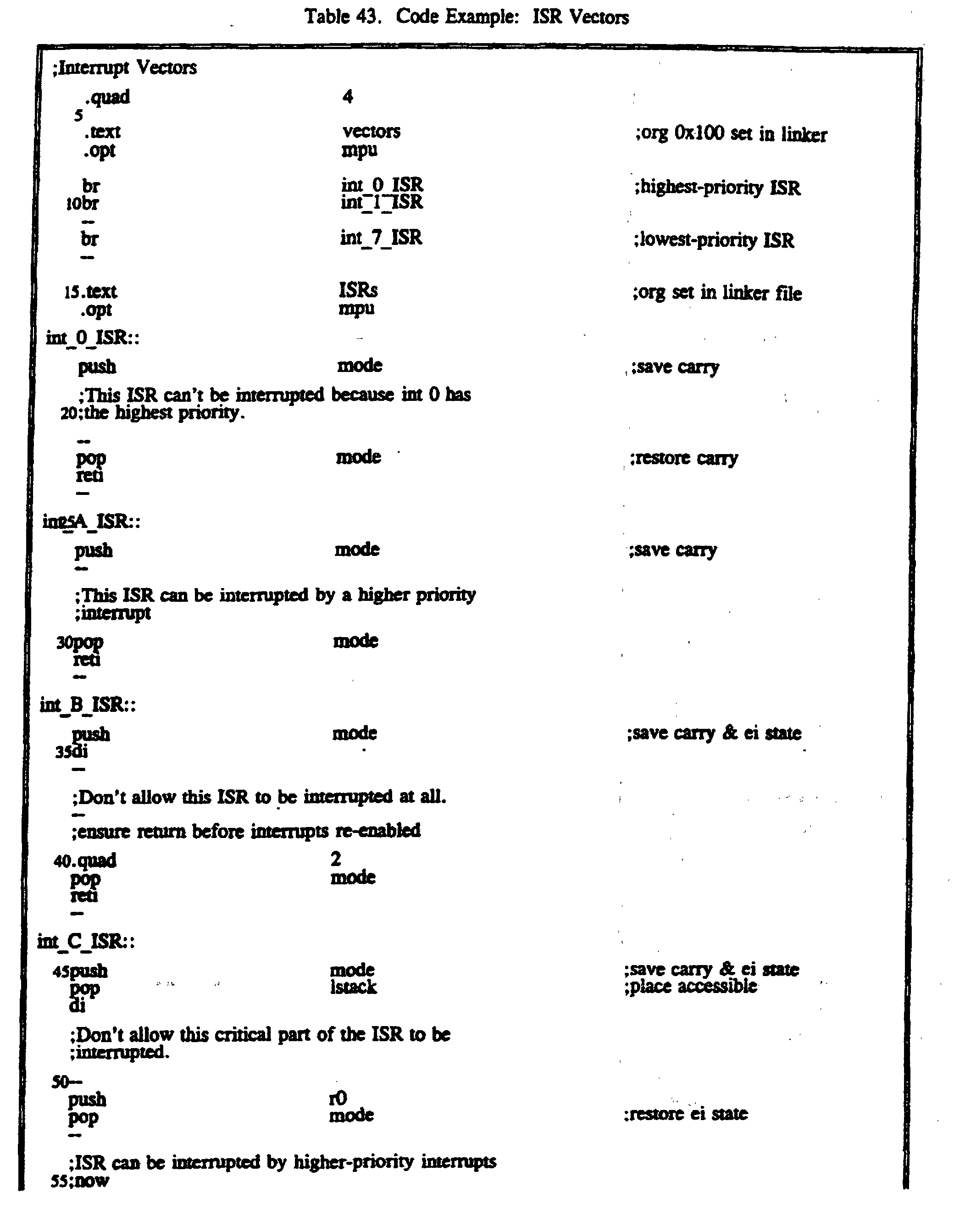

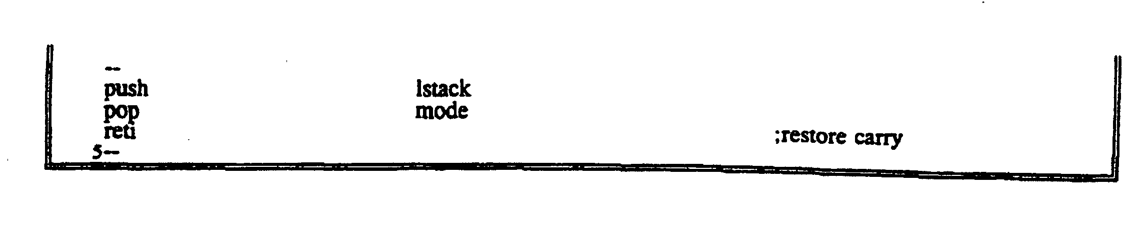

As described above for processing ISR executable-code vectors, interrupt requests are similarly blocked during the execution of all traps. This allows software to prevent, for example, further data from being pushed on the local-register stack due to interrupts during the servicing of a local-register stack-overflow exception. When resolving concurrent trap and interrupt requests, interrupts have the lowest priority.

### BIT INPUTS

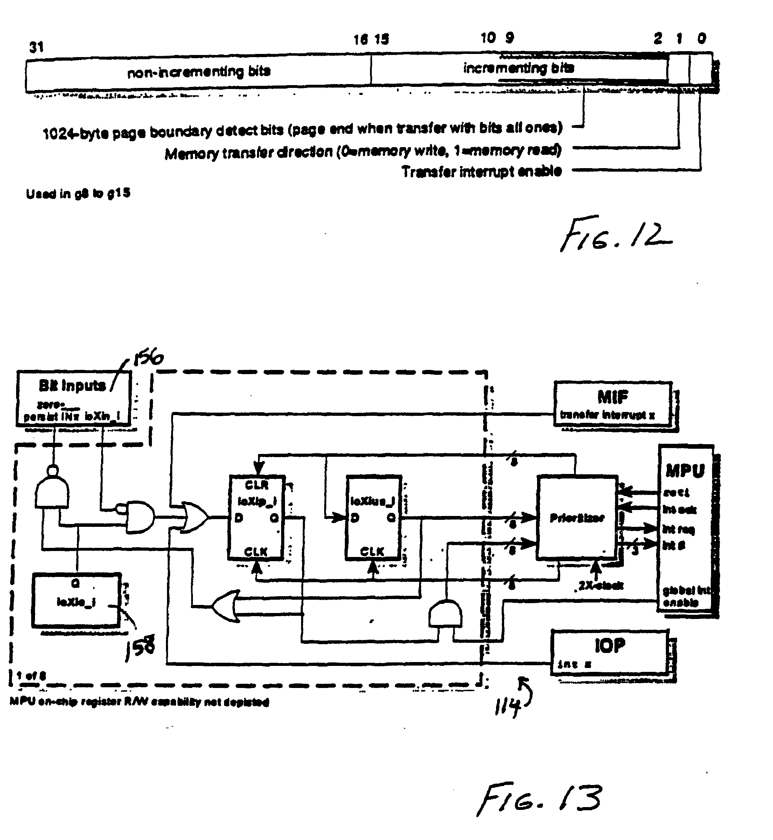

Eight external bit inputs are available in bit input register 116 ioin (Figure 14). They are shared for use as interrupt requests, as DMA request, as input to the IOP instruction tskipz, and as bit inputs for general use by the MPU. They are sampled externally from one of two sources determined by the state of pkgio.

### Resources

The bit inputs consist of several registers, package pins, and associated input sampling circuitry. These resources include:
- Bit input register 116, ioin: bit inputs configured as DMA or interrupt requests, or general bit inputs. See Figure 21.
- Interrupt enable register, ioie: indicates which ioin bits are to be recognized as interrupt requests. See Figure 25.
- Interrupt pending register, ioip: indicates which interrupts have been recognized, but are waiting to be prioritized and serviced. See Figure 22.
- Interrupt under service register, ioius: indicates which interrupts are currently being serviced. See Figure 23.
- DMA enable register, iodmae: indicates which ioin bits are to be recognized as DMA requests for the corresponding I/O channels. If DMA is enabled on an ioin bit, interrupt enable by ioie on that bit is ignored. See Figure 26.
- Package I/O pins bit, pkgio, in register miscellaneous B, miscb: selects whether the bit inputs are sampled from the dedicated inputs IN[7:0] or multiplexed off AD[7:0]. See Figure 29.

### Input Sources and Sampling

If pkgio is clear, the bit inputs are sampled form AD[7:0] while $\overline{\text{RAS}}$ is low and $\overline{\text{CAS}}$ is high. External hardware must place the bit inputs on AD[7:0] and remove them at the appropriate time. Using AD[7:0] for bit inputs can reduce PWB area and cost compared with using $\overline{\text{IN}}$[7:0]. AD[7:0] are sampled for input:
- while $\overline{\text{CAS}}$ is high, four 2X-clock cycles after $\overline{\text{RAS}}$ transitions low,
- every four 2X-clock cycles while $\overline{\text{CAS}}$ remains high,
- immediately before $\overline{\text{CAS}}$ transitions low if at least four 2X-clock cycles have elapsed since the last sample, and
- four 2X-clock cycles after $\overline{\text{CAS}}$ transitions high, provided $\overline{\text{CAS}}$ is still high.
This ensures:
- time for external hardware to place data on the bus before sampling,
- continuous sampling while $\overline{\text{CAS}}$ is high, and
- at least one sample every $\overline{\text{CAS}}$ bus cycle when four 2X-clocks have elapsed since the last sample.
To ensure sampling in a given state, an input bit must be valid at the designated sample times or remain low for a worst-case sample interval, which, as described above, depends on the programmed bus timing and activity. See Figure 79 81, page 196, for waveforms.

If pkgio is set, the bit inputs are sampled from $\overline{\text{IN}}$[7:0] every four 2X-clock cycles. To ensure sampling in a given state, a bit input must be valid for just more than four 2X-clock cycles. See Figure 78 80, page 194, for waveforms.

All asynchronously sampled signals are susceptible to metastable conditions. To reduce the possibility of metastable conditions resulting from the sampling of the bit inputs, they are held for four 2X-clock cycles to resolve to a valid logic level before being made available to ioin and thus for use within the CPU. The worst-case sampling delay for bit inputs taken from AD[7:0] to reach ioin depends on the bus cycle times. The worst-case sampling delay for bit inputs from $\overline{\text{IN}}$[7:0] to reach ioin is eight 2X-clock cycles. The sample delay causes bit-input consumers not to detect an external signal change for the specified period.

The bit inputs reaching ioin are normally zero-persistent. That is, once an ioin bit is zero, it stays zero regardless of the bit state at subsequent samplings until the bit is "consumed" and released, or is written with a one by the MPU. Zero-persistent bits have the advantage of both edge-sensitive and level-sensitive inputs, without the noise susceptibility and non-shareability of edge-sensitive inputs. Under certain conditions during DMA request servicing and ioin interrupt servicing, the ioin bits are not zero-persistent. See DMA Usage and Interrupt Usage below. An effect of the INTC can be used to disable zero-persistent behavior on the bits. See General-Purpose Bits below.

### DMA Usage

An ioin bit is configured as a DMA request source when its corresponding iodmae bit is set. After the DMA bus transaction begins, the ioin bit is consumed.

When the external input source for ioin is $\overline{\text{IN}}$[7:0], maximum-bandwidth back-to-back DMA transfers are possible. To achieve this, an internal circuit bypasses the sampling and zero-persistence circuitry to check the DMA request bit on $\overline{\text{IN}}$[7:0] at the end of the DMA bus transaction without the usual sampling and prioritizing delays. See Maximum Bandwidth Transfers, above.

### Interrupt Usage

An ioin bit is configured as an interrupt request source when the corresponding ioie bit is set and the corresponding iodmae bit is clear. While an interrupt request is being processed, until its ISR terminates by executing reti, corresponding ioin bit is not zero-persistent and follows the sampled level of the external input. Specifically, for a given interrupt request, while its ioie bit is set, and its ioip bit or ioius bit is set, its ioin bit is not zero-persistent. This effect can be used to disable zero-persistent behavior on non-interrupting bits (see below).

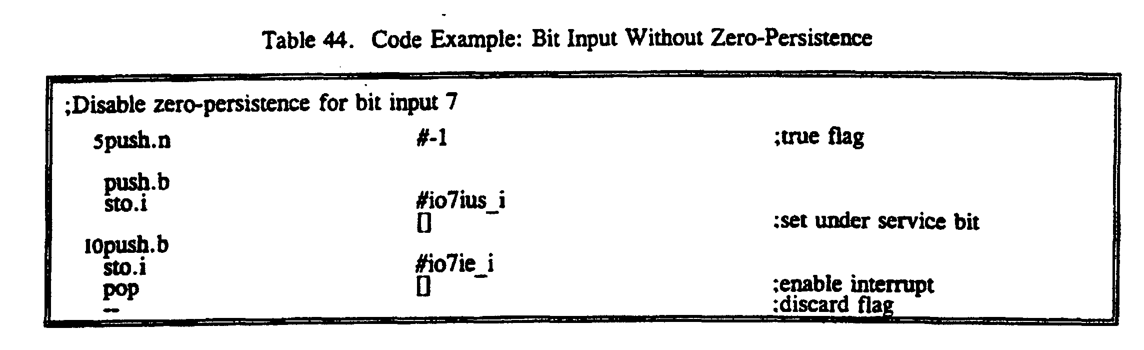

### General-Purpose Bits

If an ioin bit is configured neither for interrupt requests nor for the DMA requests. then it is a zero-persistent general-purpose ioin bit. Alternatively, by using an effect of the INTC, general-purpose ioin bits can be configured with zero-persistence. Any bits so configured should be the lowest-priority ioin bits in order to prevent blocking a lower-priority interrupt. They are configured by setting their ioie and ioius bits. The ioius bit prevents the ioin bit from zero-persisting and from being prioritized and causing an interrupt request. See the code example in Table 44.

### IOP Usage

An ioin bit can be used as input to tskipz. This instruction reads, tests, and consumes the bit. The ioin bits cannot be written by the IOP 110. General-purpose ioin bits are typically used for tskipz, but there are no hardware restrictions on usage.

### MPU Usage

Bits in ioin are read and written by the MPU 108 as a group with Ido [ioin] and sto [ioin], or are read an written individually with ldo.i [ioXin_i] and sto.i [ioXin_i]. Writing zero bits to ioin has the same effect as though the external bit inputs bad transitioned low for one sampling cycle, except that there is no sampling delay. This allows software to simulate events such as external interrupt or DMA requests. Writing one bits to ioin, unlike data from external inputs when the bits are zero-persistent, releases persisting zeros to accept the current sample. The written data is available immediately after the write completes. The MPU can read ioin at any time, without regard to the designations of the ioin bits, and with no effect on the state of the bits. The MPU does not consume the state of ioin bits during reads. See the code examples in Table 45.

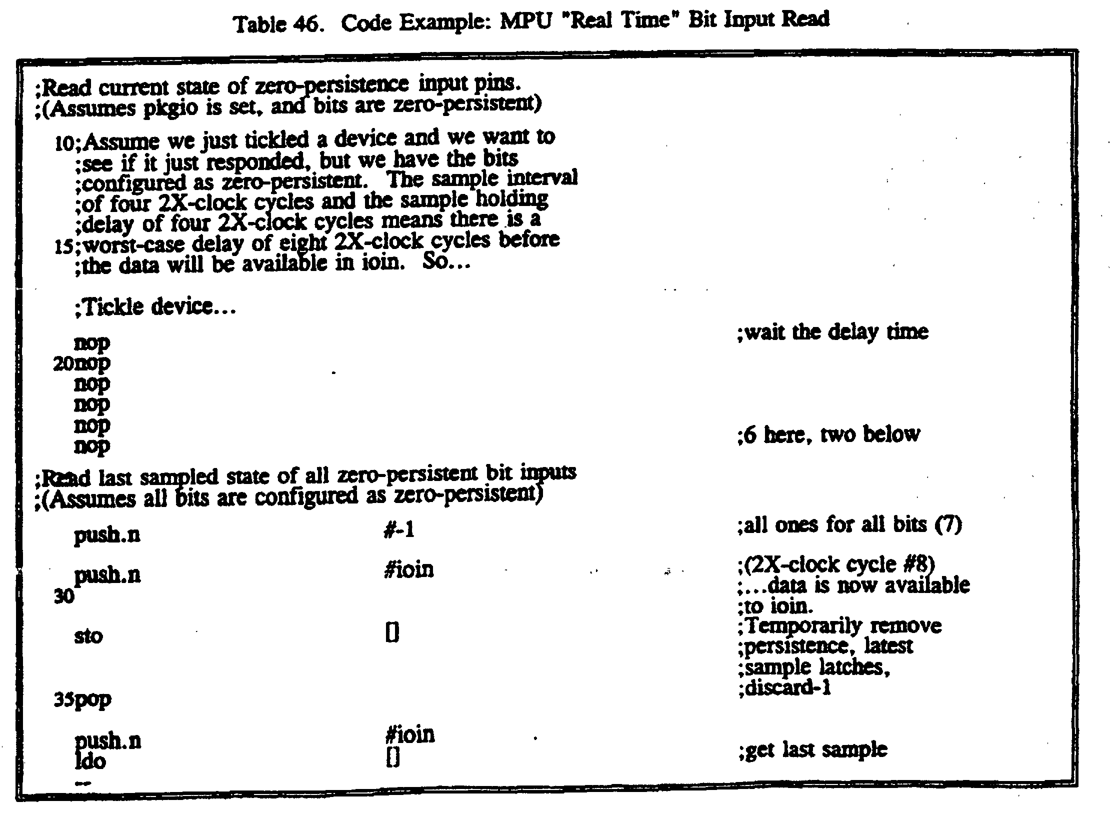

To perform a "real-time" external-bit-input read on zero-persistent bits. ones bits must be written to the bits of interest in ioin before reading ioin. This releases any persisting zeros, latches the most recently resolved sample, and reads that value. Bits that are not configured as zero-persistent do not require this write. Note that any value read can be as much as two worst-case sample delays old. To read the values currently on the external inputs requires waiting two worst-case sample delays for the values to reach ioin. See the code example in Table 46.

### BIT OUTPUTS

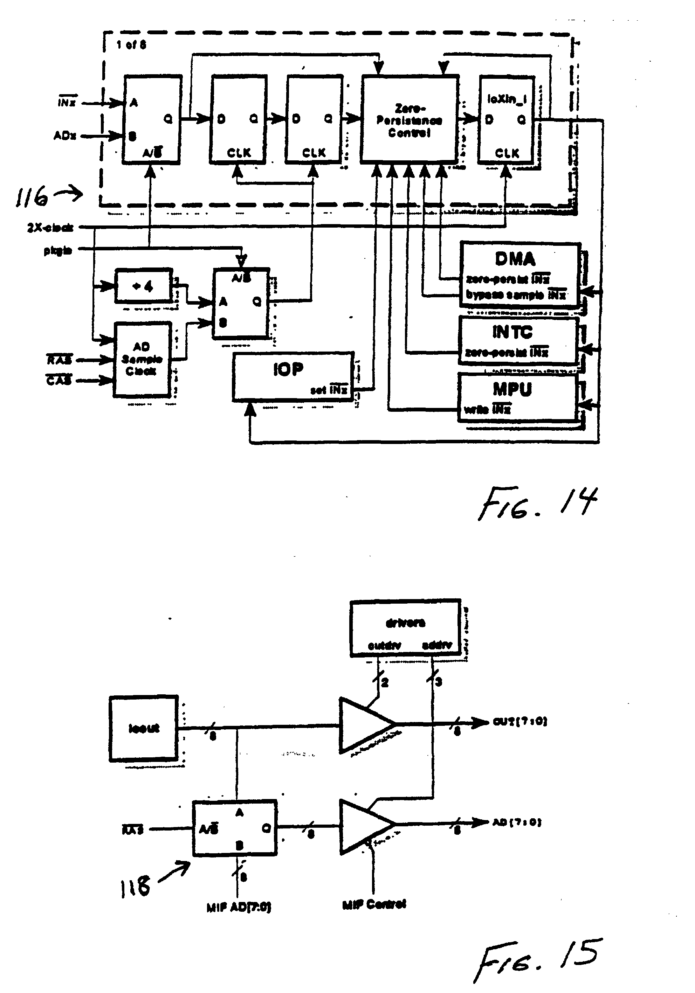

Eight general-purpose bit outputs can be set high or low by either the MPU or the IOP. The bits are available in the bit output register 118, ioout (Figure 15).

### Resources

The bit outputs consist of a register, package pins, and associated circuitry. These resources include:
- Bit output register, ioout: bits that were last written by either the MPU or the IOP. See Figure 24.
- Outputs, OUT[7:0]: the dedicated output pins.
- Address Data bus, AD[7:0]: multiplexed bit outputs on these pins while $\overline{\text{RAS}}$ is high.
- Output pin driver current bits, outdrv, in driver current register, driver: sets the drive capability of OUT[7:0]. See Figure 45.

### Usage

The bits are read and written by the MPU as a group with ldo [ioout] and sto [ioout], or are read and written individually with ldo.i [ioXout_i] and sto.i [ioXout_i].

The bit outputs are written individually by the IOP with outt and outf. The bit outputs cannot be read by the IOP.

When written, the new values are available immediately after the write completes. Note that if both the MPU and IOP write the same bit during the same 2X-clock cycle, any one bit written prevails.

The bits are always available on OUT[7:0], and on AD[7:0] when $\overline{\text{RAS}}$ is high. When sampled from AD[7:0], external hardware is required to latch the bits when RAS falls. Note that (by definition) these bits are only updated when a $\overline{\text{RAS}}$ cycle occurs. Using AD[7:0] for output cna reduce PWB area and cost compared to using OUT[7:0]. See Figure 74 for waveforms.

The drive capability of OUT[7:0] can be programmed in driver.

### PROGRAMMABLE MEMORY INTERFACE

The programmable Memory Interface (MIF) 120 allows the timing and behavior of the CPU bus interface to be adapted to the needs of peripheral devices with minimal external logic, thus reducing system cost while maintaining performance. A variety of memory devices are supported, including EPROM, SRAM, DRAM and VRAM, as well as a variety of I/O devices. All operations on the bus are directed by the MIF 120. Most aspects of the bus interface are programmable, including address setup and hold times, data setup and hold times, output buffer enable and disable times, write enable activation times, memory cycle times, DRAM-type device address multiplexing, and when DRAM-type RAS cycles occur. Additional specifications are available for I/O devices, including data setup and hold times, output buffer enable and disable times, and device transfer type (one-byte, four-byte or one-cell).

### Resources

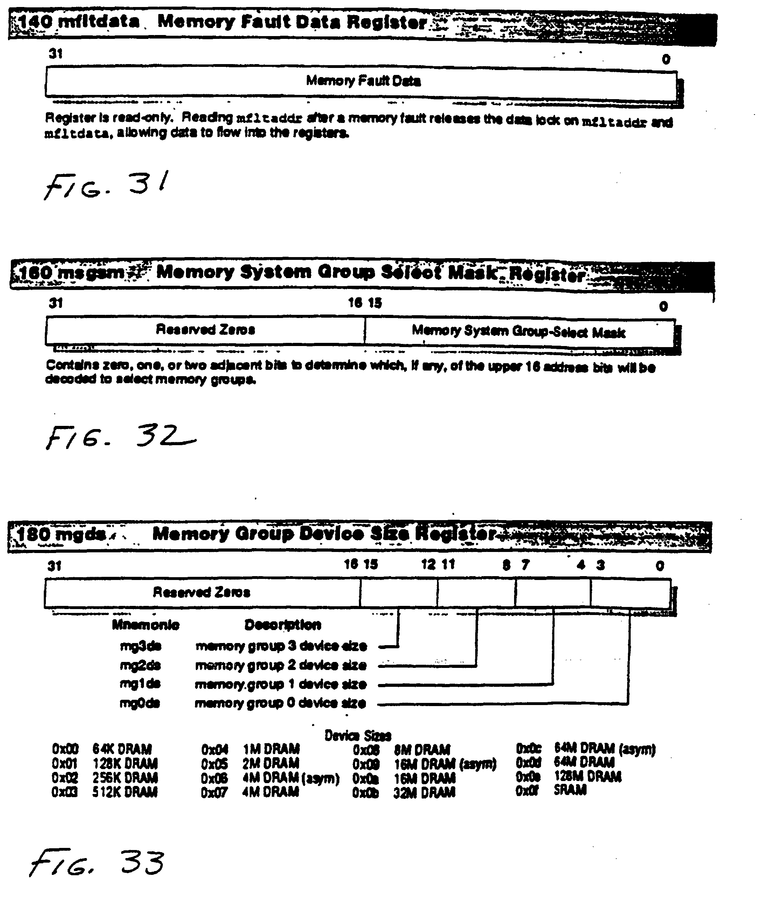

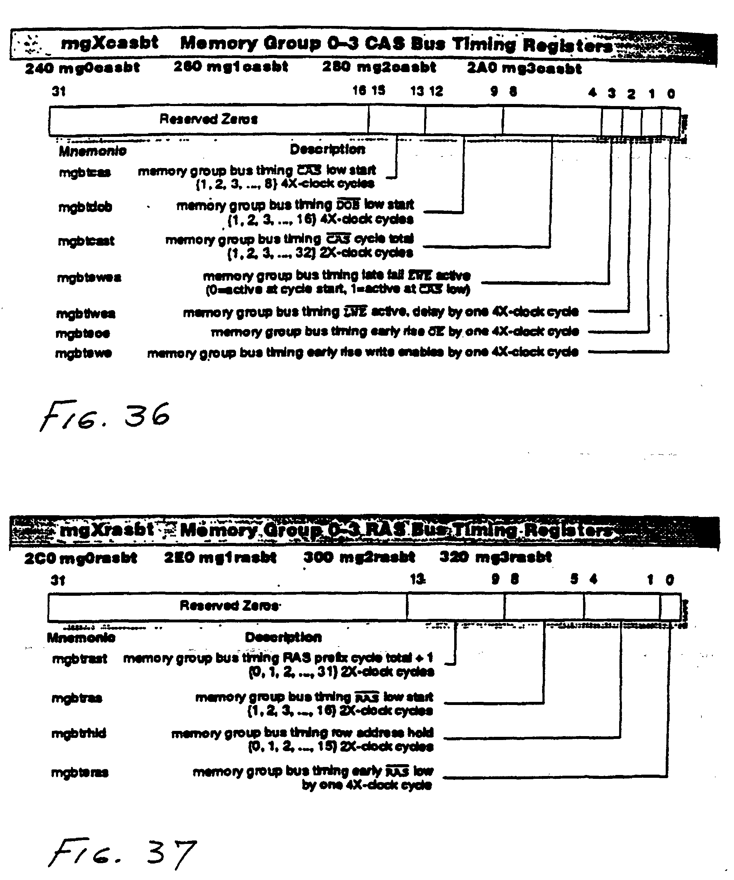

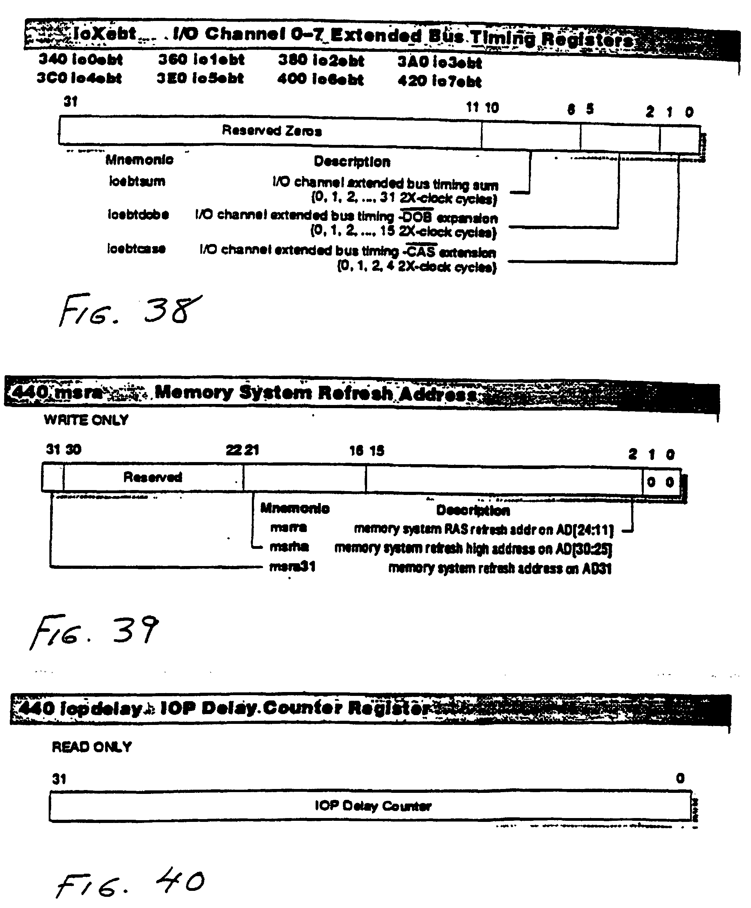

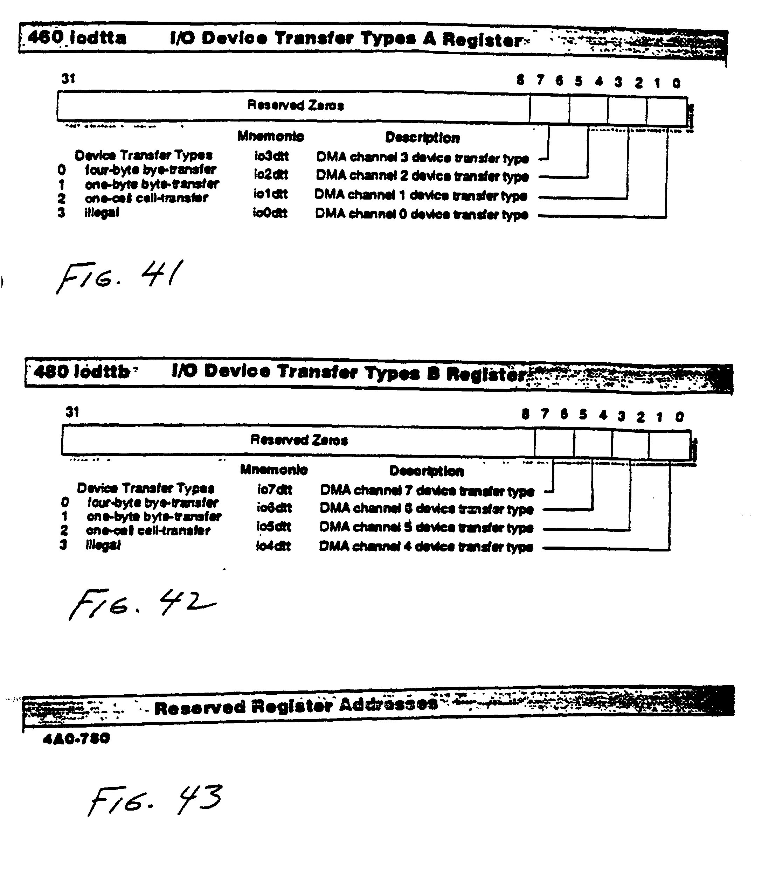

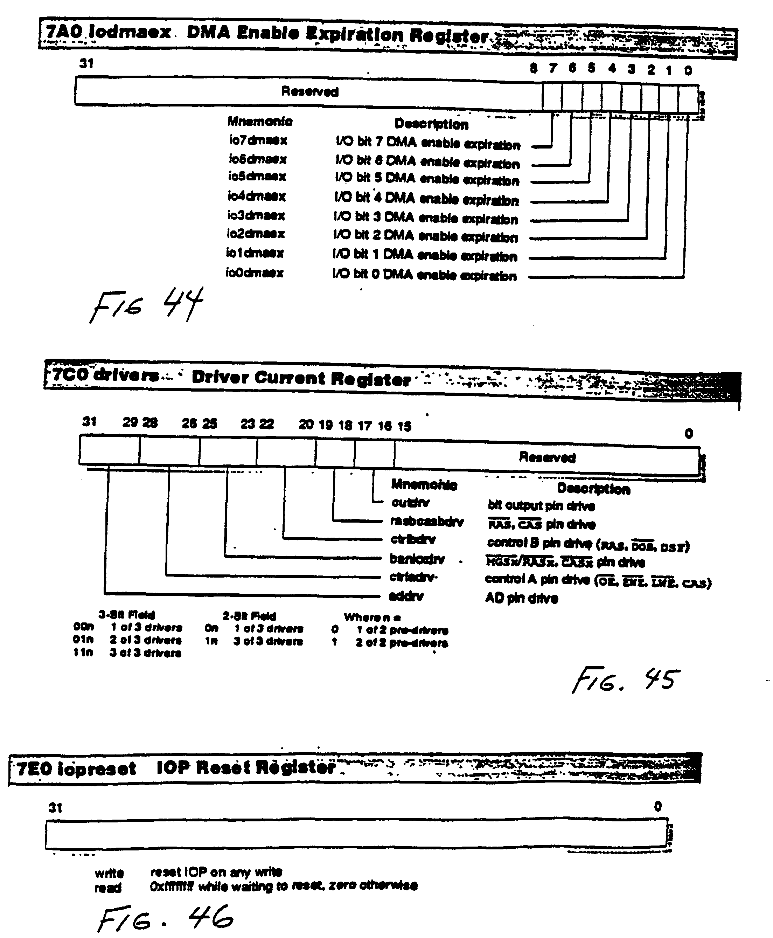

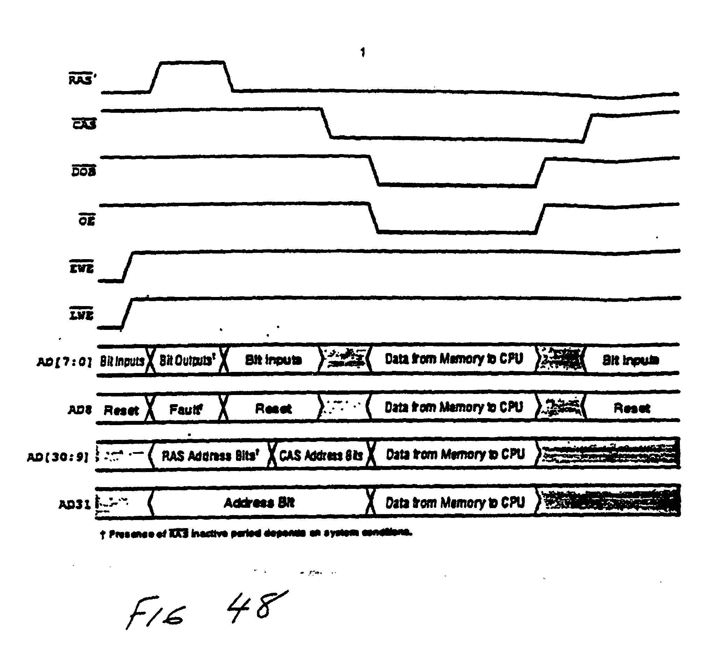

The MIF consists of several registers, package pins, and associated control logic. These resources include:
- VRAM control bit register, vram: controls $\overline{\text{OE}}$, $\overline{\text{LWE}}$, CASes, RASes, and DSF to initiate special VRAM operations. See Figure 27.
- Miscellaneous A register, misca: controls refresh and RAS-cycle generation. See Figure 28.
- Miscellaneous B register, miscb: selects each memory group data width (cell-wide or byte-wide), and the memory bank-select architecture. See Figure 29.
- Memory system group-select mask register, msgsm: indicates. which address bits are decoded to select groups of memory devices. See Figure 32.
- Memory group device size register, mgds: indicates the size and configuration of memory devices for each memory group. See Figure 33.
- Miscellaneous C register, miscc: controls RAS-cycle generation and the location of bank-select address bits for SRAM memory groups. See Figure 34.
- Memory group X extended bus timing register mgXebt: indicates memory-cycle expansion or extension values, which create longer data setup and hold times and output buffer enable and disable times for the memory devices in the corresponding memory group. See Figure 35.
- Memory group X CAS bus timing register, mgXcasbt: indicates the unexpanded and unextended address and data strobe activation times for the CAS portion of a bus cycle. See Figure 36.
- Memory group X RAS bus timing register, mgXrasbt: indicates the RAS precharge and address hold times to be prepended to the CAS part of a bus cycle to create a RAS cycle. See Figure 37.
- I/O channel X extended bus timing register, ioXebt: indicates memory cycle expansion or extension values, which create longer data setup and hold times and output buffer enable and disable times for the I/O device on the corresponding I/O channel. See Figure 38.
- Memory system refresh address, msra: indicates the row address to be used during the next DRAM refresh cycle. See Figure 39.
- I/O device transfer types A register iodtta: indicates the type of transfer for each of I/O channels 0, 1, 2 and 3. See Figure 41.
- I/O device transfer types B register, iodttb: indicates the type of transfer for each of I/O channels 4, 5, 6 and 7. See Figure 42.
- Driver current register, driver: indicates the relative drive current of the various output drivers. See Figure 45.

### Memory System Architecture

The MIF 120 supports direct connection to a variety of memory and peripheral devices. The primary requirement is that the device access time be deterministic; wait states are not available because they would create nondeterministic timing for the IOP 110. The MIF 120 directly supports a wide range of sizes for multiplexed-address devices (DRAM, VRAM, etc.) up to 128 MB, as well as sizes for demultiplexed-address devices (SRAM, EPROM, etc.) up to 1 MB. Fast-page mode access and RAS-only refresh to DRAM-type devices are supported. SRAM-type devices appear to the MIF as DRAM with no RAS address bits and a larger number of CAS address bits. See Figure 33.

Address bits are multiplexed out of the CPU on ASD[31:9] to reduce package pin count. DRAM-type devices collect the entire memory address in two pieces, referred to as the *row* address (upper address bits) and a *column* address (lower address bits). Their associated bus cycles are referred to as *Row Address Strobe* (RAS) cycles and *Column Address Strobe* (CAS) cycles. With the exception of memory faults, refresh and CAS-before-RAS VRAM cycles, a RAS cycle contains, enclosed within the $\overline{\text{RAS}}$ active period, a CAS cycle. Thus RAS cycles are no longer than CAS cycles. While RAS cycles are not required for the operation of SRAM-type devices, RAS cycles can occur for several reasons which are discussed below.

Though I/O devices can be addressed like memory for access by the MPU, I/O-channel transfers require addressing an I/O device and a memory location simultaneously. This is achieved by splitting the available 32 address bits into two areas: the lower address bits, which address memory, and the higher address bits, which address I/O devices. The location of the split depends upon application requirements for the quantity of addressable memory and I/O devices installed. The areas can overlap, if required, with the side effect that an I/O device can only transfer data with the side effect that an I/O device can only transfer data with a corresponding area of memory. These higher address bits are discussed below.

### Memory Groups

The MIF 120 operates up to four memory groups, maintaining for each the most recent RAS address bits and a unique configuration. Up to two address bits are decoded to determine the current group. The address bits for this function are set in the memory system group-selected mask register, msgsm. Each memory group is programmed for device width, bus timing, and device size (which specifies how address bits are multiplexed onto AD [31:9]). Address bits below the group-selected mask are typically used to address memory devices or portions of an I/O device, and bits above the group-select mask are typically used to address I/O devices.

### Memory Banks

Each memory group can have one or more memory banks, which are selected in a manner dependent upon the bus interface mode. All memory banks within a memory group share the configuration and most recent RAS address of that group. Two address bits are decoded to determine the current memory bank.

In Single Memory Bank (SMB) mode (mmb = 0). msgsm sets the group-select bits to be the same bits. This allows up to four groups at one bank per group, totalling four banks: group 0, bank 0; group 1, bank 1; group 2, bank 2; and group 3, bank 3. $\overline{\text{MGSx}}$/$\overline{\text{RASx}}$ signals for direct connection to memory devices. See Figure 17.

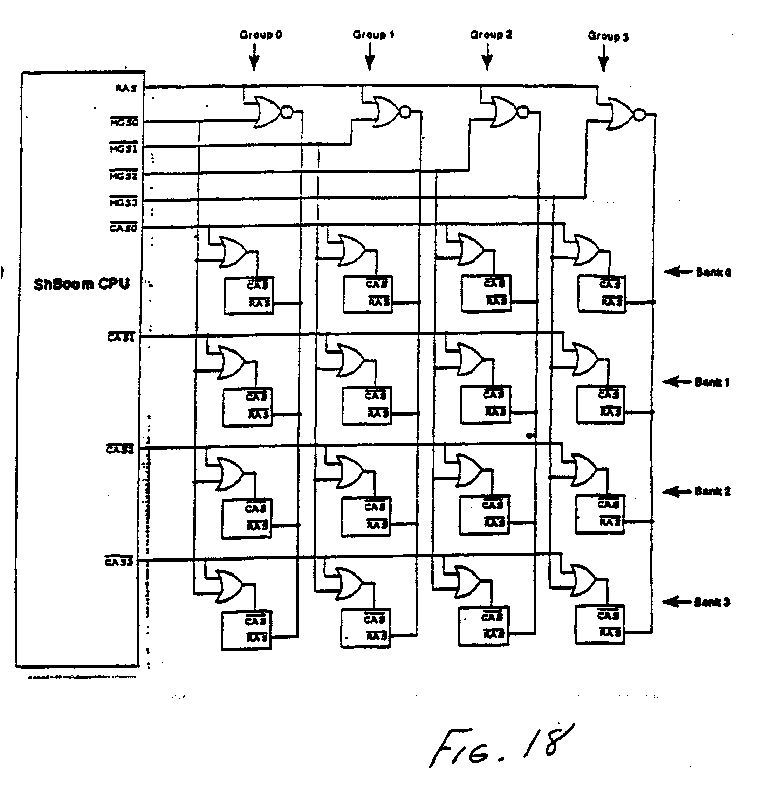

In Multiple Memory Bank (MMB) mode (mmb = 1), depending on whether msgsm overlaps the bank-select bits, one, two or four banks can be selected in each group. This allows up to sixteen banks for all groups combined; more banks can be decoded by defining additional bank-select bits with external logic. The address bits that select the current memory bank either located immediately above the row-address bits for DRAM devices (mgXds values 0-0x0e), or are specified by the mssbs bits for all SRAM devices in the system (mgXds value OxOf). The group-selected bits determine the $\overline{\text{MGSx}}$/$\overline{\text{RASx}}$ (which output the $\overline{\text{MGSx}}$ signal), and the bank-select bits determine the $\overline{\text{CASx}}$ that activates in any given bus cycle. See Figure 20. Gating the four MGSx signals with the four $\overline{\text{CASx}}$ signals creates up to sixteen memory bank selects. See Figure 18.

A hybrid of the two modes can also be programmed by selecting MMB mode and placing the msgsm bits overlapping the banks bits. This allows using MGSx directly as a faster chip select for SRAM-type devices than CASx strobes can be connected directly to the memory device and only one NOR gate per group is needed to create the RAS for that group.

### Device Requirements Programming

Each memory group can be programmed with a unique configuration of device width, device size, and bus timing. After a CPU reset, the system operates in byte-wide mode, with the slowest possible bus timing, and executes from the memory group zero, typically from an external PROM. See Processor Startup, below. Usually, the program code in the PROM will initially execute code to determine and set the proper configuration for the memory groups, I/O devices, and other requirements of the system.

### Device Sizes

Memory device sizes are programmed to one of sixteen settings in mgds. Most currently available and soon to be available DRAM-type device sizes can be selected, as well as an SRAM-type option. The selection of the device size and width determines the arrangement of the address bits on AD [31:9]. See Table 47 and Table 48.

For DRAM, during both RAS and CAS cycles, some or all of the high address bits are on AD above those AD used for the RAS and CAS address bits. These high address bits can be used by the application, e.g., for decoding by external hardware to select I/O devices. On high-performance systems with fast CAS cycles, RAS cycles are often required for I/O address decoding. If the external decoding hardware is sufficiently fast, however, CAS-cycle I/O is possible.

For SRAM, to allow addressing as much as memory as possible with CAS cycles, the only high address bit that appears during CAS address time is 31. I/O devices can still be selected on CAS cycles by translating the device addressing bits in software to lower address bits, provided that these translated bits do not interfere with the desired SRAM memory addressing. The device addressing bits must be translated to those address bits that will appear during SRAM access on the AD that are externally decoded for I/O addressing.

### Device Width

Memory device widths are either 8-bits (byte) or 32-bits (cell), and are programmed using mgXds in miscb.

As shown in Table 47, cell-wide memory groups do not use A1 or A0 to address the memory device. All accesses to cell-wide devices are cell-aligned and transfer the entire cell. Memory device address lines are attached to the CPU on AD [x:11] (x is determined by the device size).

Access to a byte-wide memory group are also cell-aligned and transfer all four bytes within the cell, from most significant to least significant (i.e., 0, 1, 2, 3). The only exception is for an I/O-channel transfer with a one-byte byte-transfer device, in which case only one arbitrarily addressed byte is transferred. See Bus Operation, below.

As shown in Table 48, byte-wide memory devices require the use of A1 and A0. Since for DRAM the RAS and CAS memory device address bits must be on the same AD, the address lines (except A31) are internally rotated left two bits. This properly places A0 on AD11 for connection to DRAM. This also means, however that the high address bits used for I/O address decoding appear on AD differently for a byte-wide memory group than for a cell-wide memory group. Since I/O device address decoding hardware is wired to fixed AD, the address bits used to access a device are different when transferring data with a byte-wide memory device than when transferring data with a cell-wide memory device.

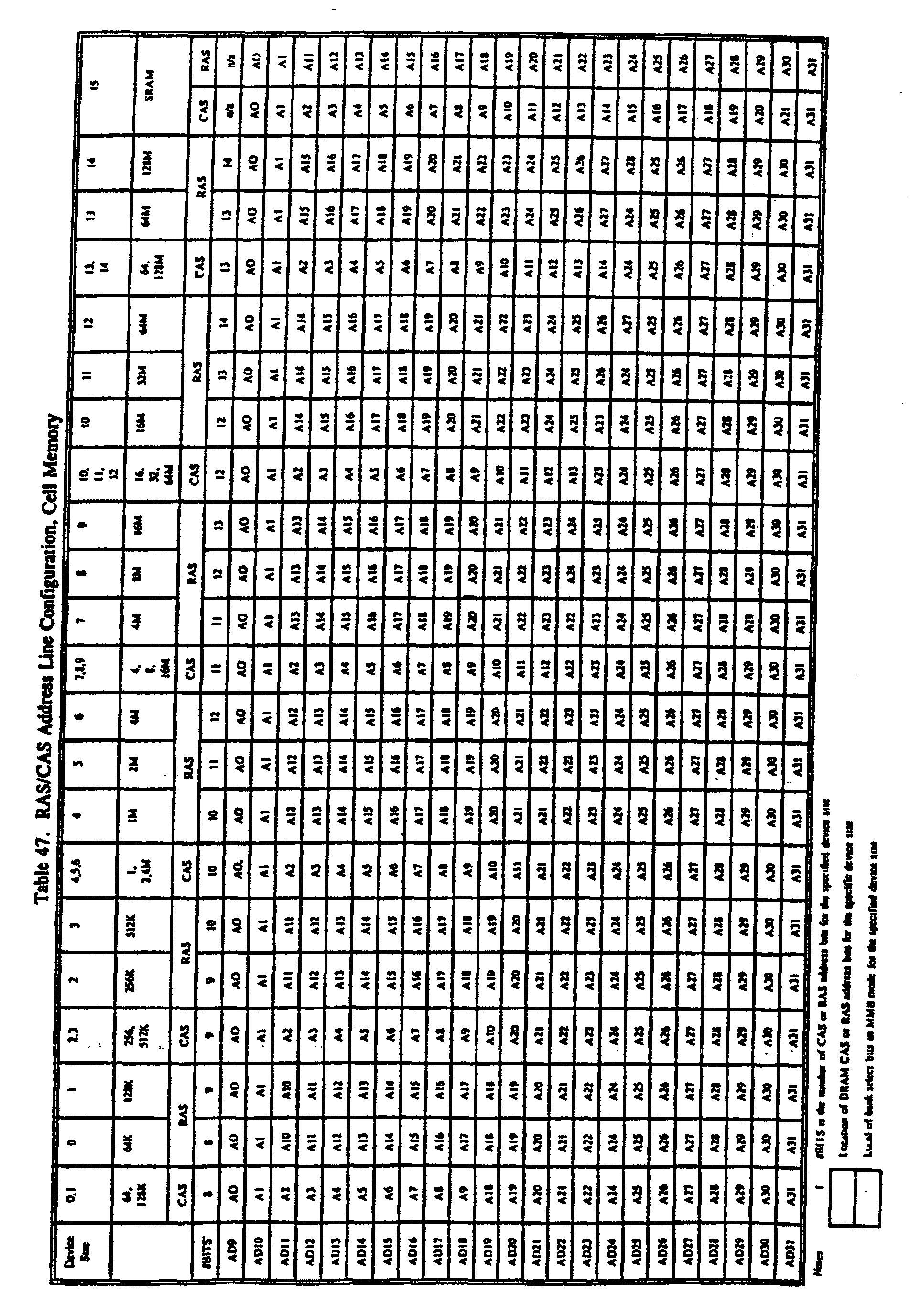

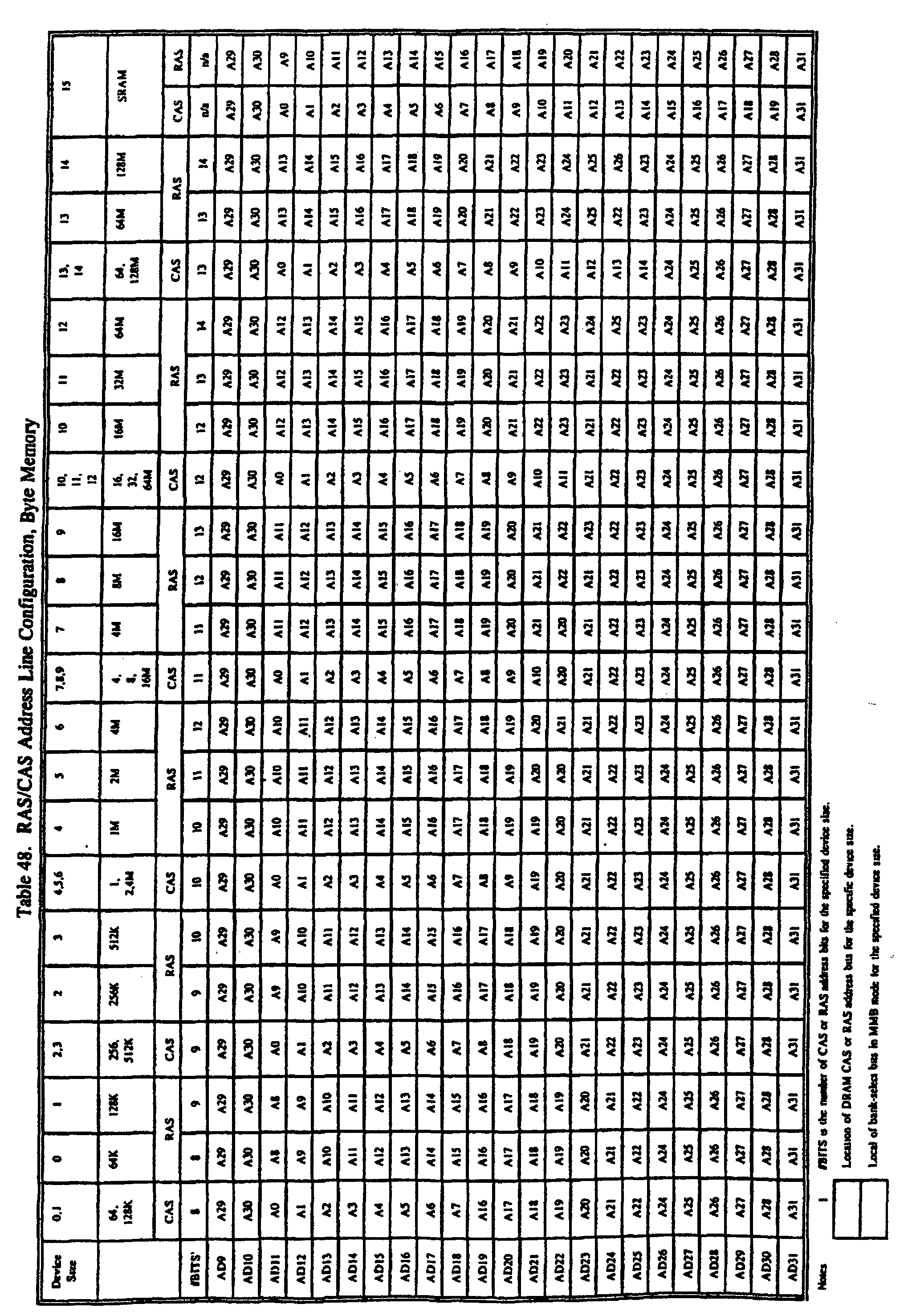

### Programmable Timing

The timing for RAS and CAS cycles on each memory group, as well as data setup and hold times for each I/O channel, is programmable. Depending on the parameter, timing granularity is in either 2X-clock cycles or 4X-clock cycles. In some cases, timing is specified in 2X-clock cycles with a modifier available to advance the event by one 4X-clock cycle.

Timing specification is broken into three pieces: RAS prefix, basic CAS cycle, and CAS extension/expansion timing. All CAS cycles consist of the basic CAS cycle timing and the appropriate CAS extension/expansion timing. This combination is referred to as the CAS part of the memory cycle. All RAS cycles consist of a RAS prefix plus a CAS part. Bus transactions of multiple bus cycles are simply the required sequence of RAS prefixes and CAS parts in immediate succession. Only discrete read cycles or write cycles are performed; read-modify write cycles are not performed.

### RAS Prefix Timing

This timing for a memory group is specified by programming the fields in the corresponding mgXrasbt. The RAS prefix of a RAS cycle consists of a leading 2X-clock cycle; the RAS inactive portion, also referred to as RAS precharge (mgbtras); and the RAS address hold time (mgbtrhld). The last two are modified by the early RAS bit (mgbteras). For computation of the RAS-cycle duration, mgbtrast must contained the sum of mgbtras and mgbtrhld plus one. During this time the DRAM RAS address bits, high address bits, and bit outputs are on AD. See Figure 37.

### CAS Part Timing

This timing for a memory group is specified by programming the fields in mgXcasbt and mgXebt. The $\overline{\text{CAS}}$ part of the cycle begins with the timing for the CAS inactive portion, also referred to as CAS precharge (mgbtcas). Next is the CAS address hold time/beginning of data time (mgbtdob), when $\overline{\text{DOB}}$, and possibly $\overline{\text{OE}}$ or $\overline{\text{LWE}}$, go active. Then $\overline{\text{CAS}}$, $\overline{\text{DOB}}$, and either $\overline{\text{OE}}$ (if a memory read) or both $\overline{\text{EWE}}$ and $\overline{\text{LWE}}$ (if a memory write) go inactive again (mgbtcast). To accommodate longer data setup and buffer delay times, the CAS cycle can be expanded at $\overline{\text{DOB}}$ fall (mgebtdobe). To accommodate longer data hold and output buffer disable times, the CAS strobes can be extended following $\overline{\text{DOB}}$ inactive (mgebtcase). Memory write cycles can be programmed to have $\overline{\text{EWE}}$ go active either at the beginning of the CAS cycle (before $\overline{\text{RAS}}$ rise if a RAS cycle) or at $\overline{\text{CAS}}$ fall (mgbtewea). Similarly, $\overline{\text{LWE}}$ can be programmed to go active either at $\overline{\text{DOB}}$ fall plus expansion or at $\overline{\text{DOB}}$ fall plus expansion plus one 4X-clock cycle (mgbtlwea). $\overline{\text{EWE}}$ generally accommodates DRAM-type devices. Further, $\overline{\text{DOB}}$ going inactive tracks $\overline{\text{EWE}}$/$\overline{\text{LWE}}$ or $\overline{\text{OE}}$, either of which can be made to go inactive earlier than the unextended CAS time by one 4X-clock cycle duration, mgbtcast is added to mgebtsum, the latter of which must contain the sum of mgebtdobe and mgebtcase. See Figure 36 and Figure 35.

When MPU bus transactions or IOP instruction-fetch bus transactions occur, the bus cycle timing for the memory group uses the values in mgXebt, as described above. When an I/O channel bus transaction occurs, the values in ioXebt for the appropriate I/O channel are substituted for the mgXebt values. The ioXebt values must be programmed to accommodate any memory group that might be involved in the transfer, as well as the I/O device.

### DRAM Refresh

DRAM requires periodic accesses to each row within the memory device to maintain the memory contents. Most DRAM devices support several modes of refresh, including the RAS-only refresh mode supplied by the IOP instruction refresh. The IOP must be programmes to execute refresh at intervals short enough for the most restrictive DRAM in the system. The timing during the refresh cycle uses the RAS cycle timing of the memory group indicated by msrtg, which must be long enough for the slowest DRAM refresh cycle in the system. Refresh on each memory group can be individually enabled or disabled. See Figure 28.

msra contains data used during each refresh cycle. refresh increments the 14-bit row address in msrra after the refresh cycle completes. The address bits in msra31 and msrha are normally zero, but can be written if the zero values interfere with other system hardware during refresh cycles.

### Video RAM Support

Special VRAM operating modes are supported through the use of vram. See Figure 27 and Table 35. Many VRAM modes use a RAS cycle to set an operating state in the VRAM device. Unexpected RAS cycles can thus cause undesirable results.

Refresh cycles are one source of unexpected RAS cycles; these can be disabled on groups containing VRAM by setting the appropriate mgXrd bits. See Figure 28.

Changes in the high address bits are a second source of unexpected RAS cycles; these can be prevented from occurring on memory group msvgrp by setting msevhacr. The high address bits are typically used for I/O device addresses, and will require a RAS cycle when these bits change if mshacd is clear. An I/O-channel transfer immediately prior to a VRAM group access is an example of such an occurrence. The RAS cycle might be required for proper system operation, but the VRAM group can be prevented from receiving the RAS cycle by setting msevhacr. The RAS precharge portion of the cycle will occur on RAS and $\overline{\text{RAS,}}$ but not on the $\overline{\text{MGSx}}$/$\overline{\text{RASx}}$ of the VRAM group. Note that if more than one memory group is used for VRAM then this protection will not be effective. See Figure 34.

### System Requirements Programming

### RAS Cycle Generation

RAS cycles are primarily required to bring new row addresses onto AD for DRAM-type devices. They are also required, in certain instances, to ensure temporally deterministic execution of the IOP, or to ensure correct operation after certain events. The MIF handles these cases automatically. RAS cycles can also be configured to occur in order to supply additional time for decoding I/O addresses, for example. Since RAS cycles generally take considerably longer than CAS cycles, it is desirable to minimize their use. The various sources of RAS cycles are listed in Table 49.

**Table 49.**

| Sources of RAS cycles | | | | | |
|---|---|---|---|---|---|
| Groups | Access | Reason | Configuration | Requirement | MPU, DMA lOP |
| all | any | High address bus changed | mshacd clear | S | all |
| all | any | A31 changed | mshacd clear, msexa31hacclear | S | all |
| all | any | A31 set | msras31d clear | S | all |
| all | any | Memory group row address changed | | C | all |
| pgm | first | After VRAM CAS before RAS | msvgrp | C | All |
| pgm | first | after refresh on enabled group | mgXrd set | C | MPU,DMA |
| all | first | after refresh executes | | T | lOP |
| all | first | after memory fault on group | | C | all |
| all | first | mgds written | | C | all |
| all | first | CPU hardware reset | | C | all |
| all | first | delay completes | | T | lOP |
| all | first | IOP software reset | | T | lOP |
| KEY: all - any group or device with which the event might occur pgm - any group programmed for the event to occur any - any arbitrary access creating the specified condition first - first access on each specified group after the specified even S - might be required by system hardware C - might be required for correct operation of devices T - required for temporally deterministic lOP execution | | | | | |

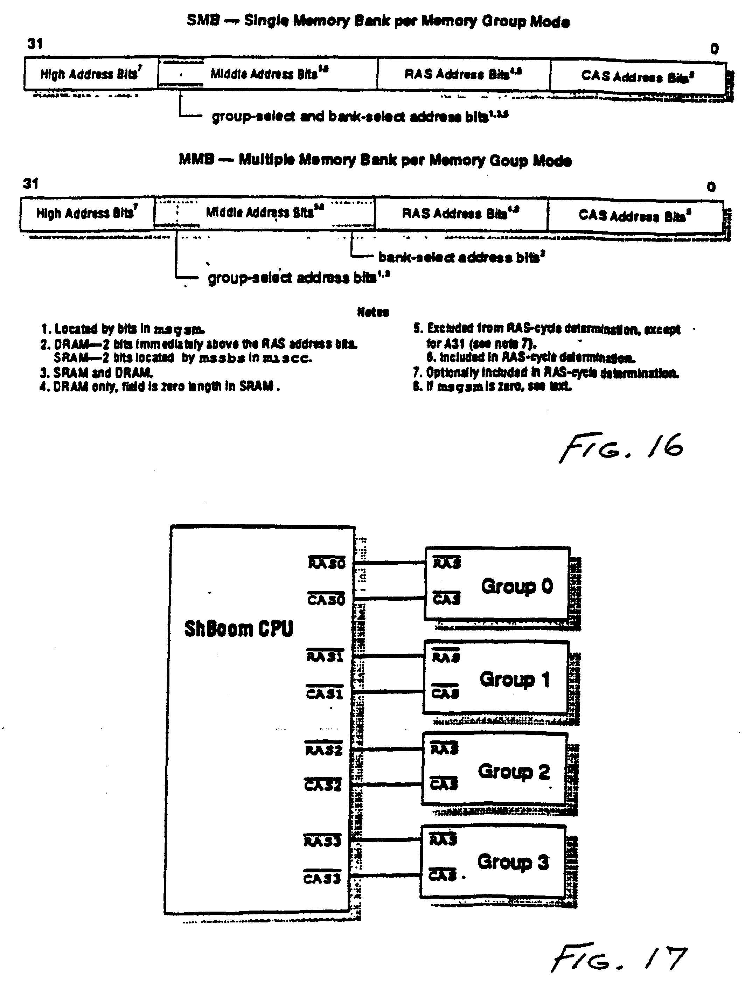

When the current and previous addresses are compared to determine if a RAS cycle is required, the MIF uses the following rules:
- The current DRAM RAS address bits are compared to those from the most recent RAS cycle on the current memory group. If the bits are different, a RAS cycle occurs.
- The middle address bits are not compared (see Figure 16). The middle address bits are: for DRAM, above the RAS address bits up to and including msgsm; for SRAM, from A22 up to and including msgsm. If msgsm is zero there are no middle address bits in either case. If msgsm includes A31, A31 becomes part of the high address bits and is optionally compared.
- The current high address bits are compared to those from the most recent RAS cycle, depending on the configuration options discussed below. The location of the high address bits depends on msgsm. See Figure 32.

Three high-address-bit configuration options are available to minimize the occurrence of RAS cycles caused by high-address-bit comparisons.
- The high address bits are typically used for I/O device addresses, and thus when they change, a RAS cycle might be required for their proper decoding by external hardware. The high address bits can be excluded from RAS-cycle determination by setting the memory system high-address-bit compare disable (mshacd). See Figure 28.
- During bus transactions between four-byte-transfer devices and cell memory or between one-cell cell-transfer devices and byte memory, A31 is passed (taken from the global register, usually set) or cleared (by the MIF) to select or deselect the I/O device when required. Decoding A31 externally for this purpose can be done more quickly than a full address decode, so this separate option is available. A31 can be included in or excluded from the high-address- bit compare (msexa31hac). See Figure 34.
- In systems that require a RAS cycle to decode I/O device addresses but not to decode changes in A31 (mshacd clear and msexa31hac set), it might be necessary for the memory address bits and I/O addressing bits to overlap if the system contains a large amount of memory and I/O devices. This can prevent a RAS cycle from occurring because some of the overlapped address bits do not cause a RAS (middle address bits), or do not require a RAS (DRAM RAS address bits), or do not require a RAS (DRAM RAS address bits), even though they changed from the last system RAS cycle. In this case, a RAS can be forced to ensure that I/O device addresses will be decoded by setting A31 (msras31d clear). This option can also be useful any other time forcing a RAS cycle is desirable.

### Driver Current

The drive capability of all the package output drivers is programmable. See Figure 45.

### Memory Faults

Virtual memory page-fault detection is enable through mflt_enable in mode. The memory fault input can either come from AD8 or $\overline{\text{MFLT}}$, depending on the state of pkgmflt. See Figure 34.

### I/O-Channel Programming

As previously discussed, the normal memory-group bus timing is changed during an I/O-channel bus transaction by substituting the values in the corresponding ioXebt for the values in mgXebt for the memory group involved. This allows each I/O channel to be programmed to meet the requirements of the device. The ioXebt values must be adequate for the I/O device, as well as any memory group with which a data transfer might occur. See Figure 38.

In addition to timing, the type of transfer on each I/O channel can be specified in iodtta or iodttb. Transfer can either be one byte or four bytes per transaction for byte-wide devices, or one cell per transaction for cell-wide devices. Four-byte byte-transfer devices might need to contend for the bus less often than one-byte byte-transfer devices, and thus can transfer data more efficiently. Also, with cell-wide memory, four-byte byte transfers are cell-aligned and pack the data into the memory cells, whereas one-byte byte transfers place only one byte per memory cell. See Bus Operation, below.

See Direct Memory Access Controller, above, for other I/O-channel transfer options

### On-Chip Resource Registers

The on-chip resource registers 102 (Figure 20) comprise portions of various functional units on the CPU 100 including the MPU 108, IOP 110, DMAC 112, INTC 114, MIF 120, bit inputs 116, and bit outputs 118. The registers are addressed from the MPU in their own address space using the instructions ldo [] and sto [] at the register level, or ldo.i [] and sto.i [] at the bit level (for those registers that have bit addresses). On other processors, resources of this type are often either memory-mapped or opcode-mapped. By using a separate address space remains uncluttered, and opcodes are preserved. Except as noted, all registers are readable and writable. Areas marked "Reserved Zeros" contain no programmable bits and always return to zero. Areas marked "Reserved" contain unused programmable bits. Both areas might contain functional programmable bits in the future.

The first six registers are bit addressable in addition to being register addressable. This allows the MPU to modify individual bits without corrupting other bits that might be changed concurrently by the IOP, DMAC, or INTC logic.

Bus activity should be prevented to avoid an invalid bus cycle when changing the value in any register that affects the bus configuration or timing of a bus cycle that might be in progress. Bus activity can be prevented by ensuring:
- no DMA requests will be serviced,
- the IOP will not seize the bus (because iopdelay goes to zero),
- no writes are posted, and
- pre-fetch will not occur.

This is typically not a problem because most changes are made just after power-up when no DMA or IOP activity of concern is occurring. Posted writes can be ensured complete by ensuring an MPU memory access (such as an instruction fetch) occurs after the write is posted.

Bit Input Register ioin (Figure 21 contains sampled data from $\overline{\text{IN}}$ [7:0] or AD [7:0], depending on the value of pkgio.ioin is the source of inputs for all consumers of bit inputs. Bits are zero persistent: once a bit is zero in ioin it stays zero until consumed by the IOP, DMAC, or INTC, or written by the MPU with a one. Under certain conditions bits become not zero-persistent. See Bit Inputs, above.

The bits can be individually read, set and cleared to prevent race conditions between the MPU and other CPU logic.

Interrupt Pending Register ioip (Figure 22) contains interrupt requests that are waiting to be serviced, Interrupts are serviced in order of priority (0 = highest, 7 = lowest). An interrupt request from an I/O channel transfer or from int occurs by the corresponding pending bit being set. Bits can be set or cleared to submit or withdraw interrupt requests. When an ioip bit and corresponding ioie bit are set, the corresponding ioin bit is not zero-persistent. See Interrupt Controller, above.

The bits can be individually read, set and cleared to prevent race conditions between the MPU and INTC logic.

Interrupt Under Service Register ioius (Figure 23) contains the current interrupt service request and those that have been temporarily suspended to service a higher-priority request. When an ISR executable-code vector for an interrupt request is executed, the ioius bit for that interrupt request is set and the corresponding ioip bit is cleared. When'an ISR executes reti, the highest-priority interrupt under-service bit is cleared. The bits are used to prevent interrupts from interrupting higher-priority ISRs. When an ioius bit and corresponding ioie bit are set, the corresponding ioin bit is not zero-persistent. See Interrupt Controller, above.

The bits can be individually read, set and cleared to prevent race conditions between the MPU and INTC logic.

Bit Output Register ioout (Figure 24) contains the bits from MPU and IOP bit-output operations. Bits appear on OUT [7:0] immediately after writing and on AD [7:0] while $\overline{\text{RAS}}$ is inactive. See Bit Outputs, above.

The bits can be individually read, set and cleared to prevent race conditions between the MPU and IOP.

The Interrupt Enable Register ioie is shown in Figure 25. If the corresponding iodmae bit is not set, allows a corresponding zero bit ioin to request the corresponding zero bit in ioin to request the corresponding interrupt service. When an enabled interrupt request is recognized, the corresponding ioip bit is set and the corresponding ioin bit is no longer zero-persistent. See Interrupt Controller, above.

The bits can be individually read, set and cleared. Bit addressability for this register is an artifact of its position in the address space, and does not imply any race conditions on this register can exist.

Figure 26 shows the DMA Enable Register iodmae. It allows a corresponding zero bit in ioin to request a DMA I/O-channel transfer for the corresponding I/O channel. When an enabled DMA request is recognized, the corresponding zero bit in ioin is set. If the corresponding iodmaex bit is set, the iodmae bit will be cleared (to disable further DMA requests from that channel) when an I/O-channel transfer on that channel accesses the last location in a 1024-byte memory page. See Direct Memory Access Controller, above. When a iodmae bit is set the corresponding ioie bit is ignored.

Figure 27 shows the VRAM Control Bit Register vram. These bits control the behavior of $\overline{\text{OE}}$, $\overline{\text{LWE}}$, the CASes, and DSF at $\overline{\text{CAS}}$ fall time. They can be used in any combination to activate the various modes on VRAMs.

The bits from vram move through a hidden register prior to controlling the memory strobes during a subsequent MPU memory cycle. The bits stored for msvgrp in the hidden register determine which memory group is the current VRAM memory group, whose strobes will be affected by the accompanying data in the hidden register. The hidden register is locked once data has been transferred into it from vram until an MPU access to the VRAM memory group occurs, thus consuming the data in the hidden register.

When a sto [] to vram occurs and the hidden register is not currently locked, the data from vram is transferred into the hidden register immediately if a posted write (to any memory group) is not waiting or in process, or at the end of the posted write if a posted write is waiting or in process. When a sto [] to vram occurs and the hidden register is already locked, the data in vram is not transferred (and is replaceable) until after the next access to the VRAM memory group occurs. The next access to the VRAM memory group will use the data in the hidden register, and when the memory access is complete, the data in vram will be transferred to the hidden register.

Only MPU memory accesses have an effect on vram or the hidden register. Immediately after transferring vram to the hidden register, dsfvras, casbvras, wevras, and oevras in vram are cleared. After the VRAM group access, additional CAS or RAS cycles can occur on the VRAM memory group without rewriting the register, and will use the current (cleared) vram data. When writes to vram are paired with one or more accesses to the VRAM memory group of the required RAS or CAS type, the internal operations described above will be transparent to the program. Note that RAS precharge must be at least three 2X-clock cycles in duration for proper VRAM operation. See Video RAM Support, above and below.

### msvgrp

Specifies the memory group containing the VRAM that is controlled by this register. IOP and MPU instructions should not be fetched from the memory group used for VRAM because the VRAM operations will likely occur on an instruction-fetch bus transaction rather than the intended VRAM transaction.

### dsfvcas

Contains the state applied to DSF at the start of the next CAS-part of a memory cycle on the VRAM memory group. The bit is persistent and is not automatically cleared after being transferred to the hidden register. DSF is low when not accessing the VRAM memory group.

### dsfvras

Contains the state applied to DSF two 2X-clock cycles after the $\overline{\text{RAS}}$ rises during the next RAS cycle on the VRAM memory group. DSF changes to the dsfvcas state at the expiration of the row-address hold time. The bit is automatically cleared after being transferred to the hidden register.

### casbvras

If set, during the next RAS cycle on the VRAM memory group all CAS signals are active two 2X-clock cycles after RAS rises, and are inactive at the normal expiration time. $\overline{\text{OE}}$, $\overline{\text{EWE}}$ and $\overline{\text{LWE}}$ go inactive at the expiration of the row-address hold time. The next access to the memory group msvgrp is forced by internal logic to be a RAS cycle.

Note that since all read and write strobes are inactive throughout their normally active times during the bus cycle, no data I/O with memory can occur. The data associated with the ST or LD used to cause the cycle is lost or undefined. The casbvras bit is automatically cleared after being transferred to the hidden register.

### wevras

If set, LWE is low two 2X-clock cycles after $\overline{\text{RAS}}$ rises during the next RAS cycle on the VRAM memory group, and is high at the expiration of the row-address hold time. Otherwise, $\overline{\text{LWE}}$ is high until the expiration of the row-address hold time during the next RAS cycle on the VRAM memory group. In either case, during the CAS portion of the cycle $\overline{\text{LWE}}$ behaves normally and the data transferred is part of the function performed. The bit is automatically cleared after being transferred to the hidden register.

### oevras

If set, $\overline{\text{OE}}$ is low two 2X-clock cycles after $\overline{\text{RAS}}$ rises during the next RAS cycle on the VRAM memory group, and is high at the expiration of the row-address hold time. Otherwise, $\overline{\text{OE}}$ is high until the expiration of the row-address hold time during the next RAS cycle on the VRAM memory group. In either case, during the CAS portion of the cycle $\overline{\text{OE}}$ behaves normally and the date transferred is part of the function performed. The bit is automatically cleared after being transferred to the hidden register.

The Miscellaneous A Register misca is shown in Figure 28.

### mgXrd

Allows (if clear) or prevents (if set) a refresh cycle from occurring on the corresponding memory group when refresh executes. Allowing refresh on some memory groups can be undesirable or inappropriate. For example, the primary side effect of refresh is that the current row address latched in the memory device is changed. This can be undesirable on VRAM devices when a RAS cycle sets persistent operational modes and addresses. Another refresh side effect is that the next memory cycle to the memory group will need to be a RAS cycle to reselect the operational memory row. This is usually undesirable in SRAM because refresh is unneeded; the refresh and RAS cycles only slow execution, or make otherwise predictable timing unpredictable.

### msras31d

If set, allows non-RAS cycles when A31 is a one. If clear, forces a RAS cycle on both one-bus-cycle transactions and the first cycle of four-bus-cycle byte transactions when A31 is a one. In large memory systems in which the I/O-device addressing bits overlap the group, bank, or DRAM RAS bits, this option forces a RAS cycle when one might not otherwise occur because these various bits either are excluded from the RAS comparison logic or could inadvertently match the I/O-device address bits. RAS cycles might be required by design to allow enough time for I/O decode and select. A31 is used in selecting I/O addresses.

### mshacd

If clear, enables the comparison of the high address bits to those of the most recent RAS cycle to determine if a RAS cycle must occur. If set, disables this comparison. These bits are typically used for I/O addresses that require external decoding logic, which might need the additional time available in a RAS cycle for this decoding. However, with high-speed logic it is often possible to decode the I/O address in the time available within a CAS cycle, thus speeding I/O access. A31 can be excluded from the high address-bit compare by setting msexa31hac.

### msrtg

Contains the number of the memory group whose RAS cycle timing is to be used for refresh cycles produced by refresh. The memory group specified must be the group with the most-restrictive (slowest) refresh timing.

The Miscellaneous B Register miscb is shown in Figure 29.

### mmb

If clear, selects Single Memory Bank (SMB) mode for all memory groups. $\overline{\text{RASx}}$ signals appear on the corresponding package pins. Bank-select bits correspond with the msgsm bits. Up to four memory banks (i.e., one memory bank per memory group) can be directly connected and accessed. See Figure 17.

If set, selects Multiple Memory Bank (MMB) mode for all memory groups. $\overline{\text{MGSx}}$ signals appear on the corresponding package pins. Bank-select bits are located immediately above the DRAM RAS bits, or for SRAM in the mssbs location. Up to sixteen memory banks (i.e., four banks per memory group) can be connected with 1.25 two-input gates per bank. With additional inputs per gate and additional decoding, an arbitrarily large number of memory banks can easily be connected. See Figure 20.

### fdmap

DMA requests contend for the bus; the highest-priority request gets the first chance at access. If iopdelay is large enough to allow bus access by the highest-priority request, the bus is granted to the device.

If fdmap is set and iopdelay is too small for the highest-priority DMA request, the DMA request does not get the bus. Unless a higher-priority DMA request occurs that fits the shrinking available bus slot, no bus transactions occur until the IOP seizes the bus. When the IOP next executes delay, the highest-priority DMA request--or the MPU if there are no DMA requests--repeats the bus request process.

If fdmap is clear and iopdelay is too small for the highest-priority DMA request, the request does not get the bus. The next lower-priority bus request is then allowed to request the bus, with the MPU as the lowest-priority request. The process repeats until the bus is granted or the IOP seizes the bus. When the IOP next executes delay, the highest-priority DMA request-or the MPU if there are no DMA requests--repeats the bus request process.

### pkgio

If set, inputs to ioin are taken from $\overline{\text{IN}}$ [7:0]. If clear inputs are taken from AD [7:0] when $\overline{\text{RAS}}$ is low and $\overline{\text{CAS}}$ is high. See Bit Inputs, above.

### oed

If set, disables $\overline{\text{OE}}$ from going active during bus cycles. If clear, $\overline{\text{OE}}$ behaves normally. On CPU reset, the $\overline{\text{OE}}$ signal is disabled to prevent conventionally connected memory from responding; this allows booting from a device in I/O space. See Processor Startup, below.

### mgXbw

If clear, the corresponding memory group is cell-wide and is read and written 32-bits per bus cycle. If set, the corresponding memory group is byte-wide and is read and written in a single bus transaction of four bus cycles, one byte per cycle.

The Memory Fault Address Register is shown in Figure 30. When a memory page-fault exception occurs during a memory read or write, mfltaddr contains the address that caused the exception. The contents of mfltaddr and mfltdata are latched until the first read of mfltaddr after the fault. After reading mfltaddr, the data in mfltaddr and mfltdata are no longer valid.

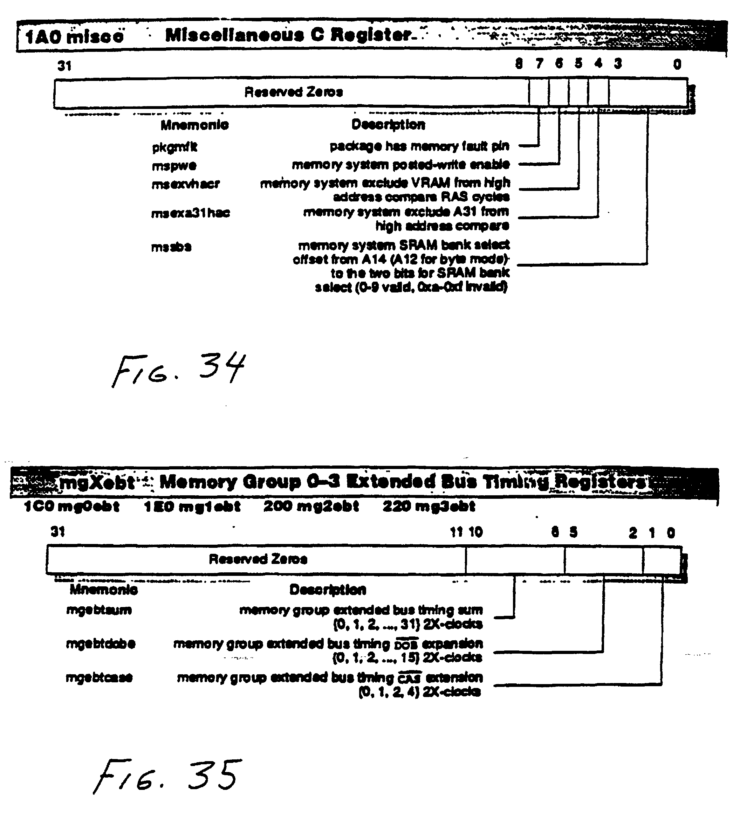

The Memory Fault Data Register is shown in Figure 31. When a memory page-fault exception occurs during a memory write, mfltdata contains the data to be stored at mfltaddr. The contents of mfltdata and mfltdata are latched until the first read of mfltaddr after the fault.

The Memory System Group-Select Mask Register is shown in Figure 32. It contains zero, one, or two adjacent bits that locate the memory group-select bits between A16 and A31.

When no bits are set, all memory accesses occur in memory group zero. The memory system high address bits occur in the address bits: for DRAM, above the memory group zero DRAM RAS address; for SRAM, above A21.

When one bit is set, it will determine the address bit that selects accesses between memory group zero and memory group one. The memory system high address bits occur in the address bits higher than the bit selected, but always include A31.

When two adjacent bits are set, they are decoded to select one of four memory groups that will be accessed. The memory system high address bits occur in the address bits higher than the bits selected, but always include A31.

The Memory Group Device Size Register is shown in Figure 33. It contains 4-bit codes that select the DRAM address bit configuration, or SRAM, for each memory group. The code determines which bits are used during RAS and CAS addressing and which bits are compared to determine if a RAS cycle is needed (due to the DFRAM row-address changing). See Table 47 and Table 48.

The Miscellaneous C Register is shown in Figure 36.

### pkgmflt

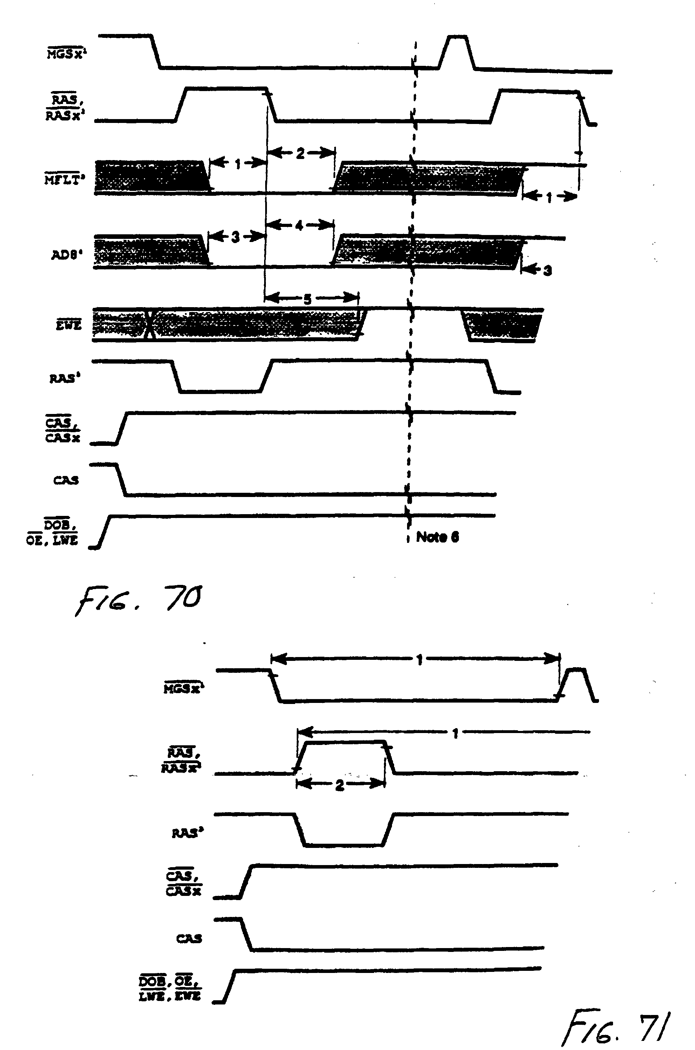

If set, the memory-fault input is sampled from $\overline{\text{MFLT}}$. If clear, the memory-fault input is sampled from AD8 when $\overline{\text{RAS}}$ falls. See Figure 70.

### mspwc

If set, enables a one-level MPU posted-write buffer, which allows the MPU to continue executing after a write to memory occurs. A posted write has precedence over subsequent MPU reads to maintain memory coherency. If clear, the MPU must wait for writes to complete before continuing.

### msexa31hac

If set, A31 is not included in the high-address-bit compare. If clear, A31 is included in the high-address-bit compare. See mshacd for more information. The high address bits are typically used for I/O addresses, and require external decoding logic that might need the additional time available in a RAS cycle for decoding. Some bus transactions contain adjacent bus cycles whose high address bits will differ by only the state of A31, and could thus require a RAS cycle due solely to the change in this bit. However, some system designs can decode the A31 change in the time available in a CAS cycle, thus speeding I/O access.

### mssbs

For multiple memory bank mode only, these bits contain the offset from A14 (A12 for a byte-mode group) to the two address bits used to select banks within any memory group containing SRAM devices. Typically set to place the bits immediately above the address bits of the SRAM devices used.

The Memory Group 0-3 Extended Bus Timing Registers are shown in Figure 35. These values compensate for propagation, turn-on, turn-off, and other delays in the memory system. They are specified separately for each memory group. When an I/O-channel bus transaction occurs, the I/O-channel extension, ioXebt, is substituted the corresponding value. The I/O-channel extensions must be sufficient for any memory group into which that I/O channel might transfer.

### mgebtsum

Programmed to contain the sum of mgebtcase and mgebtdobe. This value is used only during the slot check to compute the total time required for the bus cycle.

### mgebtdobe

Expands the CAS cycle at $\overline{\text{DOB}}$ fall by the specified time. This parameter is used to compensate for memory group buffer delays, device access time, and other operational requirements. If the bus cycle is a memory read cycle, $\overline{\text{OE}}$ is expanded. If the bus cycle is a memory write cycle, $\overline{\text{EWE}}$ is expanded and $\overline{\text{LWE}}$ fall is delayed the specified time.

### mgebtcase

Extends the CAS cycle by the specified amount after the unextended CAS time. $\overline{\text{DOB}}$, $\overline{\text{OE}}$, $\overline{\text{EWE}}$ and $\overline{\text{LWE}}$ will rise unextended. This parameter is used to allows for data hold times or to allow for devices to disable their output drivers. When used in combination with mgbtewe or mgbteoe, hold or disable times can be set in most increments of 4X-clock cycles.

The Memory Group 0-3 CAS Bus Timing Registers are shown in Figure 36. They define the basic timing for CAS-only cycles and the CAS portion of RAS cycles. Timing is specified separately for each memory group. The values that refer to $\overline{\text{CAS}}$ apply to CAS, $\overline{\text{CAS0}}$, $\overline{\text{CAS1}}$, $\overline{\text{CAS2}}$ and $\overline{\text{CAS3}}$, appropriately. The basic CAS cycle timing is augmented by mgXebt and ioXebt values.

### mgbtcas

Specifies the CAS-cycle precharge time, the time from the start of the CAS-timed portion of the memory cycle until $\overline{\text{CAS}}$ goes low.

### mgbtdob

Specifies the end of address time (column address hold) and the beginning of data time on the bus relative to the start of the CAS portion of the memory cycle. This is the time the CPU places write data on the bus or begins accepting read data from the bus.

### mgbtcast

Specifies the total unexpanded and unextended time of a CAS cycle, $\overline{\text{DOB}}$, $\overline{\text{OE}}$, $\overline{\text{EWE}}$ and $\overline{\text{LWE}}$ will rise at this time unless modified by mgbteoe or mgbtewe. This value is also used during the slot check to compute the total time required for the bus cycle.

### mgbtewea

In a system with fast SRAM, $\overline{\text{EWE}}$ fall at cycle start is needed to have an adequate write enable. Other devices require their addresses to be valid before write enable falls; in these cases $\overline{\text{CAS}}$ low is required.

### mgbtlwea

Specifies a delay of zero or one 4X-clock cycle after $\overline{\text{DOB}}$ fall, plus expansion for $\overline{\text{LWE}}$ fall. Expansion refers to the value of mgebtdobe or ioebtdobe, as appropriate. Allows adjustment for system and device delays. For example, DRAM expects data valid at its write-enable fall. In small systems $\overline{\text{DOB}}$ plus one 4X-clock cycle (with an expansion of zero) might be appropriate. In a large system with a heavily loaded (or buffered) $\overline{\text{LWE}}$, $\overline{\text{DOB}}$ might be appropriate for the fastest memory cycle. If a larger delay is needed, an expansion value can be set. Allows resolution of one 4X-clock cycle in expansion timing.

### mgbteoe

If set, $\overline{\text{OE}}$ rises one 4X-clock cycle before the end of the unextended CAS cycle. If clear, $\overline{\text{OE}}$ rises with the end of the unextended CAS cycle. One 4X-clock cycle is sufficient output-driver disable time for some devices; if not, output-driver disable time can be created in most increments of 4X-clock cycles by combining mgebtcase and mgbteoe.

### mgbtewe.

If set, $\overline{\text{EWE}}$ and $\overline{\text{LWE}}$ rise one 4X-clock cycle before the end of the unextended CAS cycle. If clear, $\overline{\text{EWE}}$ and $\overline{\text{LWE}}$ rise with the end of the unextended CAS cycle. One 4X-clock cycle is sufficient hold time for some devices; if not, hold time can be created inmost increments of 4X-clock cycles by combining mgebtcase and mgbtewe.

Figure 37. shows the Memory Group 0-3 RAS Bus Timing Registers. They define the timing for the RAS-prefix portion a of RAS memory cycle. Timing is specified separately for each memory group. The values are selected as needed for the memory devices used. Timing values that refer to $\overline{\text{RAS}}$ apply to RAS, $\overline{\text{RAS0}}$, $\overline{\text{RAS1}}$, $\overline{\text{RAS2}}$ and $\overline{\text{RAS3}}$, appropriately.

### mgbtrast

Programmed to contain the sum of mgbtras and mghtrhld plus one. At the end of this time the CAS portion of the memory cycle begins. This value is used only during the slot check to compute the total time required for the bus cycle.

### mbgtras

Specifies the RAS precharge time, the time $\overline{\text{RAS}}$ is high at the beginning of a RAS cycle. The time can be shortened with mgbteras.

### mghtrhld

Specifies the row-address hold time of a RAS cycle, immediately preceding the CAS timing portion of the cycle. The time can be lengthened with mgbteras. Immediately following this time the CAS address is placed on the bus, if appropriate.

### mgbteras

If set, reduces the RAS precharge time (specified by mgbtras) and extends the row-address hold time (specified by mgbtrhld) by one 4X-clock cycle.

Figure 38 shows the I/O Channel 0-7 Extended Bus Timing Registers.

These values compensate for signal propagation, turn-on, turn-off, device, and other delays in the memory and I/O systems. They are substituted for the memory group values, mgXebt, during I/O channel transfers and thus must be sufficient for the I/O device, as well as any memory group with which the I/O device will transfer.

### ioebtsum

Programmed to contain the sum of ioebtcase and ioebtdobe. This value is used only during the slot check to compute the total time required for the bus cycle.

### ioebtdobe

Expands the CAS cycle at $\overline{\text{DOB}}$ fall by the specified time. This parameter is used to compensate for memory group buffer delays, device access time, and other operational requirements. If the bus cycle is a memory read cycle, $\overline{\text{OE}}$ is expanded. IF the bus cycle a is memory write cycle, $\overline{\text{EWE}}$ is expanded and $\overline{\text{LWE}}$ fall if delayed the specified time.

### ioebtcase

Extends the CAS cycle by the specified amount after the unextended CAS time. $\overline{\text{DOB}}$, $\overline{\text{OE}}$, $\overline{\text{EWE}}$ and $\overline{\text{LWE}}$ will rise unextended. This parameter is used to allow for data hold times or to allow for devices to disable their output drivers. When used in combination with mgbtewe or mgbteoe, hold or disable times can be set in most increments of 4X-clock cycles.

Figure 39 shows a Memory System Refresh Address. This contains the next address used for memory-system refresh. The values are placed on the specified pins when refresh executes, and msrra is incremented by one. Time timing for a refresh cycle is set by msrtg, and those memory groups that are refreshed are set by mgXrd.

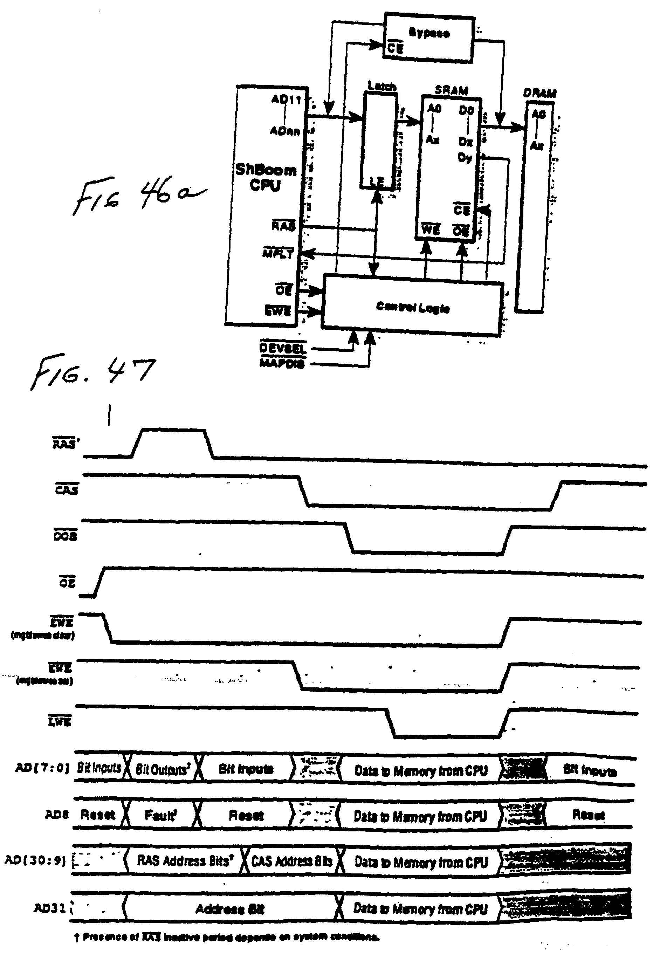

Figure 40 shows an IOP Delay Count Register. This contains the number of 2X-clock cycles until the IOP seizes the bus. The counter is decremented once each 2X-clock cycle. The counter can be used, for example, to determine if a time-critical task can be completed before the IOP seizes the bus, or to measure time in 2X-clock increments.

Figure 41 shows an I/O Device Transfer Types A Register. Figure 42 shows an I/O Device Transfer Types B Register. These registers specify one of three transfer types for the device attached to the corresponding I/O channel.
- Four-Byte Byte-Transfer Type: Transfers four bytes of data, one byte at a time, between the device and memory in a single bus transaction. The transaction consists of four bus cycles accessing the device, plus one additional busy cycle to access memory if the memory is cell-wide. All initial transfer addresses are to cell boundaries.
- One-Byte Byte-Transfer Type: Transfers one byte of data between the device and memory in a single bus transaction. The transaction consists of a single bus cycle. Transfers to cell-wide memory are to byte zero of the addressed cell, with the remaining 24 bits undefined. Transfers to byte-wide memory are to the specified byte.
- One-Cell Cell-Transfer Type: Transfers one cell of data between the device and memory in a single bus transaction. The transaction consists of one bus cycle to access the device, plus four additional busy cycles to access memory if the memory is byte-wide. All initial transfers are to cell boundaries.

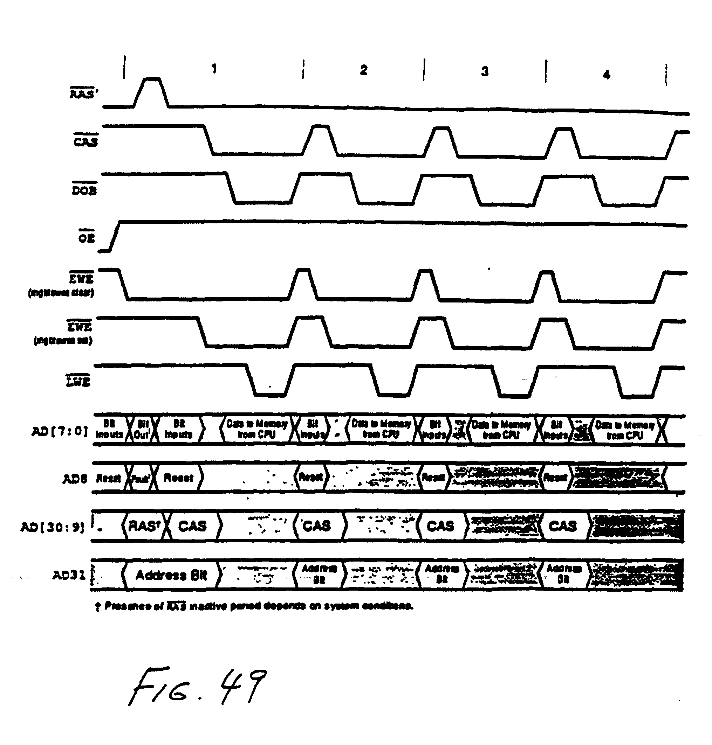

Figure 43 shows Reserved Register Addresses. These addresses are reserved.

Figure 44 shows a DMA Enable Expiration Register. This register clears the corresponding DMA enable bit in iodmae after a DMA I/O channel transfer is made to the last location in a 1024-byte memory page. This allows DMA on the corresponding I/O channel to be disable after transferring a predetermined number of bytes. See *Direct Memory Access Controller,* above.

Figure 45 shows a Driver Current Register. This register allows programming the relative amount of current available to drive the various singles out of the package. The programmed driver current has several effects.
- The amount of current selected determines the rise and fall times of the signals into a given load. The rise and fall times, PWB wire lengths, and PWB construction determine whether the signals will need to be treated as transmission lines, and whether signal terminations are required.
- Greater driver current increase di/dt, and thus increases package and system electrical noise. Though total power consumption does not change when driver current is changed (since the same load is charged, just slower or faster), there is less noise produced when di/dt is decreased. Reducing output driver pre-driver current also reduces package and system electrical noise, and can thus facilitate approval of electromagnetic compliance for products.

Programmable drivers allow the system designer to trade among system design complexity, system cost, and system performance.

Output drivers consist of a pre-driver and an output driver. The current-supply capability of each part of the output driver can be programmed separately. The low bit of each filed selects full- or half-drive capability on the pre-drivers for that set of signals. The upper one or two bits select 1/3-, 2/3- or full-drive capability.

The pre-drivers are supplied by the core logic power, and the noise generated by their operation can affect the performance of the CPU in systems with an inadequate power supply or decoupling. In such systems, lowering pre-driver current can possibly compensate for system design flaws.

The drivers are on two separate power buses: one for AD and one for control signals and all other output pins. As a result, inside the package, electrical noise caused by AD driver switching is prevented from corrupting the quality of the control signals. This separation, however, does not preclude noise coupling between the power pins outside the package. Depending on system loading, the output drivers account for 50% to 95% of the power consumed by the CPU, and thus are a potentially large noise source.

Figure 46 shows an IOP Reset Register. Writing any value causes the IOP to begin executing at its software reset executable-code vector (location Ox00000010) at the end of the current memory cycle. This is the mechanism used to clear bit 31 in the IOP PC after hardware reset, and to direct the IOP to execute a new procedure. The value of the register is -1 during the IOP reset process (i.e., from the time iopreset is written until the IOP begins execution of the software reset executable-code vector); otherwise, its value is zero.

Table 50 shows a Bit Field to On-Chip Register Cross Reference.

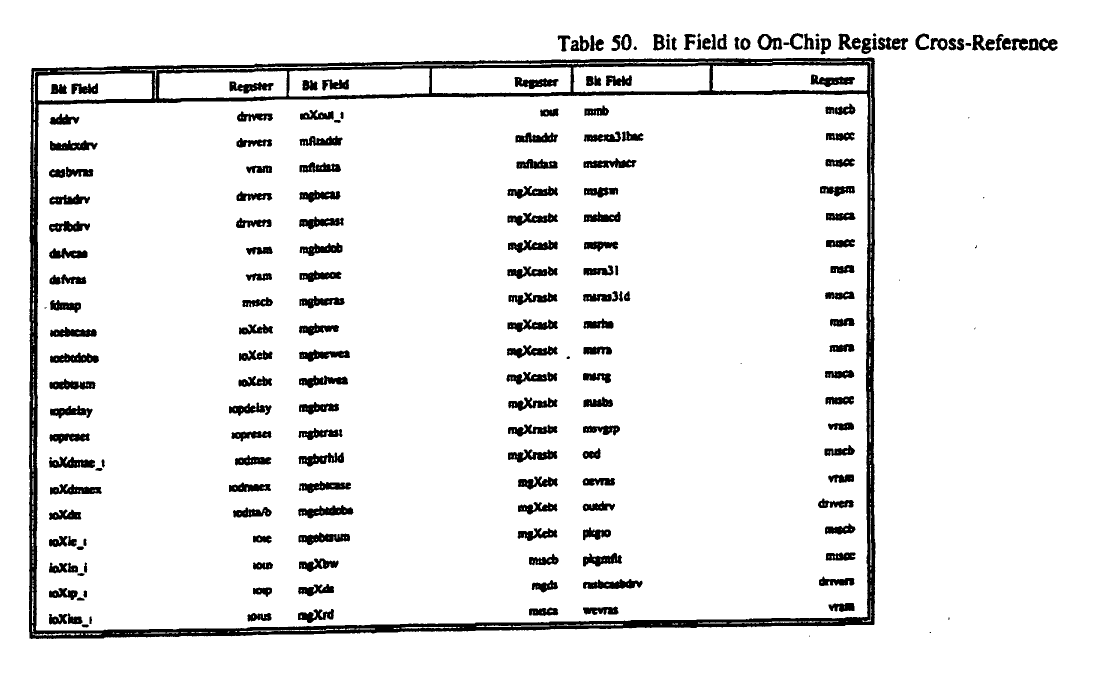

### BUS OPERATION

The MIF 120 handles requests from all sources for access to the system bus. Requests arrive and are prioritized, respectively, from the IOP 110, DMAC 112 and MPU 108. This order ensures that the IOP always has predictable memory timing, that DMA has bus availability (because the MPU can saturate the bus), and that memory coherency is maintained for the MPU.

### Operation

The MIF 120 must always grant the bus to the IOP 110 immediately when required in order to guarantee temporally deterministic IOP execution. To allow this, the IOP has exclusive access to the bus except when it is executing delay. When a DMA or MPU bus request is made, the MIF determines the type of bus transaction, computes the estimated time required (see Table 51), and compares this to iopdelay-the amount of time before the IOP seizes the bus. This available bus time is called the slot. If iopdelay is zero, the IOP currently has the bus. If iopdelay is larger than the value computed for the bus transaction, the bus is granted to the requestor. Otherwise, the bus remains idle until a bus request occurs that can be satisfied, or until the IOP seizes the bus. This slot check requires one 2X-clock cycle to complete. Once a bus request has passed the slot check, the bus transaction begins on the next 2X-clock cycle.

The slot check computation is an estimate because for I/O channel bus transactions ioXebt is used for all parts of the computation even though a mix of ioXebt and mgXebt times might be used during the transaction. The effect of this simplified computation is that the slot requested might be larger than the bus time actually sued. The bus becomes immediately available for use when the actual bus transaction completes.

Within the MPU, bus requests arrive from and are prioritized, from highest to lowest: posted-write, instruction pre-fetch, local-register stack spill or refill, operand stack spill or refill, 1d, st, and instruction fetch.

The address lines out of the CPU are multiplexed to reduce package pin count and provide an easy interface to DRAM. DRAMs have their addresses split into two pieces: the upper-address bits, or row address, and the lower-address bits, or column address. The two pieces of the address are clocked in the DRAM with two corresponding clock signals: $\overline{\text{RAS}}$ and $\overline{\text{CAS}}$. AD [31:0] also output higher-order address bits than the DRAM now and column addresses during RAS and CAS times, as well as data input or output during the last portion of each bus cycle while $\overline{\text{DOB}}$ is active. Bit outputs and bit inputs are also available on AD [7:0].

### I/O Addressing

All the address bits above the msgsm bits are referred to as the high address bits. These bits are typically used to address I/O devices with external decoding hardware. They can be configured to be included in RAS-cycle determination, or excluded for faster I/O cycles, to match the requirements of the external decoding hardware. See System Requirements Programming, above, for the available configuration options.

### Bus Transaction Types

The CPU supports both cell-wide and byte-wide memory, cell-wide and byte-wide devices, and single-or multi-bus-cycle transactions. Various combinations of these are allowed; they require one, four, or five bus cycles to complete the bus transaction, which can include zero, one, or two RAS cycles. The underlying structure of all bus cycles is the same. Depending on the programmed system configuration, device-memory combination, and current system state, RAS prefix and CAS parts of bus cycles are combined to provide correct address generation and memory device operation. Table 53 lists the various combinations of RAS and CAS cycles that are possible within a given bus transaction.

### MPU and IOP (non-xfer) Memory Cycles

The MPU and the IOP can read and execute programs stored in cell-wide or byte-wide memory. The MPU can also read data from and write data to cell-wide and byte-wide memory. All accesses to cell-wide or byte-wise memory involve an entire cell. Accesses to cell-wide memory involve an entire cell. Accesses to cell-wide memory thus require one bus cycle, while accesses to byte-wide memory require four busy cycles.

### Cell Memory Write from MPU

### Cell Memory Read to MPU/IOP

Table 53 and the referenced figures provide details regarding these bus transactions. These transactions require on bus cycle.

### Byte Memory Write from MPU

### Byte Memory Rad to MPU/IOP

Table 53 and the referenced figures provide details regarding these bus transactions. These transactions require four bus cycles. Byte address bits A1 and A0 are incremented from 0 to 3 to address the most-significant through the least-significant byte of the accessed cell.

### I/O-Channel Transfers

Depending on the device transfer type and memory device width, a variety of bus cycle combinations occur between I/O devices and memory, as shown in Table 52. These starting address for the transaction comes from the global register that corresponds to the I/O channel involved (g8 corresponds to I/O channel 0, ..., g15 corresponds to I/O channel 7). The direction of the transfer relative to memory is indicated by bit one of the same register. See Figure 12. The device transfer type for the transactions comes from the corresponding field in iodtta or iodttb. The bus transaction proceeds with the cycles and strobes listed in Table 55.

### Cell Memory Write from Four-byte Byte-transfer Device

Table 53 and the referenced figure provide details regarding the bus transaction. The transaction requires five bus cycles. Data is collected from the device and stored in the MIF during the first four bus cycles, and is written to memory by the MIF during the fifth bus cycle. Data that is written to memory while being collected from the device during the first four bus cycles is replaced during the fifth bus cycle. A31 is cleared to deselect the I/O device in order to prevent contention with the MIF during the fifth busy cycle. Byte address bits A and A0 are incremented from 0 to 3 to address the most-significant through the least-significant byte of the accessed cell while the data is being transferred from the device.

### Table 52.

### Cell Memory Read to Four-byte Byte Transfer Device

Table 53 and the referenced figure provide details regarding the bus transaction. The transaction requires five bus cycles. Data is collected from memory and stored in the MIF during the first bus cycle and written to the device by the MIF during the last four bus cycles. OE is suppressed during the last four bus cycles to prevent bus contention between memory and the MIF while the device is written. A31 is cleared to deselect the I/O device in order to prevent contention with memory during the first bus cycle. Byte address bits A1 and A0 are incremented from 0 to 3 to address the most-significant through the least-significant byte of the accessed cell while the data is being transferred to the device.

### Byte Memory Write from Four-byte Byte-transfer Device

Table 53 and the referenced figure provide details regarding the bus transaction. The transaction requires four bus cycles. Byte address bits A1 and A0 are incremented from 0 to 3 to address the most-significant through the least-significant byte of the accessed cell on both the device and memory. The data is transferred on the bus directly from the device to memory without the intervention of the MIF.

### Byte Memory Read to Four-byte Byte-transfer Device

Table 53 and the referenced figure provide details regarding the bus transaction. The transaction requires four bus cycles. Byte address bits A1 and A0 are incremented from 0 to 3 to address the most-significant through the least-significant byte of the accessed cell on both the device and memory, The data is transferred on the bus directly from memory to the device without the intervention of the MIF.

### Cell Memory Write from One-byte Byte-transfer Device

Table 53 and the referenced figure provide details regarding the bus transaction. The transaction requires bus cycle. Data is typically supplied by the device on AD [7:O], and is written to the corresponding bits in memory. AD [31:8] are also written to memory, and, if not driven by an external device, will still hold the address bits.

### Cell Memory Read to One-byte Byte-transfer Device

Table 53 and the referenced figure provide details regarding the bus transaction. The transaction requires one bus cycle. Data is typically taken by the device from AD [7:0], which come from the corresponding bits in memory. The other memory bits are driven by memory, but are typically unused by the device.

### Byte Memory Write from One-byte Byte-transfer Device

Table 53 and the referenced figure provide details regarding the bus transaction. The transaction requires one bus cycle. Addresses in the global registers normally address cells because the lowest two bits are unavailable for addressing. However, for this transaction, the address in the global register is a modified byte address. That is, the address is shifted left two bits (pre-shifted in software) to be correctly positioned for the byte-wide memory connected to AD. The address is not shifted again before reaching AD.A31 remains in place, A30 and A29 become unavailable, and the group bits exist two bits to the right of their normal position due to the pre-shifting in the supplied address. This transaction allows bytes to be transferred, one byte per bus transaction, and packed into byte-wide memory.

### Byte Memory Read to One-byte Byte-transfer Device

Table 53 and the referenced figure provide details regarding the bus transaction. The transaction requires one bus cycle. Addresses in the global registers normally address cells because the lowest two bits are unavailable for addressing. However, for this transaction, the address in the global register is a modified byte address. That is, the address is shifted left two bits (pre-shifted in software) to be correctly positioned for the byte-wide connected to AD). The address is not shifted again before reaching AD. A31 remains in place, A30 and A29 become unavailable, and the groups bits exist two bits to the right of their normal position in the due to the pre-shifting in the supplied address. This transaction allows bytes to be transferred, one byte per bus transaction, and unpacked from byte-wide memory to a device.

### Cell Memory Write from One-cell Cell-transfer Device

Table 53 and the referenced figure provide details regarding the bus transaction. The transaction requires one bus cycle.

### Cell Memory Read to One-cell Cell-transfer Device

Table 53. and the referenced figure provide details regarding the bus transaction. The transaction requires one bus cycle.

### Byte Memory Write from One-cell Cell-transfer Device

Table 53 and the referenced figure provide details regarding the bus transaction. The transaction requires five bus cycles. Data is collected from the device and stored in the MIF during the first bus cycle and written to memory by the MIF during the last four bus cycles. Data that is written to memory while being collected from the device during the first bus cycle is replied during the second cycle. A31 is cleared to deselect the I/O device in order to prevent contention with the MIF during the last four bus cycles. Byte address bits A1 and A0 are incremented from 0 to 3 to address the most-significant through the least-significant byte of the accessed cell while the data is being transferred from the MIF to memory.

### Byte Memory Read to One-cell Cell-transfer Device

Table 53 and the referenced figure provide details regarding the bus transaction. The transaction requires five bus cycles. Data is collected from memory and stored in the MIF during the first four bus cycles and written to the device by the MIF during the last bus cycle. $\overline{\text{OE}}$ is suppressed during the fifth bus cycle to prevent a bus contention between the memory and MIF while the device is written. A31 is cleared to deselect the I/O device in order to prevent contention with memory during the first four bus cycles. Byte address bits A1 and A0 are incremented from 0 to 3 to address the most-significant through the least-significant byte of the accessed cell while the data is being transferred from the memory to the MIF.

### Bus Reset

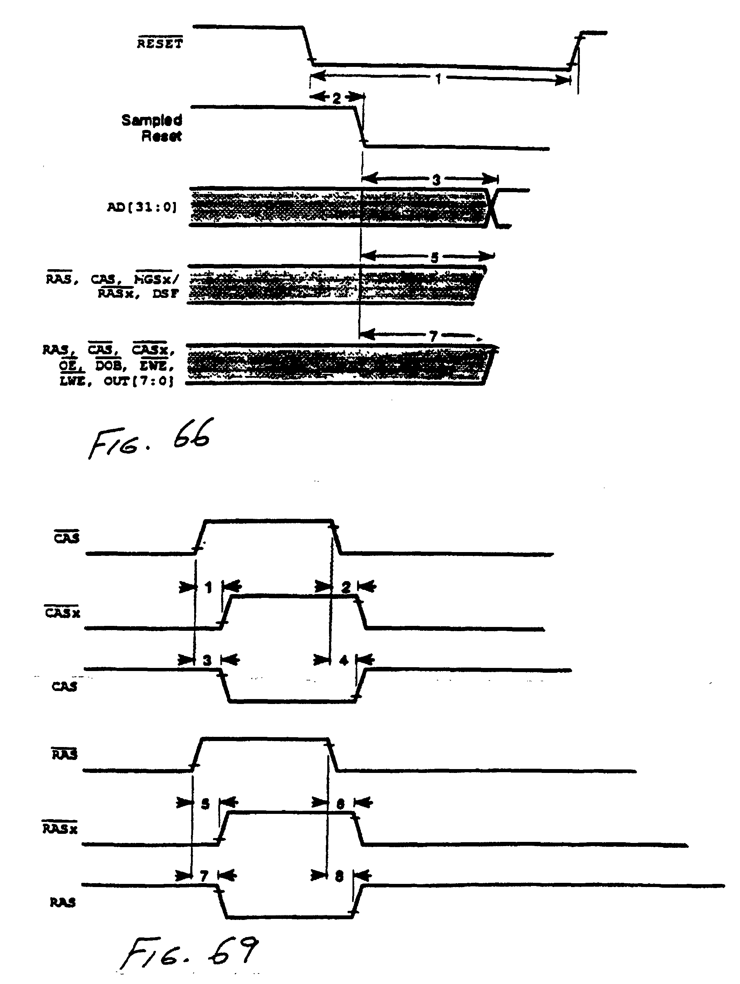

External hardware reset initializes the entire CPU to the power-on configuration, except for power_fail in mode. While the reset is active (external or power-on self-reset), the AD go to a high-impedance state, OUT [7:0] go high, RASes go active, and all other outputs go inactive. See Figure 66 for waveforms.

### Video RAM Support

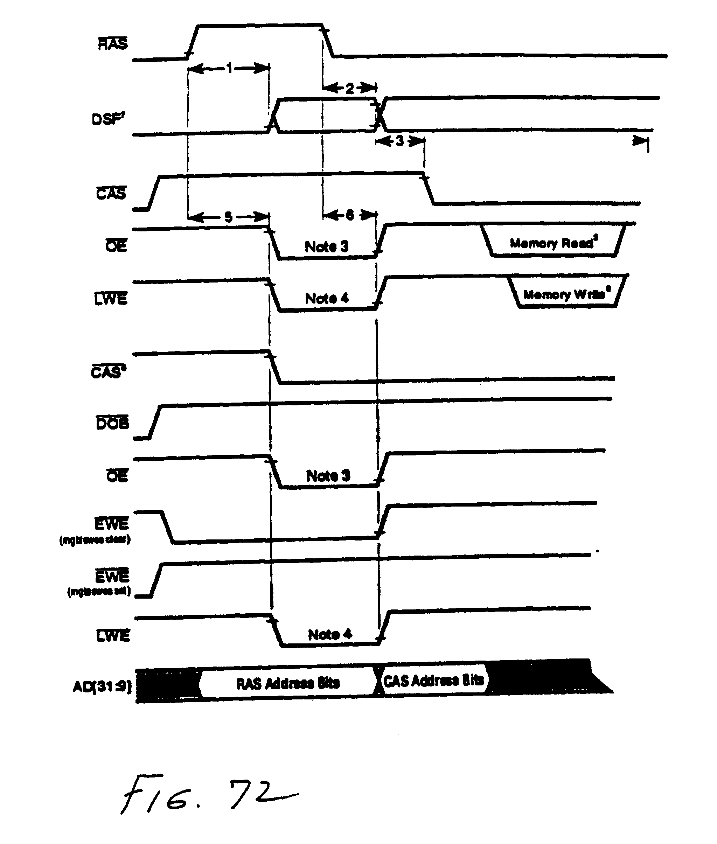

VRAMs increase the speed of graphics operations primarily by greatly reducing the system memory bandwidth required to display pixels on the video display. A VRAM command is used to transfer an entire row of data from the DRAM array to an internal serial access memory to be clocked out to the video display. VRAMs also support other commands to enhance graphics operations. The VRAM operations are encoded by writing vram and performing an appropriate read or write to the desired VRAM memory address. Basic timing for VRAM bus cycles is the same as any similar bus transaction in that memory group. See Figure 27. Refresh and RAS cycles might also affect VRAM operations. See Video RAM Support, above. Waveforms representing the effects of the various vram options are in Figure 72.

### Virtual-Memory Page Faults Input

The MIF detects memory page faults that are caused by MPU memory accesses by integrating fault detection with RAS cycles. The mapped page size is thus the size of the CAS page. The memory system RAS page address is mapped from a logical page address to a physical page address during RAS precharge through the use of an external SRAM. A memory fault signal supplied from the SRAM is sampled during $\overline{\text{RAS}}$ fall and, if low, indicates that a memory page fault has occurred. See Figure 46a. The memory fault signal is input from $\overline{\text{MFLT}}$ or AD8. See Alternate Memory Fault Input, below.

When a memory fault is detected, the bus transaction completes without any of the signals that would nor-really go active during the C^S part of the bus cycle. A memory fault exception is then signaled to the MPU, which will execute a trap to service the fault condition. See Figure 70, for waveforms.

### Alternate Inputs and Outputs

The bit inputs, bit outputs, memory fault input, and reset input can be multiplexed on AD rather than using the dedicated pins. This feature can be used to reduce the number of tracks routed on the PWB (to reduce PWB size and cost), and can allow the ShBoom CPU to be supplied in smaller packages. See Figure 74 for waveforms.

### Alternative Bit Inputs

The bit inputs can be sampled either from $\overline{\text{IN}}$ [7:0] or from AD [7:0] while $\overline{\text{RAS}}$ is low and $\overline{\text{CAS}}$ is high. The source is determined by pkgio. See Figure 29 and Bit Inputs, above.

### Alternative Bit Outputs

The bit outputs appear both on OUT [7:0] and on AD [7:0] while $\overline{\text{RAS}}$ is high. Since they appear in both places, no selection bit is required. See Bit Outputs, above.

### Alternative Memory Fault Input

The memory fault signal can be sampled either from $\overline{\text{MFLT}}$ or from AD8 during $\overline{\text{RAS}}$ fall. The source is determined by pkgmflt. See Figure 34.

### Alternative Reset Input

External hardware reset can be taken either from $\overline{\text{RESET}}$ or from AD8; the determination is made at power-on. The power-on and reset sequence is described in detail in Processor Startup, below.

### PROCESSOR STARTUP

### Power-on Reset

The CPU self-resets on power-up (see Reset Process, below). The CPU contains an internal circuit that holds internal reset active and keeps the processor from running, regardless of the state of the external hardware reset, until the supply voltage reaches approximately 3 V. Once the supply reaches 3 V, $\overline{\text{RESET}}$ is sampled and, if active, is used as the source of external reset for the CPU. Otherwise, external reset is multiplexed on AD8. This determination applies until power is cycled again. If one of the resets is active, the CPU waits until that reset goes inactive before continuing. If neither reset source is active, the processor immediately begins the reset sequence. The clock input at CLK, therefore, must be stable before that time.

If the system is capable of running as the power supply rises from 3 V to normal supply voltage, and the system does not require an external reset, then $\overline{\text{RESET}}$ need not be connected and AD8 need not be driven as a reset source. Otherwise, external reset must be held low long enough for the clock, power, and other system components to power up properly before reset rises to logic high and allows the CPU to run.

During the power-on-reset process, the mode bit power_fail is set to indicate that the power had previously failed. The bit is cleared by any write to mode.

### Boot Memory

The CPU supports booting from byte-wide memory that is configured as either an $\overline{\text{OE}}$-activated or boot-only memory device. The boot-only memory configuration is primarily used to keep the typically slow boot EPROMs out of the heavily used low-address memory pages.

Boot-only memory is distinct from $\overline{\text{OE}}$-activated memory in that it is wired into the system to place data on the bus without the use of OE or memory bank- or group-specific ($\overline{\text{RAS}}$ x or $\overline{\text{CASx}}$) signals. OED is initially set during a CPU reset to disable $\overline{\text{OE}}$ during the boot-up process to allow the described operation. The boot-only memory select signal is externally decoded from the uppermost address bits that contain 0x800 .... The number of uppermost address bits used depends on the system's I/O device address decoding requirements. The lowest address bits are connected so as to address individual bytes and cells as they are for a normal memory. Thus the boot-only memory device will be selected regardless of which memory group is accessed.

### Reset Process

When reset occurs, the CPU leaves on-chip RAM uninitialized and clears most registers to zero, except for strategically placed bits that assist in the reset sequence. Specifically, the CPU resets to the most conservative system configuration. See Table 54. The mode bit power_fail is set only by the power-on-reset process and can be checked to determine whether the reset was caused by a power failure or reset going active.

The first bus transaction after reset is a cell read of four bytes from byte-wide memory in memory group zero, memory bank zero, starting from addresses 0x80000000, with $\overline{\text{OE}}$ disabled, in SMB mode. This address consists of I/O device address 0x800... and memory device address 0x...N. Because $\overline{\text{OE}}$ is disabled, $\overline{\text{OE}}$-activated memory will not respond, thus allowing a boot-only memory to respond.

The CPU tests the byte returned from address 0x80000000. If the byte is Oxa5 then a boot-only memory responded and execution continues with $\overline{\text{OE}}$ disabled. Otherwise, a boot-only memory did not respond, and the CPU assumes booting will occur from $\overline{\text{OE}}$-activated memory. The CPU then clears OED to activate $\overline{\text{OE}}$ for this memory to respond on subsequent bus cycles.

### Bootstrap Programs

With either boot-only or $\overline{\text{OE}}$-activated memory, bus accesses continue in SMB mode from the byte-wide memory device. The second bus transaction is to the hardware reset address for the IOP at 0x80000004. This typically contains a jump to a small refresh/delay loop. The delay makes the bus available and allows the MPU to begin executing at its reset address, 0x80000008.

If the system is wired in MMB mode, booting is simpler from a boot-only memory. Booting from $\overline{\text{OE}}$-activated memory is also possible, but requires external gating to prevent bank zero of memory groups one, two, and three from being selected when memory group zero is accessed.
Next, the MPU begins executing and typically is programmed to branch to the system bootstrap routine. The MPU bootstrap is programmed to:
- set the configuration registers needed for the system hardware,
- set the software reset vector for the 1OP,
- copy the initial MPU and IOP application programs from the boot device into memory (if needed),
- branch to the application program for the MPU, and
- reset the 1OP in software to begin 1OP program execution.

### System startup is now complete.

The following pages describe several startup configurations. For actual code see Example ShBoom CPU System, below. The configurations described below are:
- Boot from byte-wide boot-only memory and copy the application program to cell-wide R/W memory.
- Boot from cell-wide boot-only memory and copy the application program to cell-wide R/VV memory.
- Boot and run from byte-wide memory.
- Boot and run from cell-wide memory.
Boot from Byte-Wide Boot-Only Memory and Copy the Application Code to Cell-Wide RA/V Memory

This process requires external decoding hardware to cause the boot-only memory to activate as previously described.

To indicate that boot-only memory is present, the memory must have 0xa5 at location zero. This signature byte must be detected at startup to continue the boot process from a boot-only memory.

### Construct the boot program execution sequence to be as follows:

1. The IOP executes JUMP from is power-on-reset location to code that performs eight RAS cycles on each memory group (by performing refresh cycles) to initialize system DRAM. It then enters a micro-loop that includes refresh for DRAM, and delay to allow the MPU to execute. The micro-loop repeats refresh and delay, and eliminates the need for the IOP to access the bus for further instructions during configuration delay allows the MPU bus access to begin configuring the system before more refresh cycles are required. The refresh cycles are not required if the system does not contain DRAM.
2. The MPU executes br from its reset location to the program code to configure the system. The br should contain bits that address memory group three. This will later allow the configuration for memory group three to be used for boot-only device access timing while memory groups zero, one and two are programmed for the system timing requirements. Although memory group one or two could be used instead of three in the manner described herein, only memory group three will be discussed for simplicity.
   The MPU configuration program code should be arranged to hold off instruction pre-fetch so that the configurations of the current memory group and the global memory system are not changed during a bus cycle.
3. When programming miscb, set mmb if required. In systems wired for MMB mode this allows RAS-type cycles to occur properly on all memory groups.
4. Set msgsm to define four memory groups, even if the system will ultimately not have them. During the next instruction fetch the boot-only memory will again be selected. However, the address bits for memory group three placed in the PC by br in step two will cause the configuration for memory group three to be used.
5. Program the timing of memory group three to optimize access to the boot-only memory. Then program the remainder of the system configuration. During this Process the IOP will typically perform three or so sets of refresh cycles. Though it is possible for the MPU to be changing pertinent configuration registers during a refresh cycle, it is very unlikely due to the long bus cycle times of EPROMs typically used for boot-only memory. Further, the worst result would be inappropriate timing on a single refresh cycle, which is of little actual consequence since there is no data yet in DRAM to be protected.
   If memory group three is used by the application, it will need to be configured later from the loaded application code.
6. Read the final boot code (if any) and the application program from the boot-only memory and write them to the appropriate locations in RAN memory. The entire application program can be loaded into R/W RAM, except for that part, if any, that is destined for memory group three, where the boot-only memory is running. This will need to be copied by the application once it is running.
7. Layout a single instruction group that contains programming to clear O£O and to branch to the application program. Using br [ ] clears A31 so that the boot-only memory will not activate at the branch destination.
8. Now the application program is executing. Configure memory group three, if needed. If loading memory group three from the boot-only memory is necessary, then arrange the code between two instruction groups to first ensure pre-fetch is complete, then set OED, then execute a micro-loop to transfer the application to memory group three, and reenable OED when the micro-loop completes.
9. Reset the 1OP in software to begin execution of its application program. A software reset of the 1OP causes it to begin executing at Ox1O, and as a result clears A31 from the 1OP PC so the boot-only memory will no longer be selected.

The boot process is complete.

### Boot from Cell-Wide Boot-Only Memory and Copy the Application Program to Cell-Wide R/W Memory

This process requires external decoding hardware to cause the boot-only memory to activate as previously described.

The CPU always initially boots from byte-wide memory since this is the reset configuration. The CPU will execute instructions from the low byte of each address until the configuration for the current memory group is programmed to be cell wide. Up to this point, the upper 24 bits of the boot-device data will be unused. The boot process is otherwise the same as booting from byte-wide boot-only memory, except that at step 3, when writing miscb, also set memory groups zero and three to be cell-wide. In the instruction group with the sto to mcb place a br to the next instruction group. This will hold off pre-fetch so that the next instruction fetch will be cell-wide. Note that the boot-only memory must be carefully programmed so that the instructions before the br are represented as byte-wide and after the br are represented as cell-wide.

### Boot and Run from Byte-Wide Memory

This process requires the boot/run memory device to be activated by $\overline{\text{MGSO}}$/$\overline{\text{RASO}}$/$\overline{\text{CASO}}$. A31 is not used when selecting the boot/run memory.

To indicate that $\overline{\text{OE}}$-activated memory is present, the memory must not respond with Oxa5 at location zero when $\overline{\text{OE}}$ is not asserted. The lack of this signature byte is detected at startup to indicate that $\overline{\text{OE}}$ is required to continue the boot process. OED is set during a CPU reset to disable OED during the boot-up process, and cleared when the signature byte Oxa5 is not detected, re-enabling $\overline{\text{OE.}}$

Construct the boot program execution sequence to be as follows:
1. The lOP executes JUMP from its power-on-reset location to code that perform eight RAS cycles on each memory group (by performing refresh cycles) to initialize system DRAM. It the enters a micro-loops that includes refresh for DRAM, and delay to allow the MPU to execute. The micro-loop repeats refresh and delay, and eliminates the need for the IOP to access the bus for further instructions during configuration delay allows the MPU bus access to begin configuring the system before more refresh cycles are required. The refresh cycles are not required if the system does not contain DRAM.
2. The MPU executes br from its reset location to the program code to configure the system.
   The MPU configuration program code should be arranged to hold off instruction pre-fetch so that the configurations of the current memory group and the global memory system are not changed during a bus cycle.
3. When programming miscb, set mmb if required. In systems wired for MMB mode this allows RAS-type cycles to occur properly on all memory groups.
4. Program the timing of memory group zero to optimize access to the memory. Then program the remainder of the system configuration. During this process the lOP will typically perform three or so sets of refresh cycles. Though it is possible for the MPU to be changing pertinent configuration registers during a refresh cycle, it is very unlikely due to the long bus cycle times of EPROMs. Further, the worst result would be inappropriate timing on a single refresh cycle, which is of little actual consequence since there is no data yet in DRAM to be protected.
5. Reset the 1OP in software to begin execution of its application program. A software reset of the 1OP causes it to begin executing at 0x10, and as a result clears A31 from the 1OP PC so the boot-only memory will no longer be selected.
6. Begin execution of the application program.

The boot process is complete.

### Boot and Run from Cell-Wide/Memory

This process requires the boot/run memory device to be activated by $\overline{\text{MGSO}}$/$\overline{\text{RASO}}$/$\overline{\text{CASO}}$. A31 is not used when selecting the boot/run memory.

The CPU always initially boots from byte-wide memory since this is the reset configuration. The CPU will execute instructions from the low byte of each address until the configuration for the current memory group is programmed to be cell wide. Up to this point, the upper 24 bits of the boot-device data will be unused. The boot process is otherwise the same as booting and running from byte-wide memory, except that at step 3, when writing miscb, also set memory group zero to be cell-wide. In the instruction group with the sto to miscb place a br to the next instruction group. This will hold off pre-fetch so that the next instruction fetch will be cell-wide. Note that the boot-only memory must be carefully programmed so that the instructions before the br are represented as byte-wide and after the br are represented as cell-wide.

### Stack Initialization

After CPU reset both of the MPU stacks should be considered uninitialized until the corresponding stack pointers are loaded, and this should be one of the first operations performed by the MPU.

After a reset, the operand stack is abnormally empty. That is, s2 has not been allocated, and will be allocated on the first push operation. However, popping this item will cause the stack to be empty and require a refill. The first pushed item should therefore be left on the stack, or sa should be initialized, before the operand stack is used further.

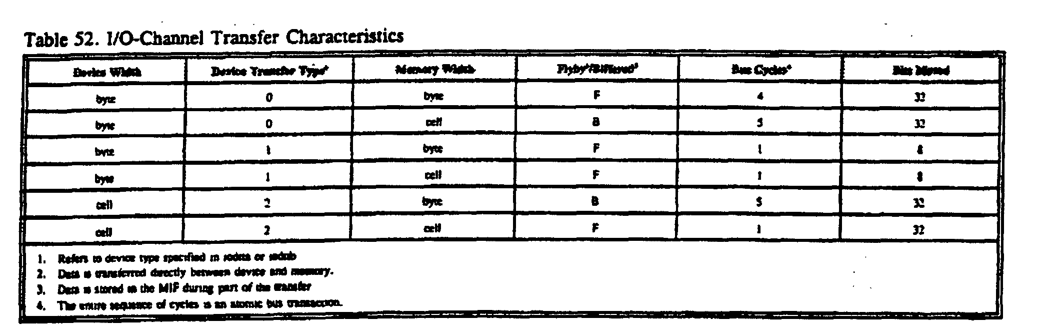

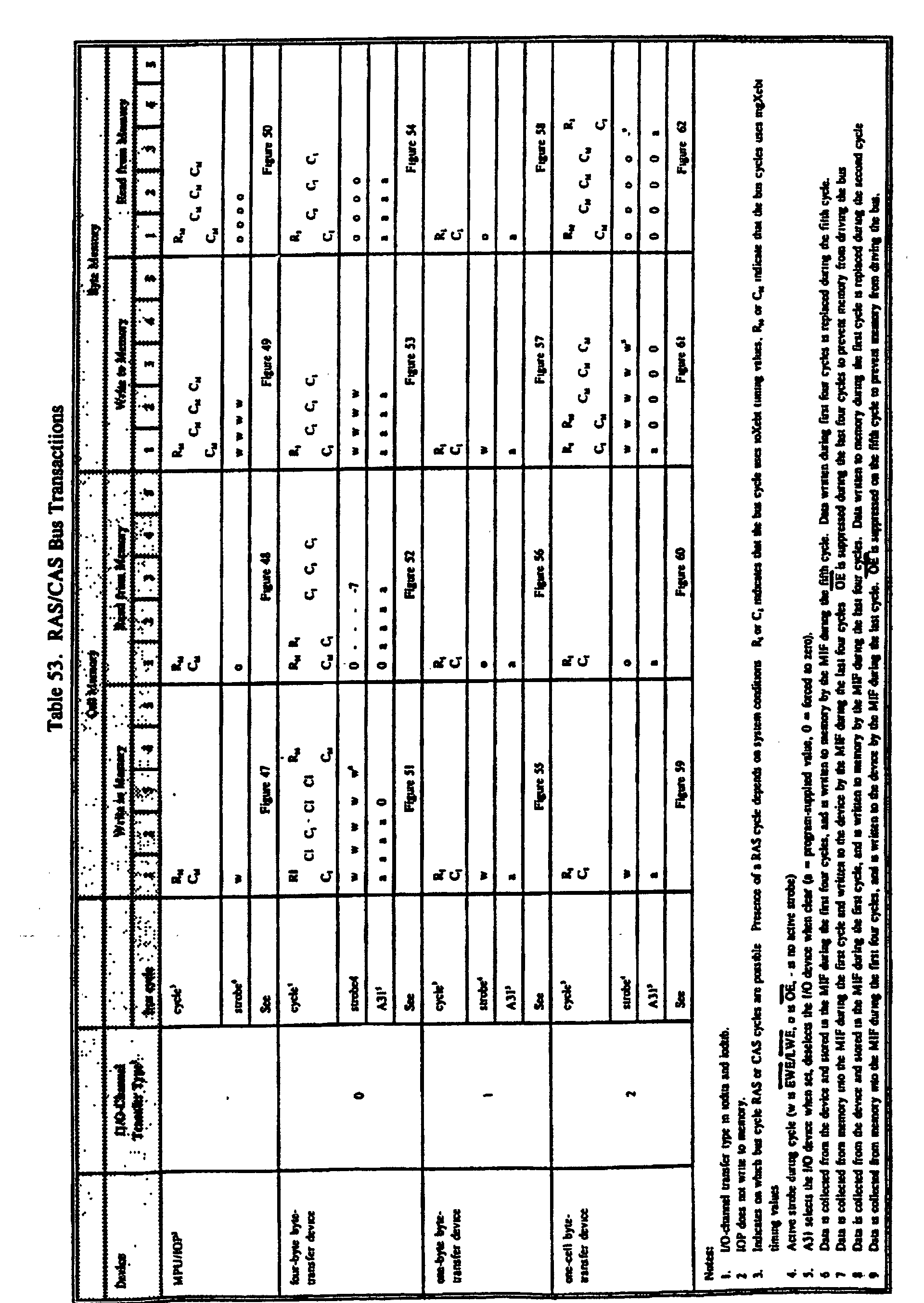

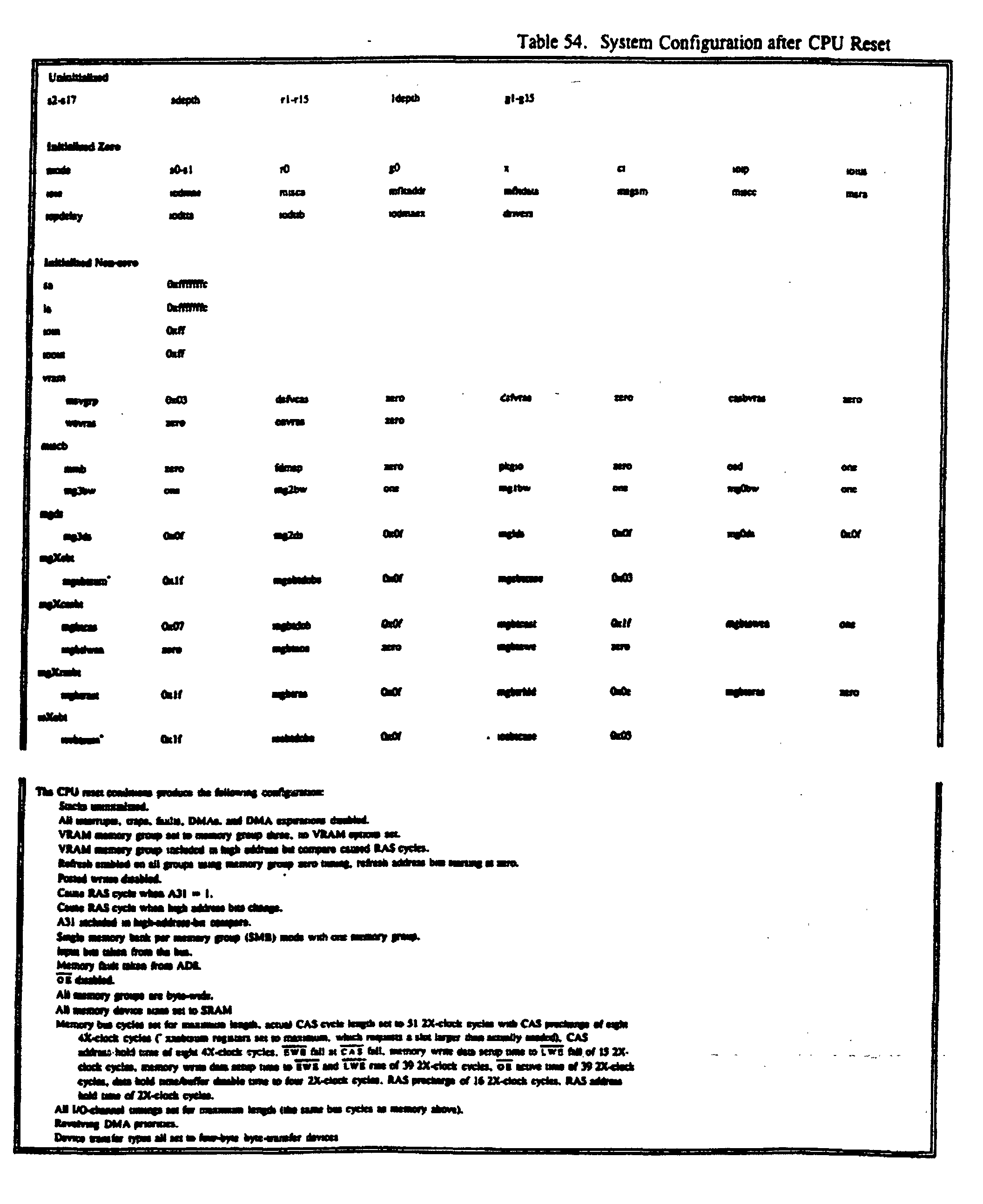

### EXAMPLE ShBoom CPU SYSTEMS

### Example System 1

Figure 68 depicts a minimal system with an 8-bit wide EPROM in memory group zero, and 256K of 8-bit-wide DRAM in memory group one. Memory group zero and memory group one should be configured with timing appropriate for the devices used, and mglds set to 0x02 appropriate for the devices used, and mglds set to 0x02 (256K DRAM). Otherwise, the default system configuration is suitable. The system can boot and run directly from the EPROM, or, since EPROMs are generally slower than DRAM, can copy the EPROM into DRAM for faster code execution.

### Example System 2

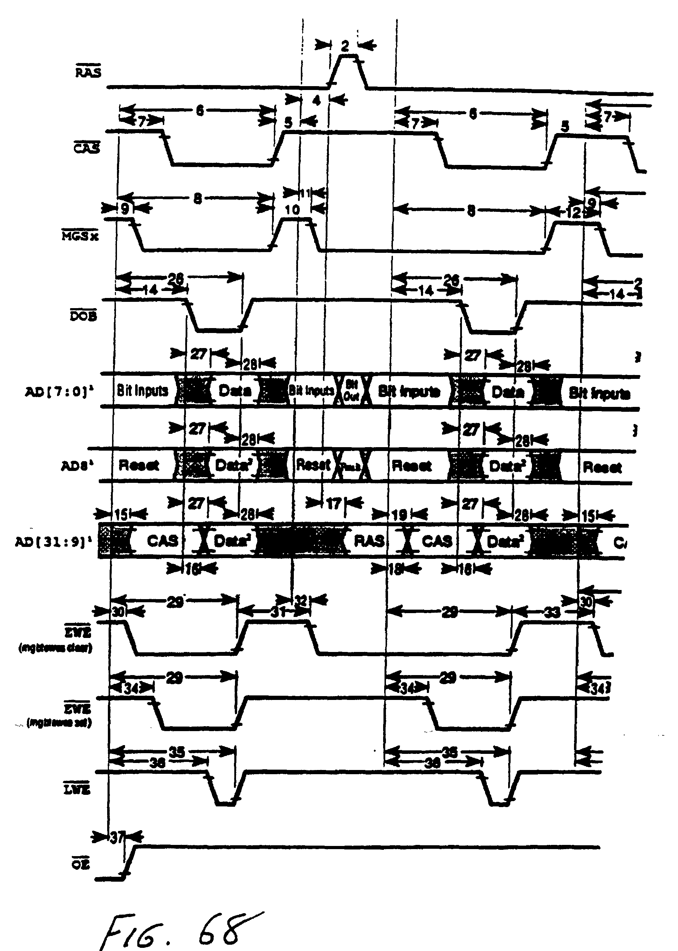

Figure 69 depicts a minimal system with 32-bit-wide DRAM in memory group zero, an 8-bit-wide-EPROM as a boot-only memory device, and an I/O address decoder. The I/O address decoding is performed by a 74HC137, a 3-to-8 decoder with latch. The decoder is wired to supply four device selects when A31 is set, and another four when A31 is clear. The sets of four selects are latched during RAS precharge and enabled during $\overline{\text{CAS}}$ active. They are decoded from A30 and A29 when a 32-bit-wide memory group is involved and from A28 and A27 when an 8-bit-wide memory group is involved. The device select with A31 set and the other decoded address bits clear is used to select the EPROM as a boot-only memory device.

The EPROM must be programmed with 0xa5 at location zero. Memory group zero should be configured with timing appropriate for the devices used, mg0bw set to zero (cell wide), and mg0ds set to 0x02 (256K DRAM). Since RAS is used to latch the I/O address, msras31d, mshacd and msexa31hac must remain in their default configuration of clear.

### Example System 3

Figure 70 depicts a system with 32 KB of 32-bit-wide SRAM in memory group zero, 1 MB of 32-bit-wide DRAM in memory group one, an 8-bit-wide EPROM as a boot-only memory device, and an I/O address decoder. Address latching of the CAS address for the SRAM is performed by two 74ACT841 transparent latches. The address inputs of the DRAM and EPROM are also connected to the outputs of the latches, though they could have been connected to the corresponding AD instead. The I/O address decoding is performed by a 74FCT138A, a 3-to-i decoder, using the latched CAS address bits. The decoder is wired to supply eight device selects when A31 is set. The selects are enabled during $\overline{\text{CAS}}$ active. They are decoded from A30 and A29 when the DRAM memory group is involved and from A20 and A21 when the SRAM memory group is involved. Since the EPROM is 8-bit-wide, the selects are decoded address bits clear is used to select the EPROM as a boot-only memory device.

The EPROM must be programmed with 0xa5 at location zero. The memory groups should be configured with timing appropriate for the devices used, mg0bw and mg1bw set to zero (cell wide), mg0ds set to 0x0f (SRAM), and mg1ds set to 0x02 (256K DRAM). Since RAS is not used to latch the I/O address, msras31d, mshacd and msexa31hac can be set to reduce the number of RAS cycles involved in I/O.

### ELECTRICAL CHARACTERISTICS

### Power and Grounding

The ShBoom CPU is implemented in CMOS for low average power requirements. However, the high clock-frequency capability of the CPU can require large switching currents of as much as eleven amperes, depending on the output loading. Thus, all V_{cc} and Vₛₛ should be connected to planes within the PWB (printed wire board) for adequate power distribution.

The switching current required by cV_{cc} and cVₛₛ is characterized by the internal clock and output driver pre-drivers. The internal clock requires approximately 500 mA with significant 5-GHz frequency components every clock transition. The output driver pre-drivers require as much as 3 A with significant 1-GHz frequency components every output transition. Package diagrams indicate which of cV_{cc} and cVₛₛ are closest to the internal clock drivers.

The switching current required by ctrV_{cc} and ctrlVₛₛ is characterized by the supplied output drivers and externally attached loads. Assuming a worst-case average load of 100 pF and 16 pins switching at once, these drivers would require 2.67 A with significant 300-MHz frequency components every output transition. Switching-current requirements reduce substantially linearly with a reduction in external loading.

The switching power required by adV_{cc} and adVₛₛ is characterized by the supplied output drivers and externally attached loads. Assuming a worst-case average load of 100 pF and 32 pins switching at once, these drivers would require 5.33 A with significant 300-MHz frequency components every output transition. Switching-current requirements reduce substantially linearly with a reduction in external loading.

### Power Decoupling

Due to the switching characteristics discussed above, power decoupling at the CPU is typically required. Surface-mount capacitors with low ESR are preferred. Generally, smaller-sized and smaller-valued capacitors have better frequency characteristics (i.e., lower series inductance, resulting in higher self-resonance frequency) than larger-sized and larger-valued capacitors, making it preferable to use an assortment of smaller to larger capacitor values. The smallest-valued capacitors and the local charge in teh PWB power planes (typically about 100 pF/in²) will supply the current requirements of the initial highest-frequency components of the switching signals, while the larger capacitors will supply the lower-frequency components. Appropriate decoupling also reduces EMC problems.

The charge supply required by the decoupling capacitors can be calculated from the relation C = I/(fΔV), where I is the current require, f is the frequency, and ΔV is the allowed voltage drop, typically .1 V. Thus, cV_{cc} and cVₛₛ require 1000 pF for the internal clock and .03 µF for the output driver pre-drivers, while ctrlV_{cc} and ctrlVₛₛ together with adV_{cc} and adVₛₛ require .24 µF. These requirements can generally be met with:
- four 100 pF NPO capacitors, or equivalent capacitance in smaller capacitors, mounted, one each. as close to each of the sets cV_{cc} and cVₛₛ as possible, on the same side of the PWB as the ShBoom CPU package, if appropriate;
- four 4700 pF X7R capacitors, mounted as above, on the opposite side of the PWB from the ShBoom CPU package, if appropriate;
- four 4700 pF X7R capacitors, mounted as above, on the opposite side of the PWB from the ShBoom CPU package; and,
- six .047 µF X7R capacitors, distributed amound ctrl V_{cc} and ctrlVₛₛ, and among adV_{cc} and adVₛₛ, as close to those pins as practical.
Note that the above represent essentially worst-case requirements. If the average output driver loading is 50 pF rather than 100 pF, the six .047 µF X7R capacitors could be reduced to three or four; other engineering trade-offs can also be made.

Note that mounting capacitors on teh same PWB surface as the ShBoom CPU package can allow connecting traces of about 25 mils in length, while mounting capacitors on the opposite PWB surface requires traces of over 100 mils in length. At the switching frequencies listed, the difference in trace lengths creates significant differences in decoupling effectiveness. The package and capacitor power and ground connections should be fabricated with VIP (via-in-pad), if possible, for the same reasons.

### Connection Recommendations

All output drivers are designated to directly drive the heavy capacitive loads of memory systems, thus minimizing the external components and propagation delays associated with buffering logic. However, with increased loading comes increased power dissipation, and trade-offs must be made to ensure that the ShBoom CPU operating temperature does not exceed operating limitations. Systems with heavy CPU bus loads might require heat sinks or forced air ventilation. Note that reducing output driver current does not reduce total power dissipation because power consumption is dependent on output loading and not on signal transition edge rates.

To reduce system cost, all inputs have internal circuitry to provide a stable input voltage if the input is unused. Thus, unused inputs do not need pull-ups.

$\overline{\text{RESET}}$ contains an approximately 10K ohm pull-up to cV_{cc}, and is a CMOS Schmitt-trigger.

$\overline{\text{MFLT}}$ contains an approximately 20K ohm pull-up to cV_{cc}.

$\overline{\text{IN}}$[7:00] each contain a TBD K ohn pull-up to cV_{cc}.

AD each have repeaters with an impedance of approximately 5K ohms to cV_{cc} and cVₛₛ. These will maintain the last bus state when the pin is otherwise undriven.

### Clock

The ShBoom CPU requires an external CMOS oscillator at one-half the processor frequency. The oscillator is doubled internally (2X-clock cycle) to operate the MPU and the IOP, and doubled again to provide fine-granularity programmable bus timing (4X-clock cycle).

Inexpensive oscillators typically have guaranteed duty cycles of only 60/40. The narrower half of the clock cycle would normally represent at clock period at which the CPU appears to be operating. A 100-MHz CPU would thus be limited with a 60/40 oscillator to 80 MHz (40 MHz externally), because with an 80 MHz 2X-clock the 40% clock period would be 10 ns. To obtain 100-MHz speed, a much more-expensive oscillator would be needed. To reduce system cost and increase system performance, the CPU intenally uses a phase-locked loop circuit to stabilize the oscillator input an lock in a 50/50 duty cycle.

The 2X-clock frequency selected should depend on application and system hardware requirements. A clock frequency might be selected for the IOP t produce appropriate application timing, or for the MIF to optimize bus timing. For instance, if the system requires a 35 ns bus cycle, it might be more efficient to operate at 84 MHz with a three 2X-clock cycle long bus cycle (35.7 ns) than to operate at 100 MHz with a four 2X-clock cycle long bus cycle (40 ns).

**Table 55.**

| Absolute Maximum Ratings | | | | | |
|---|---|---|---|---|---|
| **Characteristic** | **Symbol** | **Min** | **Max** | **Unit** | **Notes** |
| Core Logic Supply Voltage | cV_{cc} | -0.5 | +6.5 | V | 1 |
| Control Driver Supply Voltage | ctrIV_{cc} | -0.5 | +6.5 | V | 1 |
| AD Driver Supply Voltage | adV_{cc} | -0.5 | +6.5 | V | 1 |
| DC Input Voltage | V₁ | -0.5 | +6.5 | V | |
| DC Output Voltage | Vₒ | -0.5 | +6.5 | V | output Hi-Z |
| | | -0.5 | V_{cc}+0.5 | V | output driven |
| DC Input Diode Current | I_{IK} | | -50 | mA | V₁<Vₛₛ |
| DC Output Diode Current | I_{OK} | | -50 | mA | |
| | | | +50 | mA | |
| Storage Temperature | T_{STG} | -65 | +150 | °C | |
| Case Temperature Under Bias | T_{c} | -65 | +125 | °C | |
| Operating Juncoon Temperature | Tₗ | TBD | +125 | °C | |
| Notes: | | | | | |
| Stressing the device beyond Absolute Maximum Ratings can cause the device to sustain permanent damage. Operating the device beyond Operating Conditions is not recommenced and can reduce device reliability. Functional operation at Absolute Maximum Ratings is not guaranteed. | | | | | |
| 1. cVₛₛ. ctrlVₛₛ and adVₛₛ are required tobe at the same potential. | | | | | |

**Table 56.**

| Operating Conditions | | | | | |
|---|---|---|---|---|---|
| **Characteristic** | **Symbol** | **Min** | **Max** | **Unit** | **Notes** |
| Core Logic Supply Voltage | cV_{cc} | 3.0 | 5.5 | V | |
| Control Driver Supply Voltage | ctrlV_{cc} | 3.0 | 5.5 | V | |
| AD Driver Supply Voltage | adV_{cc} | 3.0. | 5.5 | V | |
| Input Voltage | Vₗ | 0 | 5.5 | V | |
| Output Voltage | Vₒ | 0 | 5.5 | V | output Hi-Z |
| | | 0 | V_{cc} | V | output driven |
| Output Current | I_{ON} | | TBD | mA | |
| | I_{OL} | | TBD | mA | |
| Input Clock | I_{c} | | 100 | MHz | |
| Case Temperature Under Bus | T_{c} | 0 | +85 | °C | |
| Free-Air Operating Temperature | T_{A} | -4.0 | +85 | °C | |
| Input Edge Rate | ΔVΔV | 0 | TBD | ns/V | I |
| Notes: 1. V_{IN} = V_{IN-MIN} - V_{IL-MAX} | | | | | |

**Table 57.**

| DC Specifications | | | | | |
|---|---|---|---|---|---|
| **Characteristic** | **Symbol** | **Min** | **Max** | **Unit** | **Notes** |
| Input Low Voltage | V_{IL} | 0 | 0.8 | V | except CLK |
| | | 0 | TBD | | CLK only |
| Input High Voltage | V_{IH} | 2.0 | cV_{cc} | V | except CLK |
| | | 2.5 | cV_{cc} | V | CLK only |
| Output Low Voltage | V_{OL} | | 0.45 | V | I_{oL} = x.x mA |
| Output High Voltage | V_{OH} | 2 4 | | V | I_{oL} = x.x mA |
| Input Leakage Current | I_{U} | | ±10 | µA | 0< = V_{IN} < = V_{CC} |
| Output Leakage Current | I_{OL} | | ±10 | µA | 0.45<V_{OUT}<V_{CC} |
| Power Supply Current | I_{CC} | | TBD | mA | |
| Input Capacitance | C_{IN} | | 8 | pF | 1 |
| I/O or Output Capacitance | C_{OUT} | | 10 | pF | 1 |
| **Notes:** | | | | | |
| 1. f_{C} = 1 MH_{Z}. Capacitance values are not tested. | | | | | |

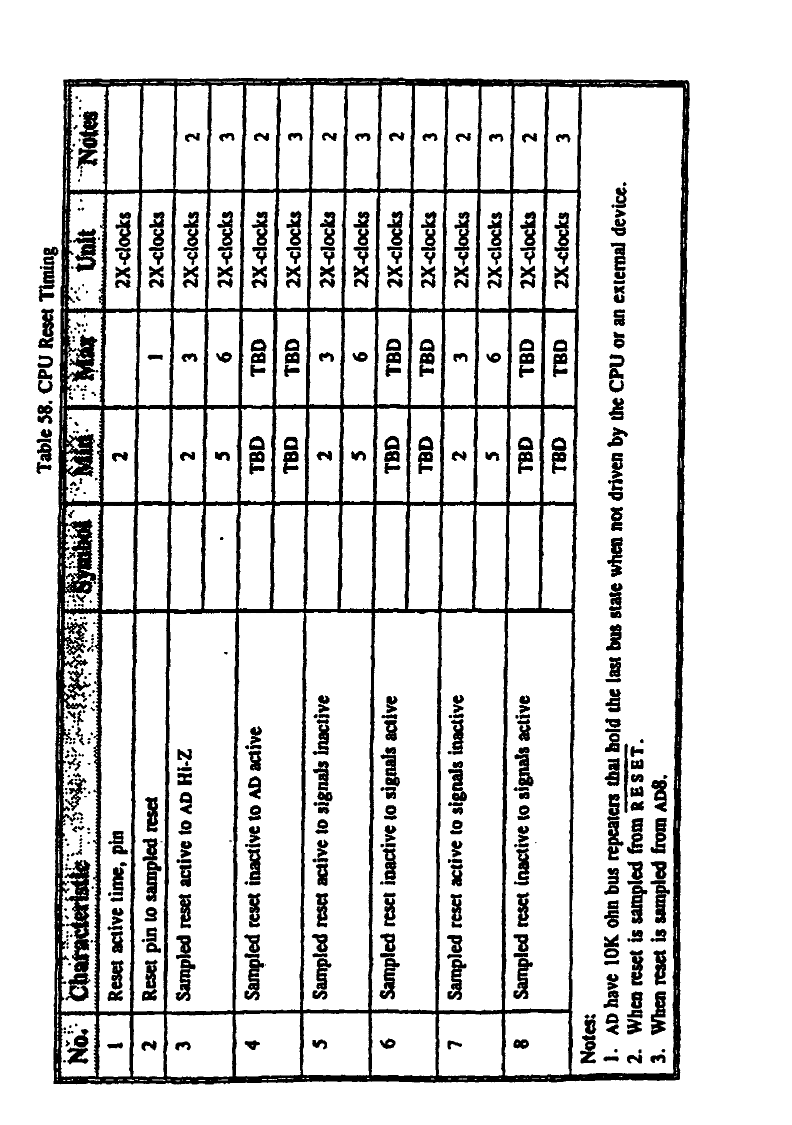

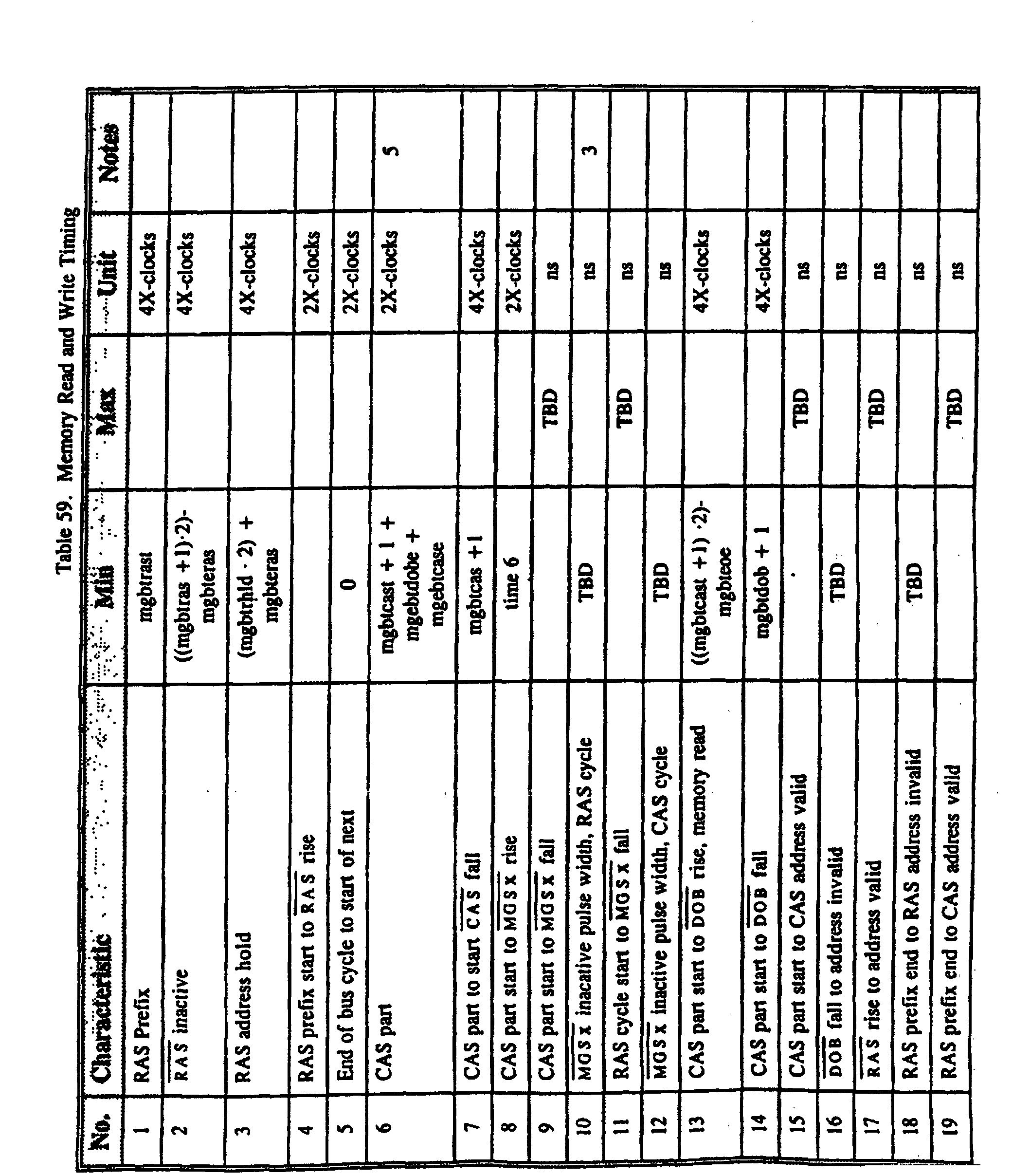

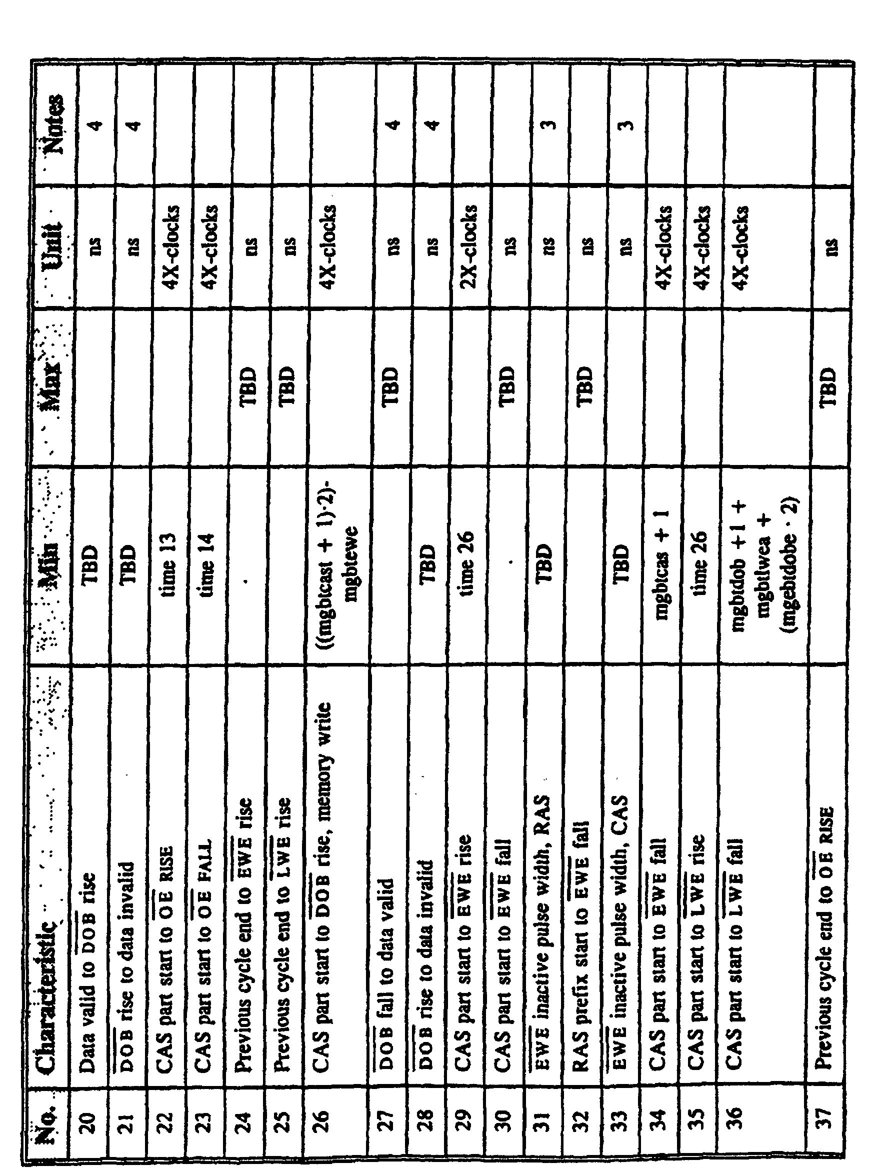

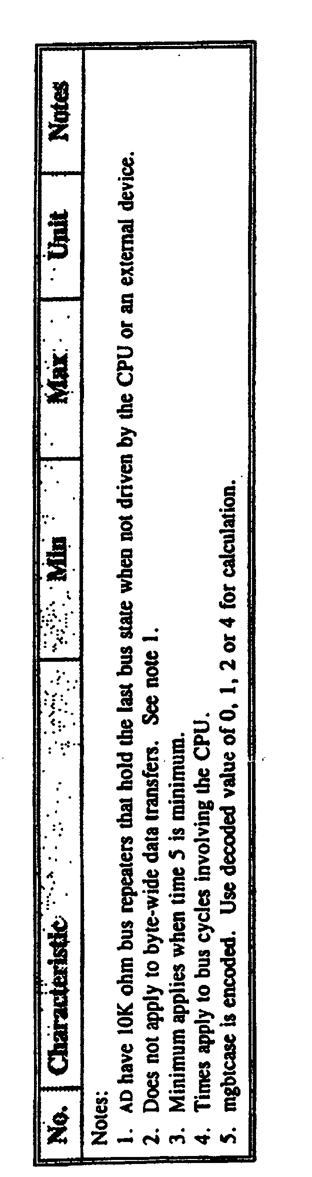

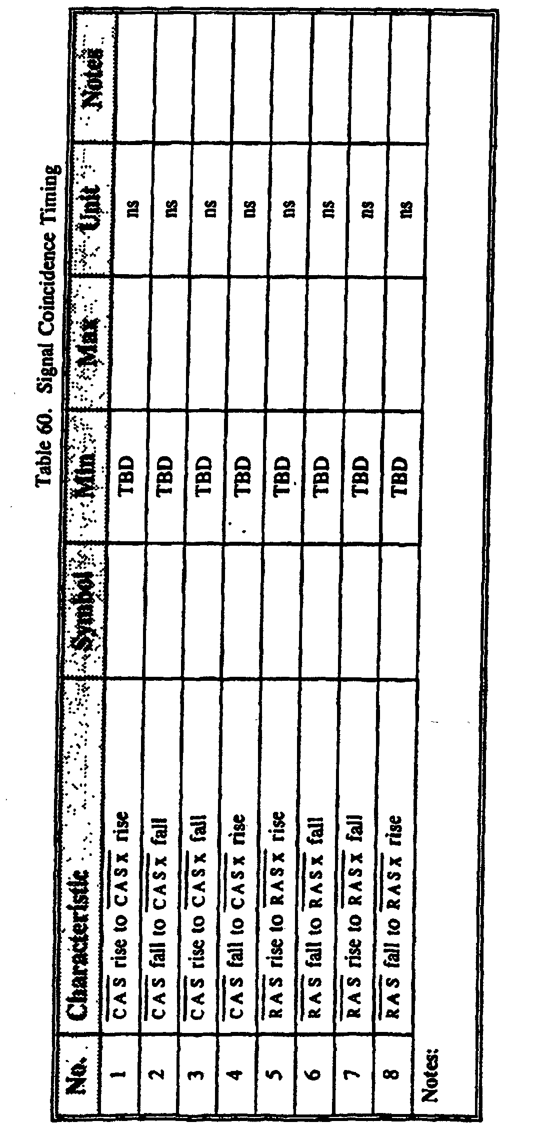

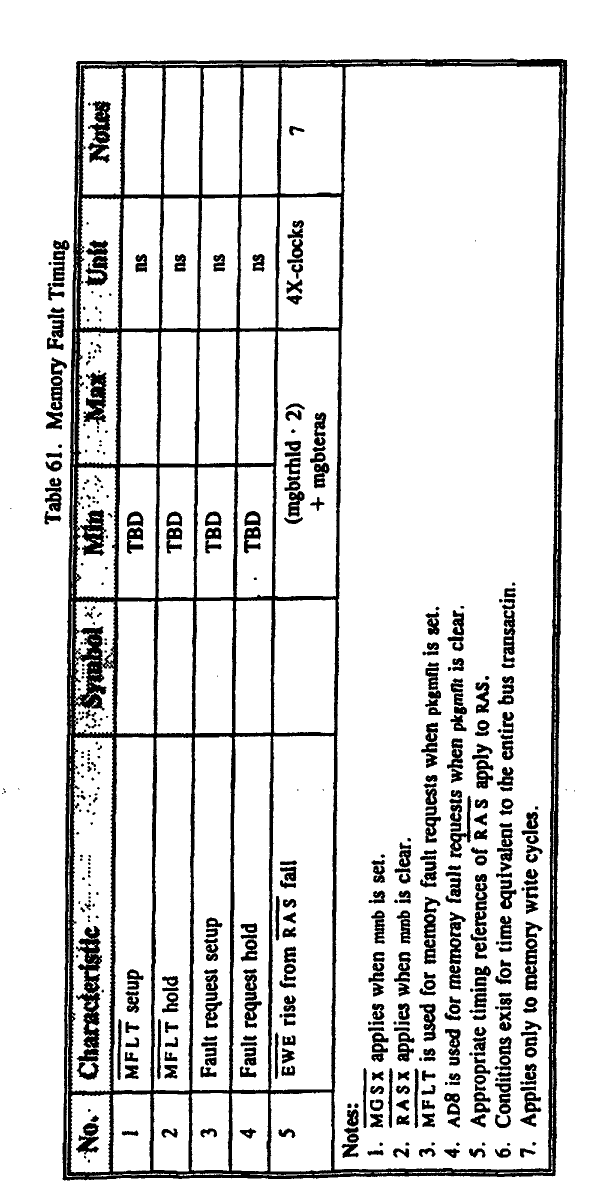

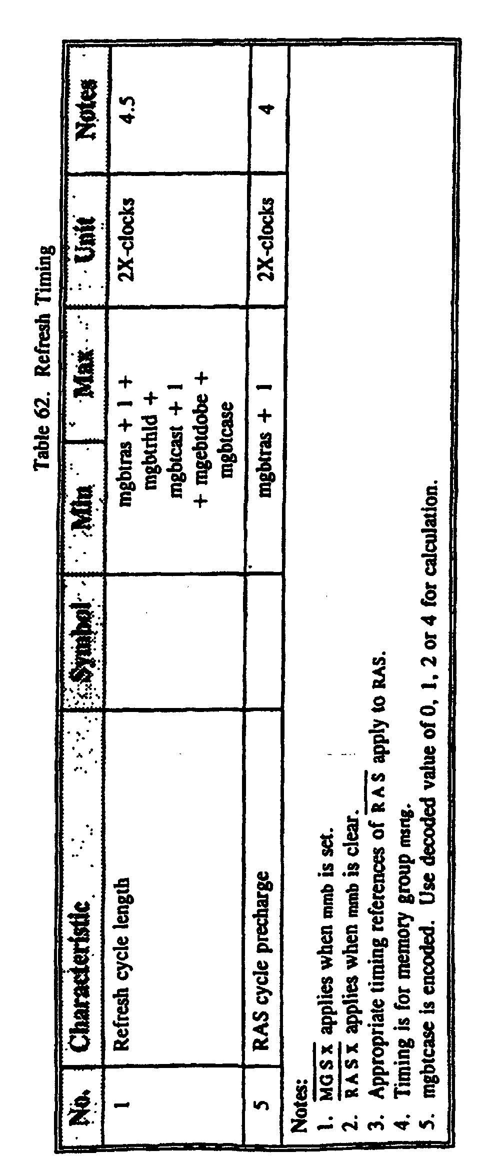

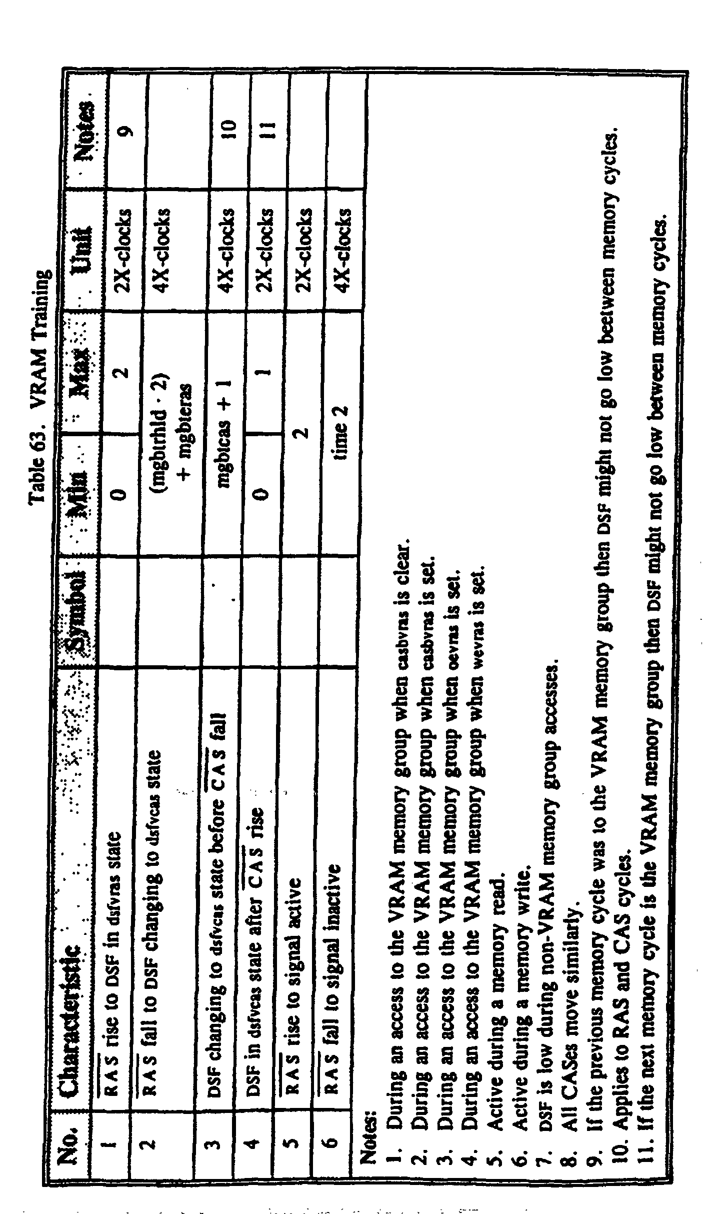

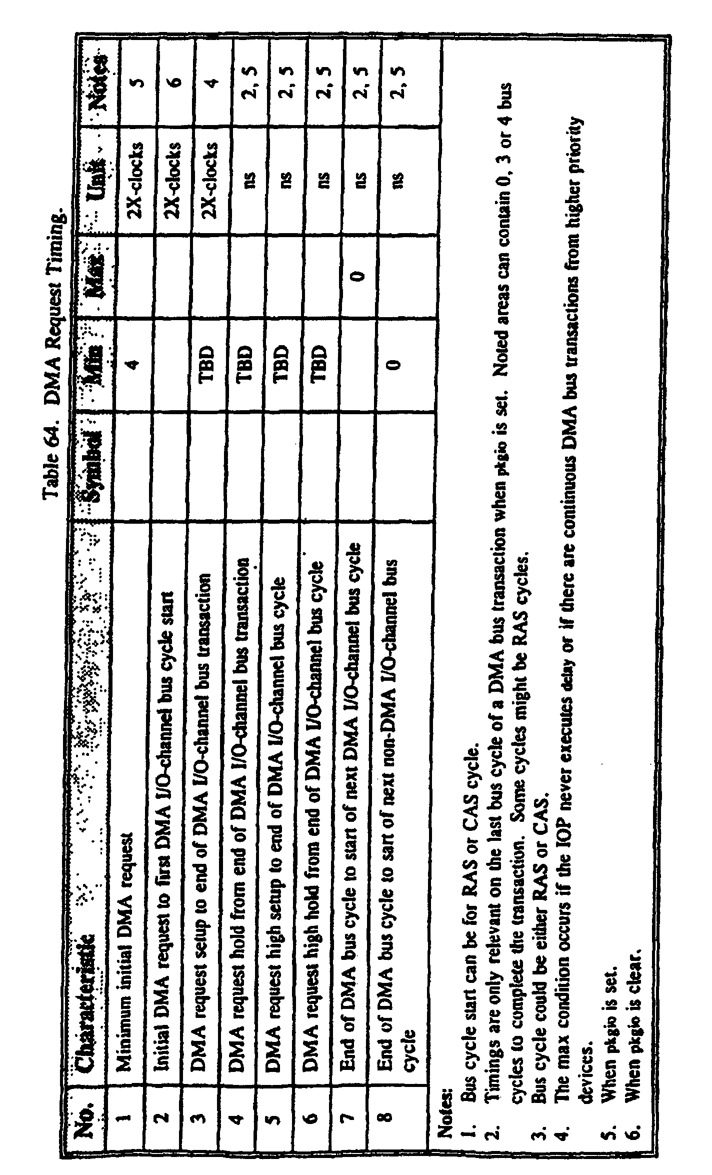

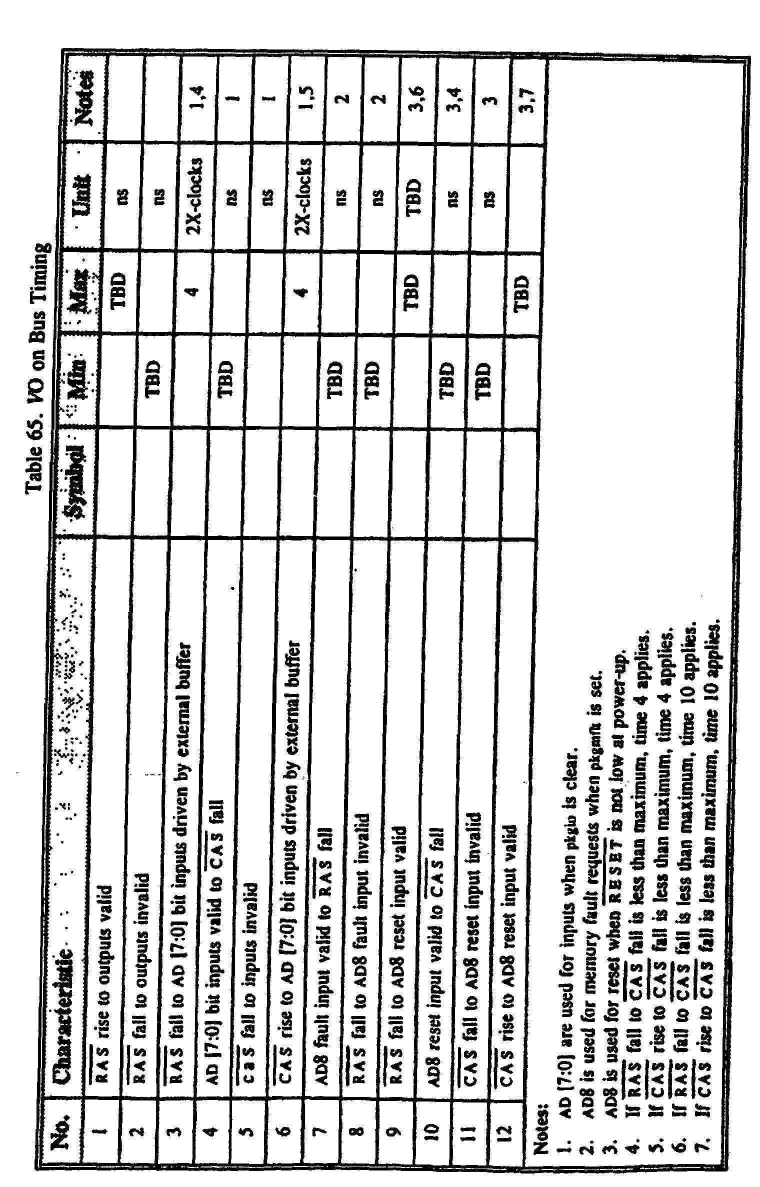

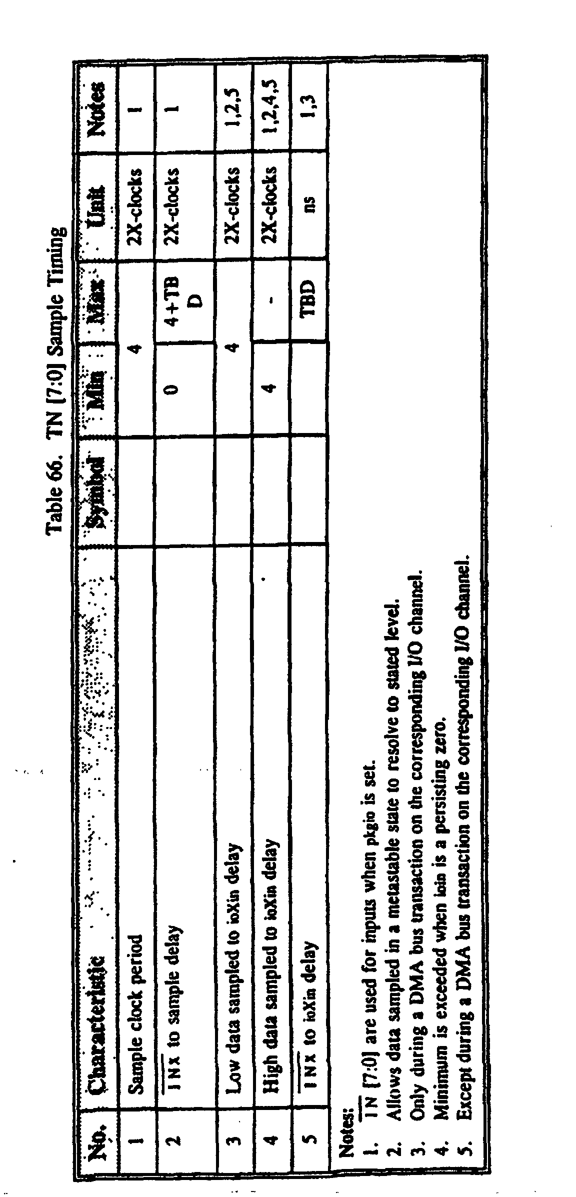

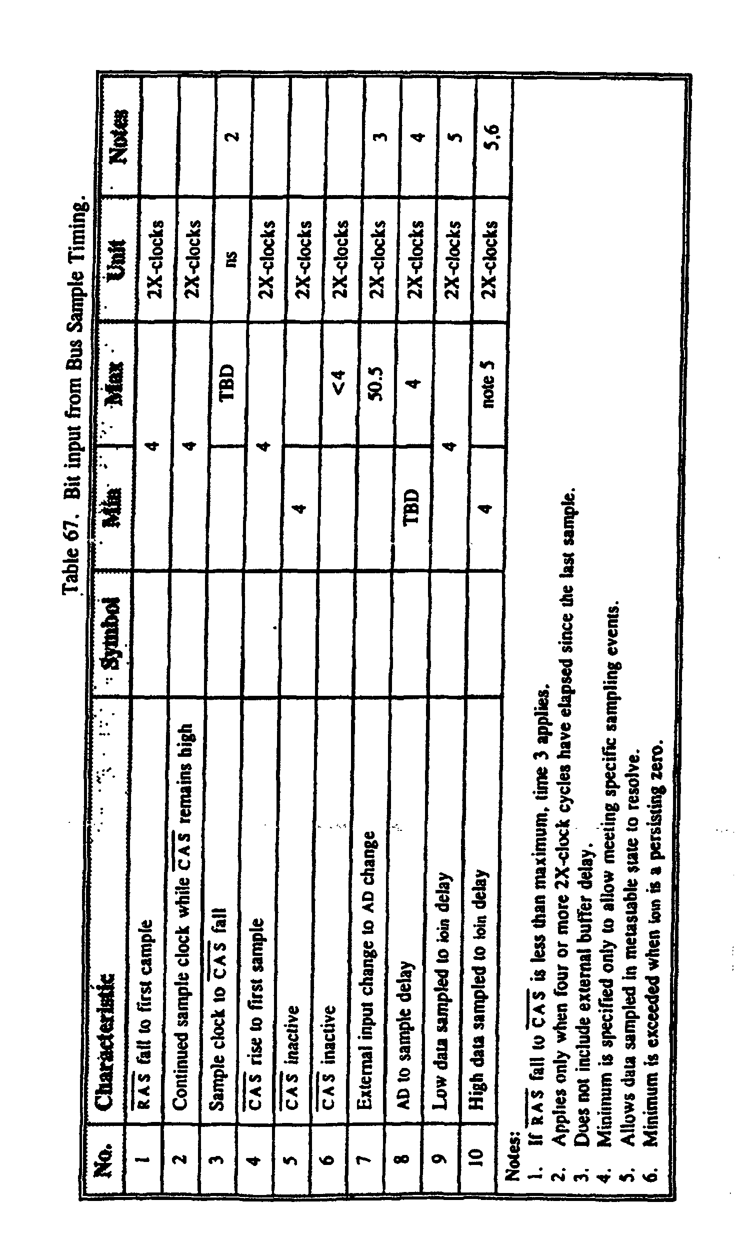

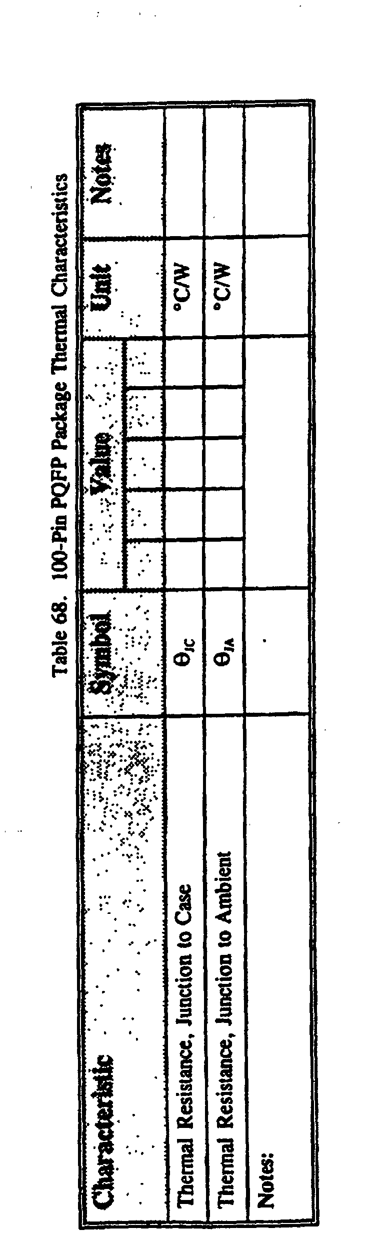

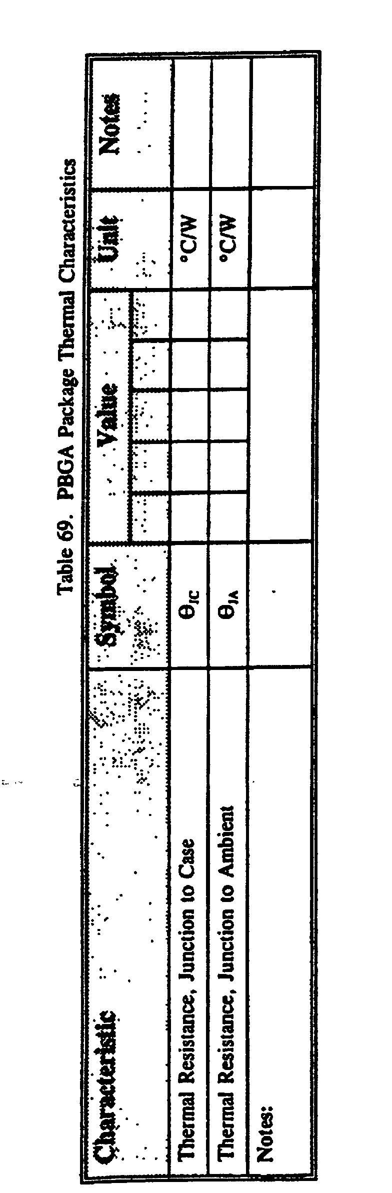

To the extent not already incorporated herein, further details on this embodiment of the invention are available in the publication "ShBoom Microprocessor", Poway CA 92064, 1995. Patriot Scientific Corporation.

An embodiment of the invention now being fully described, it will be apparent to one of ordinary skill in the art that many changes and modifications can be made thereto without departing from the scope of the appended claims.

## Claims

1. A microprocessor system, comprising a microprocessing unit (108), an input-output processor (IOP) (110), and a global memory unit (104) coupled to said central processing unit and to said IOP,
**characterised in that** said system further comprises a programmable memory interface (MIF) (120) coupled to said global memory unit, to said microprocessing unit and to said IOP, said MIF being adapted to prioritise and arbitrate access of said microprocessing unit and said IOP to said global memory unit.

2. The microprocessor system of claim 1 in which said global memory unit (104) comprises a plurality of global registers.

3. The microprocessor system of claim 1 wherein said microprocessing unit (108)includes an arithmetic logic unit and a push-down stack coupled to said arithmetic logic unit.

## Patentansprüche

1. Mikroprozessorsystem, umfassend eine Mikroprozessoreinheit (108), einen Eingabe-/Ausgabeprozessor (IOP) (110) und eine globale Speichereinheit (104), die mit der zentralen Prozessoreinheit und dem IOP gekoppelt ist, **dadurch gekennzeichnet, dass** das System ferner eine programmierbare Speicherschnittstelle (MIF) (120) umfasst, die mit der globalen Speichereinheit, der Mikroprozessoreinheit, und dem IOP gekoppelt ist, wobei die MIF dafür ausgebildet ist, für einen Zugriff der Mikroprozessoreinheit und des IOP auf die Speichereinheit Prioritäten zu setzen und über den Zugriff zu entscheiden..

2. Mikroprozessorsystem nach Anspruch 1, bei dem die globale Speichereinheit (104) eine Mehrzahl von globalen Registern umfasst.

3. Mikroprozessorsystem nach Anspruch 1, wobei die Mikroprozessoreinheit (108) eine Arithmetiklogikeinheit und einen Rückstellstapel enthält, der mit der Arithmetiklogikeinheit gekoppelt ist.

## Revendications

1. Système à microprocesseur, comportant une unité de microtraitement (108), un processeur d'entrée-sortie (IOP) (110), et une unité de mémoire commune (104) couplée à ladite unité centrale de traitement et audit IOP, **caractérisé en ce que** ledit système comporte en outre une interface de mémoire programmable (MIF) (120) couplée à ladite unité de mémoire commune, à ladite unité de microtraitement et audit IOP, ladite MIF étant conçue pour rendre prioritaire et arbitrer un accès de ladite unité de microtraitement et dudit IOP à ladite unité de mémoire commune.

2. Système à microprocesseur selon la revendication 1, dans lequel ladite unité de mémoire commune (104) comporte plusieurs registres communs.

3. Système à microprocesseur selon la revendication 1, dans lequel ladite unité de microtraitement (108) comprend une unité logique arithmétique et une pile à accès inversé couplée à ladite unité logique arithmétique.
